(19) Europäisches Patentamt
European Patent Office
Office européen des brevets

(11) EP 2 671 926 B1

(12) **EUROPEAN PATENT SPECIFICATION**

(45) Date of publication and mention of the grant of the patent:
**25.07.2018 Bulletin 2018/30**

(21) Application number: **12741914.1**

(22) Date of filing: **03.02.2012**

(51) Int Cl.:
***C09B 67/46*** *(2006.01)* ***B41J 2/01*** *(2006.01)*
***B41M 5/00*** *(2006.01)* ***C09B 33/12*** *(2006.01)*
***C09B 67/20*** *(2006.01)* ***C09D 11/00*** *(2014.01)*
***C09D 17/00*** *(2006.01)*

(86) International application number:
**PCT/JP2012/052554**

(87) International publication number:
**WO 2012/105704 (09.08.2012 Gazette 2012/32)**

(54) **AQUEOUS PIGMENT DISPERSION AND PROCESS FOR PRODUCTION THEREOF, AND INK FOR INKJET RECORDING**

WÄSSRIGE PIGMENTDISPERSION UND VERFAHREN ZU IHRER HERSTELLUNG SOWIE TINTE ZUR TINTENSTRAHLAUFZEICHNUNG

DISPERSION AQUEUSE DE PIGMENT ET SON PROCÉDÉ DE FABRICATION ET ENCRE POUR IMPRESSION PAR JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2011 JP 2011023410**
**03.02.2012 JP 2012021974**

(43) Date of publication of application:
**11.12.2013 Bulletin 2013/50**

(73) Proprietor: **FUJIFILM Corporation**
**Tokyo 106-0031 (JP)**

(72) Inventors:
- **TATEISHI Keiichi**
  **Kanagawa, 258-8577 (JP)**
- **HAYASHI Shinya**
  **Kanagawa, 258-8577 (JP)**
- **NAGATA Yoshiaki**
  **Kanagawa, 258-8577 (JP)**

(74) Representative: **Klunker IP Patentanwälte PartG mbB**
**Destouchesstraße 68**
**80796 München (DE)**

(56) References cited:
**EP-A1- 2 042 570**
**EP-A1- 2 154 209**
**EP-A1- 2 330 164**
**EP-A1- 2 368 943**
**EP-A1- 2 474 574**
**EP-A1- 2 474 581**
**WO-A1-2010/024317**
**JP-A- 11 152 424**
**JP-A- 2008 524 369**
**JP-A- 2010 065 212**
**JP-A- 2010 159 405**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present invention relates to a water-based pigment dispersion useful in a water-based coloring liquid such as a water-based paint, a water-based ink, a printing agent, a color filter, and a water-based recording liquid, and to a preparation method of the same. The present invention also relates to an ink for inkjet recording comprising the water-based pigment dispersion.

### Background Art

From viewpoints of pollution prevention or occupational health, industrial fields which use a colorant such as a paint and a printing ink strongly aim at being water-based. Also, a recording liquid of a printer, a plotter, or the like represented by inkjet or stationery used for recording information such as a ball pen, a sign pen, or the like is in progress of being water-based in terms of toxicity or health.

In order to improve performances required for such an use, for example, long-term storage stability or micro dispersion of a pigment in a case of preparation of a paint, an ink, or a recording liquid, water resistance, durability or fastness in a case of coating film, or redispersibility in dryness at a nozzle tip of inkjet as a recording liquid, a method of preparing a water-based pigment dispersion is disclosed in Patent Document 1. This preparation method is a method for preparing a novel water-based pigment dispersion including: kneading a resin containing a carboxyl group in combination with a functional group capable of reacting with a cross-linking agent and/or a self-crosslinkable functional group, and a pigment to form a finely dispersed water-based dispersion; hydrophobizing the resin through neutralization or acidification of pH by an acidic compound to strongly adhere the resin on the pigment (acid precipitation); re-dispersing the resin in water by neutralizing the carboxyl group with a basic compound; and cross-linking the resin at arbitrary time.

However, in the preparation of the water-based pigment dispersion, after the water-based dispersion is prepared, processes such as acid precipitation, and re-dispersion are performed. This causes a problem in that a preparation process is longer than that of a conventional water-based pigment dispersion, and more energy or labor than requires is consumed.

Also, as the above improvement method, there is a method for easily preparing a water-based pigment dispersion is described in Patent Document 2. Here, first, a hydrophobic resin containing a cross-linkable functional group and an acidic group, or a hydrophobic resin containing a self-cross-linkable functional group and an acidic group is prepared into a water-soluble resin through neutralization of the acidic group by a base with quantity that is dissolved in an aqueous medium at a stage before cross-linking but is precipitated in the aqueous medium after cross-linking, and the water-soluble resin and a pigment, together with, if necessary, a cross-linking agent are dissolved and dispersed in an aqueous medium to obtain a water-based dispersion containing the water-soluble resin dissolved therein and the pigment dispersed therein, and then the water-soluble resin is subjected to a cross-linking reaction while dispersion of the pigment is maintained so as to precipitate a cross-linking substance of the water-soluble resin around the pigment. Thus, the cross-linking substance of the water-soluble resin may be adhered on the surface of the pigment without processes such as acid precipitation and re-dispersion.

The above methods are not preferred as processes because when the cross-linking agent is used, cross-linking is performed at a relatively high temperature (95°C) in Patent Document 1, and 140°C with pressurization using autoclave in Patent Document 2.

Also, Patent Document 3 describes an example of a cross-linking reaction that uses isocyanate/amine, and Patent Document 4 describes an example where a cross-linking reaction using isocyanate/hydroxyl is performed at 100°C or less.

The dispersions prepared by the above dispersion methods are determined to have defects such as nozzle clogging due to yet insufficient dispersion stability when used in an ink for inkjet recording.

Also, in the international publication pamphlet No. 06/064193 (Patent Document 5), a dispersion method that is improved as compared to Patent Documents 1 to 4 above is described. However, in the method described in the same Patent Document, a suitable dispersion may be obtained for a specific pigment described in the same Patent Document, e.g., C.I Pigment Blue 15:3, or C.I Pigment Black 7, but in application to a yellow pigment, especially, a conventionally known yellow azo pigment (e.g., C.I. Pigment Yellow 74, C.I. Pigment Yellow 128, C.I. Pigment Yellow 155, C.I. Pigment Yellow 150, C.I. Pigment Yellow 180, or C.I. Pigment Yellow 213), there are many cases where a sufficient printing concentration is not obtained or image quality (especially, glossiness) of a printed matter or storage stability of an ink is insufficient. Thus, the method has been strongly required to be improved.

Related Art Document

Patent Document

Patent Document 1: Japanese Patent Application Laid-Open No. H9-104834
Patent Document 2: Japanese Patent Application Laid-Open No. H11-152424
Patent Document 3: European Patent Specification No. 732381
Patent Document 4: WO Publication pamphlet No. 00/020520
Patent Document 5: WO Publication pamphlet No. 06/064193

Disclosure of Invention

Problems to Be Solved

What is needed is a pigment dispersion for a good yellow azo pigment, and also a dispersion method of the yellow azo pigment, especially, a pigment dispersion of a yellow azo pigment that allows printing concentration and glossiness suitable for use of an ink for inkjet recording to be achieved, and a preparation method thereof. The present invention satisfies this need.

Means for Solving the Problems

The present invention was achieved by the following means.

[1] A water-based pigment dispersion containing a colorant, a dispersant and water, in which the colorant contains

(1) an azo pigment which is an aggregate of molecules represented by Formula (1) below that has characteristic X-ray diffraction peaks at Bragg angles (2θ±0.2°) of 7.2°, 13.4°, 15.0° and 25.9° in CuKa characteristic X-ray diffraction, or a tautomer thereof, or
(2) an azo pigment which is an aggregate of molecules represented by Formula (2) below that has characteristic X-ray diffraction peaks at Bragg angles (2θ±0.2°) of 4.8°, 7.2° and 9.7° in CuKa characteristic X-ray diffraction, or a tautomer thereof.

Formula (1)

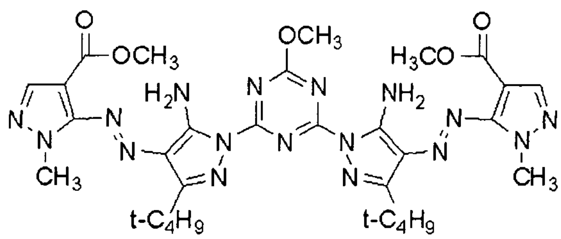

Formula (2)

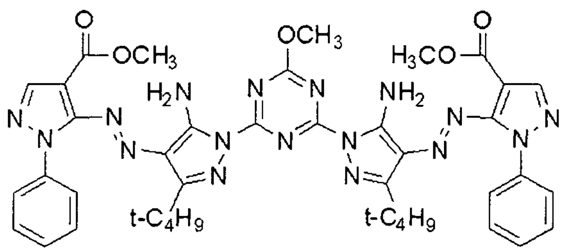

wherein the dispersant is a water-soluble polymer and the water-based dispersion is cross-linked by a cross-linking agent.

[2] The water-based pigment dispersion according to [1], in which the water-soluble polymer dispersant has a weight average molecular weight ranging from 10000 to 200000.
[3] The water-based pigment dispersion according to [1] or [2], in which the water-soluble polymer dispersant has at least one carboxyl group, and an acid value of at least 50 mgKOH/g or more.
[4] The water-based pigment dispersion according to [3], in which the water-soluble polymer dispersant has an acid value ranging from 70 mgKOH/g to 160 mgKOH/g.
[5] The water-based pigment dispersion according to any one of [1] to [4], in which when a content of the colorant in the pigment dispersion is P, a content of the dispersant is D, and a ratio of the content D and the content P is a D/P value, the D/P value ranges from 0.15 to 1.0.
[6] The water-based pigment dispersion according to any one of [1] to [5], in which the azo pigment which is the aggregate of molecules represented by Formula (1) above or the tautomer thereof has a primary particle diameter ranging from 0.01 μm to 10 μm before dispersion.
[7] The water-based pigment dispersion according to any one of [1] to [5], in which the azo pigment which is the aggregate of molecules represented by Formula (2) above or the tautomer thereof has a primary particle diameter ranging from 0.01 μm to 20 μm before dispersion.
[8] The water-based pigment dispersion according to [7], in which the primary particle diameter before the dispersion ranges from 0.01 μm to 0.2 μm.
[9] The water-based pigment dispersion according to any one of [1] to [8], in which the cross-linking agent contains at least two epoxy groups.
[10] The water-based pigment dispersion according to [9], in which a cross-linking reaction between the carboxyl group and the epoxy group is performed at 100°C or less, and pH of 6 or more.
[11] The water-based pigment dispersion according to [10], in which the cross-linking reaction is performed at 40 to 85°C.
[12] The water-based pigment dispersion according to [10] or [11], in which the cross-linking reaction is performed at pH of 7 to 10.
[13] A method of preparing the water-based pigment dispersion according to any one of [1] to [12], including performing a cross-linking reaction by mixing components (a) to (d) below:

(a) 30 parts to 99.7 parts of water,
(b) 0.1 parts to 50 parts of azo pigment which is the aggregate of molecules represented by Formula (1) above or the aggregate of molecules represented by Formula (2),
(c) 0.1 parts to 40 parts of vinyl polymer, and
(d) 0.00001 parts to 10 parts of cross-linking agent,

in which the parts are by mass, and the sum of (a)+(b)+(c)+(d) is 100 parts by mass or less based on 100 parts by mass of the total weight of the pigment dispersion.
[14] The method according to [13], in which the cross-linking reaction is performed at 100°C or less and pH of 6 or more.
[15] The method according to [13], further including performing a membrane purification.
[16] An ink for inkjet recording containing the water-based pigment dispersion according to any one of [1] to [12].

Advantage of Invention

According to the present invention, there may be provided a pigment dispersion of a yellow azo pigment which is good in liquid physical properties and excellent in storage stability, and a method of preparing the pigment dispersion of the yellow azo pigment. Especially, the azo pigment dispersion of the present invention is suitable for use in a pigment ink for inkjet recording.

Brief Description of Drawings

FIG. 1 is a view of X-ray diffraction of an azo pigment (1)-1.
FIG. 2 is a view of X-ray diffraction of an azo pigment (1)-2.
FIG. 3 is a view of X-ray diffraction of an azo pigment (1)-3.
FIG. 4 is a view of X-ray diffraction of an azo pigment (1)-4.
FIG. 5 is a view of X-ray diffraction of a non-crystalline azo pigment (2)-10.
FIG. 6 is a view of X-ray diffraction of an azo pigment (2)-1.
FIG. 7 is a view of X-ray diffraction of an azo pigment (2)-2.

FIG. 8 is a view of X-ray diffraction of an azo pigment (2)-7.
FIG. 9 is a view of X-ray diffraction of an azo pigment (2)-8 in a (2)-β type crystal form.
FIG. 10 is a view of X-ray diffraction of an azo pigment (2)-9 in a (2)-γ type crystal form.
FIG. 11 is a view of X-ray diffraction of an azo pigment (2)-10 in a (2)-ε type crystal form.
FIG. 12 is a view of X-ray diffraction of an azo pigment (2)-11 in a (2)-ζ type crystal form.
FIG. 13 is a view of X-ray diffraction of an azo pigment (2)-12 in a (2)-η type crystal form.
FIG. 14 is a view of X-ray diffraction of an azo pigment (2)-13 in a (2)-δ type crystal form.

Detailed Description of Embodiments of the Invention

Exemplary embodiments of the present invention will be described.

According to the present invention, a water-based pigment dispersion is a pigment dispersion containing a colorant, a dispersant, and water in which the colorant contains (1) an azo pigment which is an aggregate of molecules represented by Formula (1) below that has characteristic X-ray diffraction peaks at Bragg angles (2θ±0.2°) of 7.2°, 13.4°, 15.0° and 25.9° in CuKα characteristic X-ray diffraction or a tautomer thereof, or (2) an azo pigment which is an aggregate of molecules represented by Formula (2) below that has characteristic X-ray diffraction peaks at Bragg angles (2θ±0.2°) of 4.8°, 7.2° and 9.7° in CuKα characteristic X-ray diffraction or a tautomer thereof.

Formula (1)

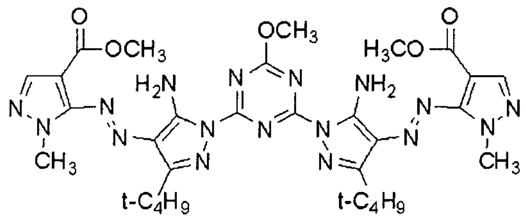

Formula (2)

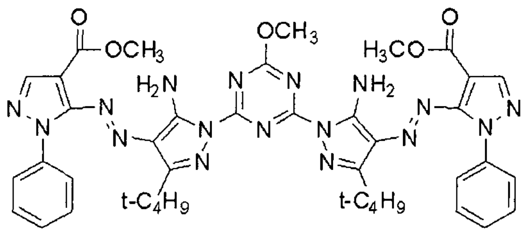

The dispersant is a water-soluble polymer, and the water-based dispersion is cross-linked by a cross-linking agent.

[Azo Pigment]

The azo pigment used in the water-based pigment dispersion of the present invention is represented by Formula (1) or Formula (2).

Hereinafter, the azo compound or the azo pigment which is represented by Formula (1) in the present invention will be described in detail. Also, the azo pigment may be a salt, a hydrate or a solvate thereof.

As for the azo pigment, that is, the colorant used in the present invention, which is an aggregate of molecules represented by Formula (1) or a tautomer thereof, a plurality of crystal forms having characteristic peaks in CuKa characteristic X-ray diffraction have been determined. For example, there are crystal forms described below.

In the present specification, hereinafter, an azo pigment which is an aggregate of molecules represented by Formula (1) that has characteristic X-ray diffraction peaks at Bragg angles (2θ±0.2°) of 7.2°, 13.4°, 15.0° and 25.9° in CuKα characteristic X-ray diffraction or a tautomer thereof is referred to as a (1)-α type crystal form azo pigment.

In the present specification, hereinafter, an azo pigment which is an aggregate of molecules represented by Formula (1) that has characteristic X-ray diffraction peaks at Bragg angles (2θ±0.2°) of 6.6° and 25.7° in CuKα characteristic X-ray diffraction or a tautomer thereof is referred to as a (1)-β type crystal form azo pigment.

An azo pigment represented by Formula (1) that has characteristic X-ray diffraction peaks at Bragg angles (2θ±0.2°) of 7.5°, 25.8° and 26.9° in CuKα characteristic X-ray diffraction is referred to as a (1)-γ type crystal form azo

pigment.

Table 1

| | Positions of Characteristic X-ray diffraction peaks |
|---|---|
| (1)-α type crystal form azo pigment | 7.2°, 13.4°, 15.0° and 25.9° |
| (1)-β type crystal form azo pigment | 6.6° and 25.7° |
| (1)-γ type crystal form azo pigment | 7.5°, 25.8° and 26.9° |

In the present invention, the measurement of X-ray diffraction of the azo pigments of crystal forms of (1)-α, (1)-β and (1)-γ types of Formula (1) above may be performed by a powder X-ray diffraction measurement device RINT2500 (manufactured by Rigaku Corporation) in accordance with Japanese Industrial Standards JISK0131 (general rules of X-ray diffraction analysis).

In a case of a single crystal form, a molecular interval becomes dense, and interaction between molecules becomes strong. As a result, a solvent resistance, a thermal stability, a light resistance, a gas resistance, and a printing concentration are increased, and also a color reproduction range becomes wide. Accordingly, the azo pigment represented by Formula (1) or the tautomer thereof is an azo pigment of a crystal form having characteristic X-ray diffraction peaks at Bragg angles (2θ±0.2°) of 7.2°, 13.4°, 15.0° and 25.9° in CuKa characteristic X-ray diffraction.

Also, as for the crystal form having characteristic X-ray diffraction peaks at 7.2°, 13.4°, 15.0° and 25.9°, a crystal form having characteristic X-ray diffraction peaks at 7.2°, 13.4°, 15.0°, 19.8° and 25.9° is preferred. From among, especially, a crystal form having characteristic X-ray diffraction peaks at 7.2°, 8.2°, 10.0°, 13.4°, 15.0°, 19.8° and 25.9° is more preferred.

[Ratio of Type (1)-α]

In the azo pigment of Formula (1), that is, the colorant of the present invention, which has a (1)-α type crystal form, the α type crystal form is preferably included in an amount of 1 to 100 based on total weight of the colorant being 100, more preferably of 50 to 100, and further more preferably of 80 to 100. Examples of crystal forms which may exist besides the α type crystal form may include (1)-β type, (1)-γ type, and amorphous forms, and these crystal forms may be included or may not be included. Also, two or more kinds of crystal forms may exist.

[Azo Pigment represented by Formula (1)]

Hereinafter, the azo compound or the azo pigment which is represented by Formula (1) in the present invention will be described in detail. Also, the azo pigment may be a salt, a hydrate or a solvate thereof.

Formula ( 1 )

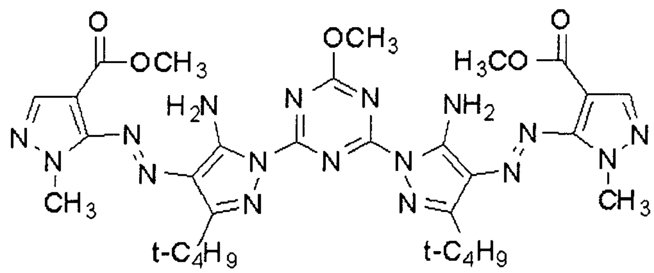

The pigment represented by Formula (1) may be a hydrate that contains water molecules in a crystal, or a solvate that contains a solvent (e.g., alcohols such methanol, ethanol, 2-propanol, and t-butyl alcohol, ketones such as acetone and methylethylketone, aprotic solvents such as acetonitrile, dimethylsulfoxide, dimethylformamide, dimethylacetamide, N-methylpyrrolidone, and toluene).

Also, in the pigment represented by Formula (1), the tautomer as in scheme (1) (for example, a tautomer of azo-hydrazone) or a geometrical isomer represented by scheme (2) is also considered to be useful, in the present invention.

Scheme (1)

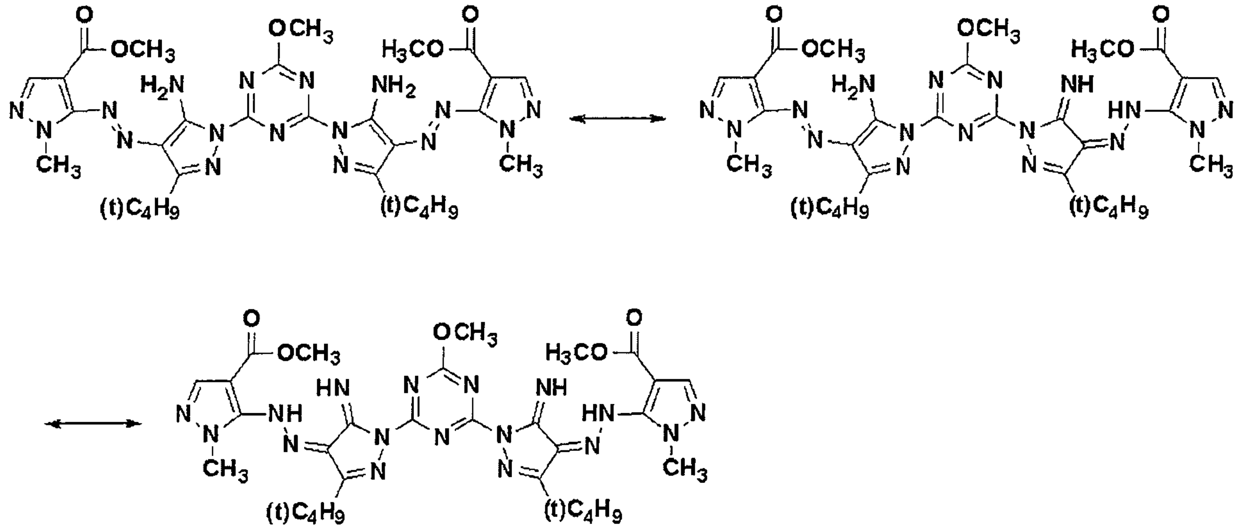

Scheme (2)

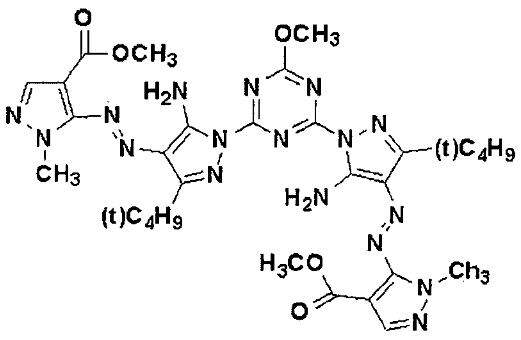

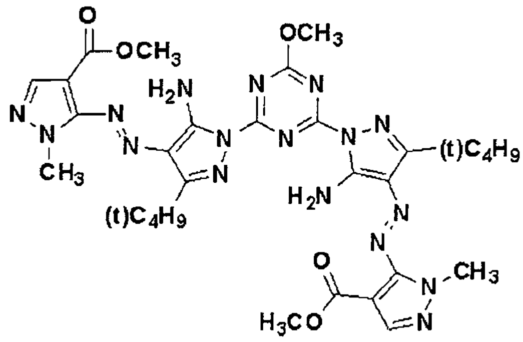

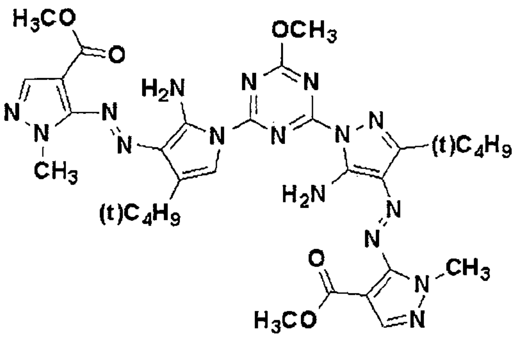

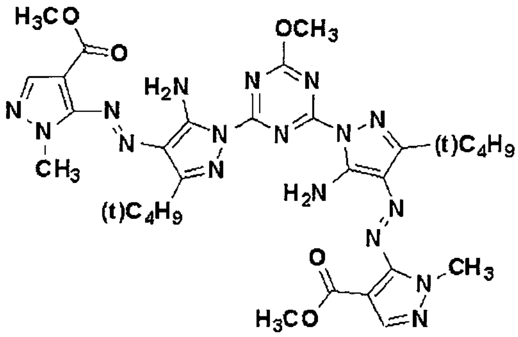

[Primary Particle Diameter of Azo Pigment represented by Formula (1)]

When primary particles of the azo pigment represented by Formula (1) are observed by a transmission microscope, in a case where the longitudinal direction length is 0.01 μm or less, the specific surface area of the particles is increased. Thus, there is a case where a fastness to light or ozone is significantly lowered, and a case where the primary particles are strongly aggregated resulting in poor dispersibility as the the specific surface area is further increased. Meanwhile, in a case of 10 μm or more, when a desired volume average particle diameter is achieved through dispersion, the particles may be placed in a hyperdispersed state, and since the pigment particle surface becomes unstable due to exposure of an active surface, the particles may be easily aggregated. Thus, there is a case where the storage stability of the pigment dispersion may become poor.

In other words, when the longitudinal direction length of the primary particles is preferably within the above

range, the particles may show a high fastness to light or ozone, and may be excellent in dispersibility, and the pigment dispersion thereof may be excellent in storage stability, which is preferred.

Accordingly, when the primary particles of the (1)-α type crystal form azo pigment represented by Formula (1) above are observed by a transmission microscope, the longitudinal direction length is preferably 0.01 μm or more and 10 μm or less, more preferably 0.01 μm or more and 3 μm or less, and further more preferably 0.02 μm or more and 0.5 μm or less. Among them, the length is particularly preferably 0.02 μm or more and 0.2 μm or less, and most preferably 0.02 μm or more and 0.15 μm or less.

[Azo Pigment represented by Formula (2)]

Hereinafter, the azo compound or the azo pigment which is represented by Formula (2) in the present invention will be described in detail. Also, the azo pigment may be a salt, a hydrate or a solvate thereof.

Formula (2)

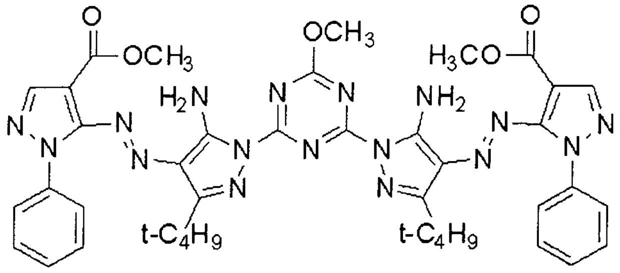

As for the azo pigment that is the colorant of the present invention, which is an aggregate of molecules represented by Formula (2) or a tautomer thereof, a plurality of crystal forms having characteristic peaks in CuKα characteristic X-ray diffraction have been determined. For example, there are crystal forms described below.

In the present specification, hereinafter, an azo pigment which is an aggregate of molecules represented by Formula (2) that has characteristic X-ray diffraction peaks at Bragg angles (2θ±0.2°) of 4.8°, 7.2° and 9.7° in CuKα characteristic X-ray diffraction or a tautomer thereof is referred to as a (2)-δ type crystal form azo pigment.

In the present specification, hereinafter, an azo pigment which is an aggregate of molecules represented by Formula (2) that has characteristic X-ray diffraction peaks at Bragg angles (2θ±0.2°) of 6.5°, 7.1° and 21.8° in CuKα characteristic X-ray diffraction or a tautomer thereof is referred to as a (2)-α type crystal form azo pigment.

An azo pigment represented by Formula (2) that has characteristic X-ray diffraction peaks at Bragg angles (2θ±0.2°) of 6.3°, 6.4° and 22.3° in CuKα characteristic X-ray diffraction is referred to as a (2)-β type crystal form azo pigment.

An azo pigment which is an aggregate of molecules represented by Formula (2) that has characteristic X-ray diffraction peaks at Bragg angles (2θ±0.2°) of 5.9° and 7.0° in CuKα characteristic X-ray diffraction or a tautomer thereof is referred to as a (2)-γ type crystal form azo pigment.

An azo pigment which is an aggregate of molecules represented by Formula (2) that has characteristic X-ray diffraction peaks at Bragg angles (2θ±0.2°) of 4.9°, 8.9° and 13.1° in CuKα characteristic X-ray diffraction or a tautomer thereof is referred to as a (2)-ε type crystal form azo pigment.

An azo pigment which is an aggregate of molecules represented by Formula (2) that has characteristic X-ray diffraction peaks at Bragg angles (2θ±0.2°) of 6.6°, 9.2°, 10.3°, 21.4° and 25.6° in CuKα characteristic X-ray diffraction or a tautomer thereof is referred to as a (2)-ζ type crystal form azo pigment.

An azo pigment represented by Formula (2) that has characteristic X-ray diffraction peaks at Bragg angles (2θ±0.2°) of 4.8°, 9.2° and 13.0° in CuKα characteristic X-ray diffraction is referred to as a (2)-η type crystal form azo pigment.

Table 2

| | Positions of Characteristic X-ray diffraction peaks |
|---|---|
| (2)-α type crystal form azo pigment | 6.5°, 7.1° and 21.8° |
| (2)-β type crystal form azo pigment | 6.3°, 6.4° and 22.3° |
| (2)-γ type crystal form azo pigment | 5.9° and 7.0° |
| (2)-δ type crystal form azo pigment | 4.8°, 7.2° and 9.7° |

(continued)

| | Positions of Characteristic X-ray diffraction peaks |
|---|---|
| (2)-ε type crystal form azo pigment | 4.9°, 8.9° and 13.1° |
| (2)-ζ type crystal form azo pigment | 6.6°, 9.2°, 10.3°, 21.4° and 25.6° |
| (2)-η type crystal form azo pigment | 4.8°, 9.2° and 13.0° |

In the present invention, the measurement of X-ray diffraction of the azo pigments of crystal forms of (2)-α, (2)-β, (2)-γ, (2)-δ, (2)-ε, (2)-ζ, and (2)-η types of Formula (2) above may be performed by a powder X-ray diffraction measurement device RINT2500 (manufactured by Rigaku Corporation) in accordance with Japanese Industrial Standards JISK0131 (general rules of X-ray diffraction analysis).

In a case of a single crystal form, a molecular interval becomes dense, and interaction between molecules becomes strong. As a result, a solvent resistance, a thermal stability, a light resistance, a gas resistance, and a printing concentration are increased, and also a color reproduction range becomes wide. Accordingly, the azo pigment represented by Formula (2) or the tautomer thereof is an azo pigment of a crystal form having characteristic X-ray diffraction peaks at Bragg angles (2θ±0.2°) of 4.8°, 7.2° and 9.7° in CuKα characteristic X-ray diffraction.

Also, as for the crystal form having characteristic X-ray diffraction peaks at 4.8°, 7.2° and 9.7°, a crystal form having characteristic X-ray diffraction peaks at 4.8°, 7.2°, 9.5°, 9.7° and 20.0° is preferred. From among, especially, a crystal form having characteristic X-ray diffraction peaks at 4.8°, 7.2°, 9.5°, 9.7°, 20.0°, 24.1° and 26.8° is more preferred.

[Ratio of Type (2)-δ]

In the azo pigment of Formula (2), that is, the colorant of the present invention, which has a δ type crystal form, the δ type crystal form is preferably included in an amount of 1 to 100 based on total weight of the colorant being 100, more preferably of 50 to 100, and further more preferably of 80 to 100. Examples of crystal forms which may exist besides the (2)-δ type crystal form may include (2)-α type, (2)-β type, (2)-γ type, (2)-ε type, (2)-ζ type, (2)-η type, and amorphous forms, and these crystal forms may be included or may not be included. Also, two or more kinds of crystal forms may exist.

Formula (2)

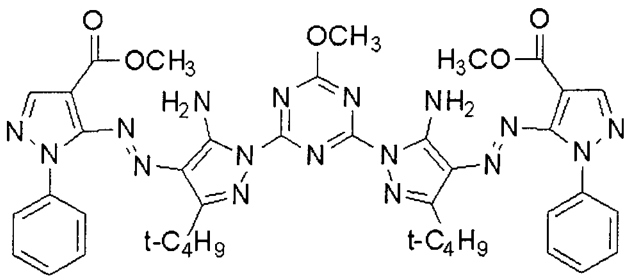

The pigment represented by Formula (2) may be a hydrate that contains water molecules in a crystal, or a solvate that contains a solvent (e.g., alcohols such methanol, ethanol, 2-propanol, and t-butyl alcohol, ketones such as acetone and methylethylketone, aprotic solvents such as acetonitrile, dimethylsulfoxide, dimethylformamide, dimethylacetamide, N-methylpyrrolidone, and toluene).

Also, in the pigment represented by Formula (2), the tautomer as in scheme (1) (for example, a tautomer of azo-hydrazone) or a geometrical isomer represented by scheme (2) is also considered to be useful, in the present invention.

Scheme ( 1 )

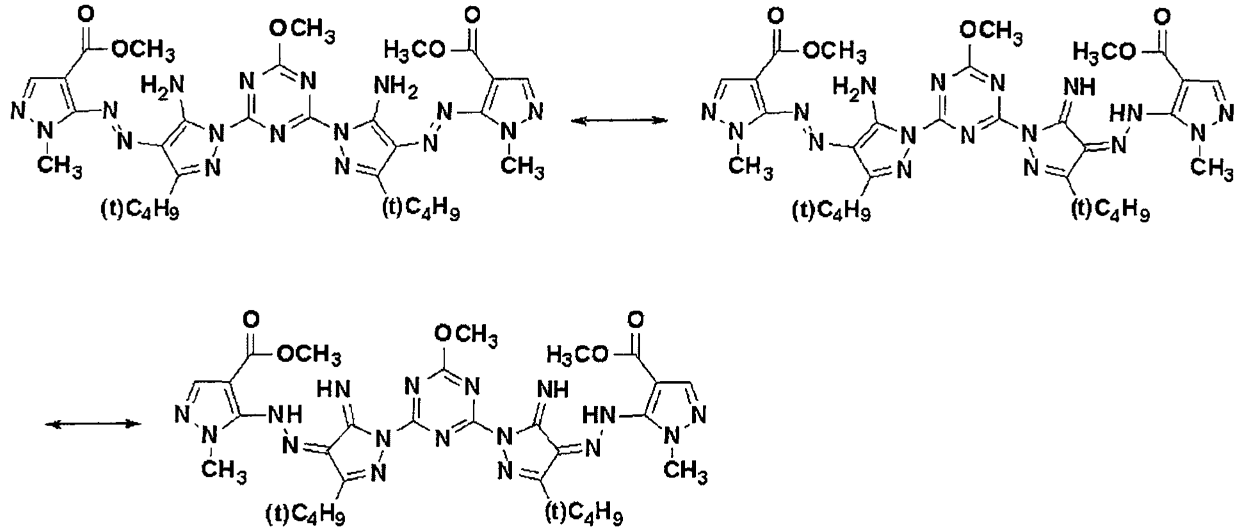

Scheme ( 2 )

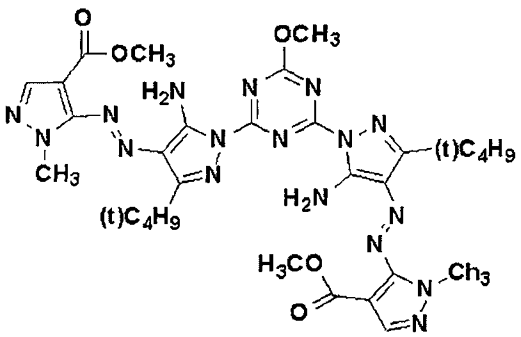

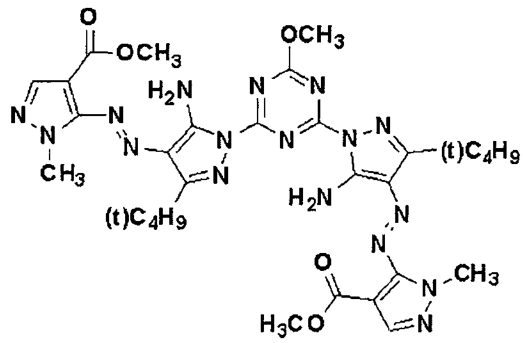

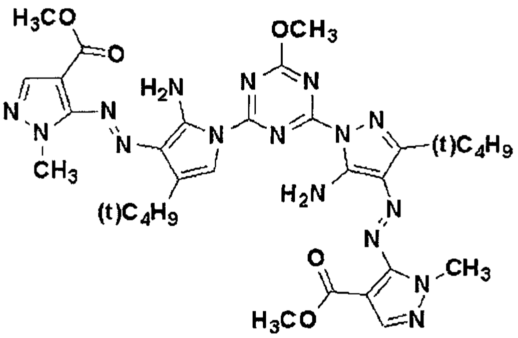

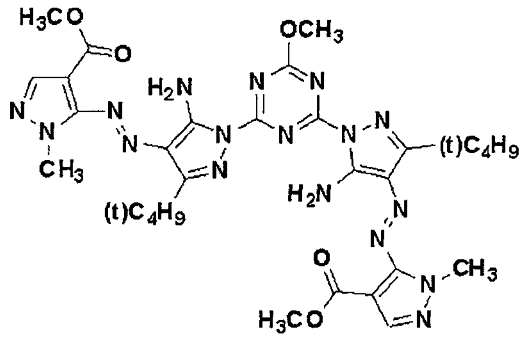

[Primary Particle Diameter of Azo Pigment represented by Formula (2)]

When primary particles of the azo pigment represented by Formula (2) are observed by a transmission microscope, in a case where the longitudinal direction length is 0.01 μm or less, the specific surface area of the particles is increased. Thus, there is a case where a fastness to light or ozone is significantly lowered, or a case where as the specific surface area is further increased, the primary particles are strongly aggregated resulting in poor dispersibility. Meanwhile, in a case of 20 μm or more, when a desired volume average particle diameter is achieved through dispersion, the particles may be placed in a hyperdispersed state, and since the pigment particle surface becomes unstable due to exposure of an active surface, the particles may be easily aggregated. Thus, there is a case where the storage stability of the pigment dispersion may become poor.

In other words, when the longitudinal direction length of the primary particles is preferably within the above

range, the particles may show a high fastness to light or ozone, and may be excellent in dispersibility, and the pigment dispersion thereof may be excellent in storage stability, which is preferred.

Accordingly, when the primary particles of the (2)-δ type crystal form azo pigment represented by Formula (2) above are observed by a transmission microscope, the longitudinal direction length is preferably 0.01 μm or more and 20 μm or less, more preferably 0.01 μm or more and 5 μm or less, and further more preferably 0.01 μm or more and 0.5 μm or less. Among them, the length is particularly preferably 0.01 μm or more and 0.2 μm or less, and most preferably 0.03 μm or more and 0.15 μm or less.

[Synthesis of (1)-α Type Crystal Form Azo Pigment represented by Formula (1)]

Hereinafter, the synthesis of the (1)-α type crystal form azo pigment represented by Formula (1) will be described in detail.

The (1)-α type crystal form azo pigment represented by Formula (1) (hereinafter, this may be simply referred to as "azo pigment" or "pigment") may be synthesized by the preparation method described herein.

The preparation method includes a process of performing an azo coupling reaction between a diazonium salt derived from heterocyclic amine represented by Formula (1)-1 below and a compound represented by Formula (3) below.

Formula (1) - 1

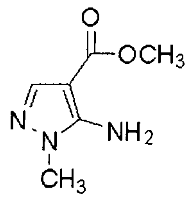

Formula (3)

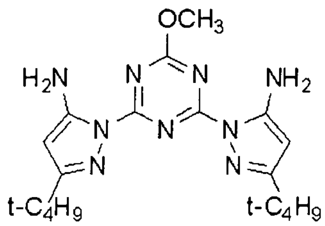

Formula (1)

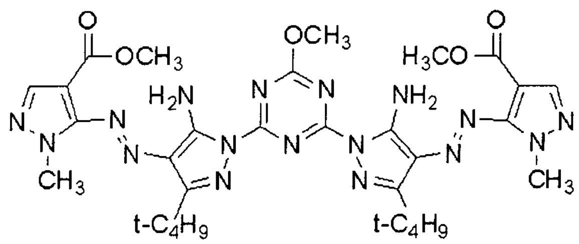

The preparation of the diazonium salt, and the coupling reaction between the diazonium salt and the compound represented by Formula (3) may be performed by a conventional method.

In the preparation of the diazonium salt of the heterocyclic amine represented by Formula (1)-1, a conventional diazonium salt preparation method may be applied which uses a nitrosonium ion source, for example, nitrous acid, nitrite or nitrosyl sulfuric acid in, for example, a reaction medium containing an acid (e.g., hydrochloric acid, sulfuric acid, phosphoric acid, acetic acid, propionic acid, methanesulfonic acid, trifluoromethanesulfonic acid, and the like).

As for more preferred examples of acid, acetic acid, propionic acid, methanesulfonic acid, phosphoric acid, and sulfuric acid may be used alone or in combination, and among them, a combination system of phosphoric acid or acetic acid, and sulfuric acid, a combination system of acetic acid and propionic acid, a combination system of acetic acid, propionic acid, and sulfuric acid are further more preferred. A combination system of acetic acid and propionic acid, and a combination system of acetic acid, propionic acid, and sulfuric acid are particularly preferred.

As for preferred examples of the reaction medium (solvent), an organic acid and an inorganic acid are preferably used, and particularly, phosphoric acid, sulfuric acid, acetic acid, propionic acid, and methanesulfonic acid are preferred. Among them, acetic acid and/or propionic acid are/is preferred.

Preferred examples of the nitrosonium ion source may include nitrite esters, nitrites, nitrosyl sulfuric acid, and the like. Among them, isopentyl nitrite, sodium nitrite, potassium nitrite, and nitrosyl sulfuric acid are further preferred, and sodium nitrite, and nitrosyl sulfuric acid are particularly preferably used. For example, by using the nitrosyl sulfuric acid in the preferred acid-containing reaction medium, the diazonium salt may be stably and also efficiently prepared.

Based on a diazo component of Formula (1)-1, the solvent is preferably used in an amount of 0.5 to 50 times by mass, more preferably of 1 to 20 times by mass, and particularly preferably of 3 to 15 times by mass.

In the present invention, the diazo component of Formula (1)-1 may be placed in either a state where it is dispersed in the solvent, or a state of solution according to a kind of the diazo component.

The nitrosonium ion source is preferably used in an amount of 0.95 to 5.0 equivalents based on the diazo component, more preferably of 1.00 to 3.00 equivalents, and particularly preferably of 1.00 to 1.10 equivalents.

The reaction temperature preferably ranges from -15°C to 40°C, more preferably from -5°C to 35°C, and further more preferably from 0°C to 30°C. Temperature of less than -15°C is not economical because the reaction rate is significantly decreased and thus the time required for the synthesis is significantly increased. Also, a case of synthesis at a high temperature of greater than 40°C is not preferred because the amount of generated byproducts is increased.

The reaction time preferably ranges from 30 to 300 minutes, more preferably from 30 to 200 minutes, and further more preferably from 30 to 150 minutes.

The compound represented by Formula (3) may be prepared by, for example, the method described in Japanese Patent Application Laid-Open No. 2006-265185, or the like.

[Coupling Reaction Process]

A process of the coupling reaction may be performed in an acidic reaction medium to a basic reaction medium. However, the azo pigment used in the present invention is preferably performed in an acidic to neutral reaction medium, and may be particularly performed in an acidic reaction medium so that the diazonium salt may be suppressed from being decomposed and efficiently derived into the azo pigment.

Preferred examples of the reaction medium (solvent) may include water, an organic acid, an inorganic acid, and an organic solvent. Particularly, an organic solvent is preferred, and a solvent which does not cause a liquid separation phenomenon during the reaction, and shows a homogeneous solution with the solvent is preferred. Examples thereof may include water, alcoholic organic solvents such as methanol, ethanol, propanol, isopropanol, butanol, t-butyl alcohol, and amyl alcohol, ketone-based organic solvents such as acetone and methylethylketone, diol-based organic solvents such as ethylene glycol, diethylene glycol, triethylene glycol, propylene glycol, dipropylene glycol, and 1,3-propanediol, ether-based organic solvents such as ethylene glycolmonomethylether, ethylene glycolmonoethylether, and ethylene glycoldiethylether, tetrahydrofuran, dioxane, acetonitrile and the like. These solvents may be a mixed liquid of two or more kinds.

Preferably, the solvent is an organic solvent which has a polar parameter (ET) value of 40. Among them, a glycol-based solvent that has two or more hydroxyl groups in solvent molecules, an alcohol-based solvent in which the number of carbon atoms is 3 or less, or a ketone-based solvent in which the total number of carbons is 5 or less is preferred, or desirably, an alcohol solvent in which the number of carbon atoms is 2 or less (e.g., methanol, ethylene glycol), or a ketone-based solvent in which the total number of carbons is 4 or less (e.g., acetone, methylethylketone) is preferred. Also, a mixed solvent of these may be included.

The solvent is used in an amount preferably of 1 to 100 times by mass based on the coupling component represented by Formula (3) above, more preferably of 1 to 50 times by mass, and further more preferably of 2 to 30 times by mass.

The coupling component of Formula (3) may be placed in either a state where it is dispersed in the solvent, or a state of solution according to a kind of the coupling component.

The coupling component is used in an amount preferably of 0.95 to 5.0 equivalents based on the diazo component per azo coupling site, more preferably of 1.00 to 3.00 equivalents, and particularly preferably of 1.00 to 1.50 equivalents.

The reaction temperature preferably ranges from -30°C to 50°C, more preferably from -15°C to 45°C, and further more preferably from -10°C to 40°C. Temperature of less than -30°C is not economical because the reaction rate is significantly decreased and thereby, the time required for the synthesis is significantly increased. Also, a case of synthesis at a high temperature of greater than 50°C is not preferred because the amount of generated byproducts is increased. Also, when the reaction temperature is low, the primary particle diameter is decreased, but there is a case where a problem such as filtration leakage may be caused during filtration, and isolation becomes difficult. Meanwhile, when the reaction temperature is high, the primary particle diameter is increased, and thus, a problem such as filtration

leakage is not caused, and the isolation becomes easy. However, there is a case where since the pigment dispersion may be easily aggregated, a post-processing process such as salt milling may be required.

The reaction time preferably ranges from 30 to 300 minutes, more preferably from 30 to 200 minutes, and further more preferably from 30 to 150 minutes.

In the synthesis method of the azo pigment used in the present invention, the product (crude azo pigment) obtained by these reactions may be provided after subjected to treatment according to a post-processing method of a conventional organic synthesis reaction, and subjected to purification or not subjected to purification.

That is, for example, a matter isolated from a reaction system may be provided without purification, or may be provided after subjected to a purification operation, such as re-crystallization or salification, alone or in combination.

Also, the matter after completion of the reaction may be placed in water or ice after removal or non-removal of the reaction solvent by evaporation, and may be neutralized or not be neutralized, and then the isolated matter or the matter extracted with an organic solvent/aqueous solution may be provided without purification, or may be provided after subjected to a purification operation, such as re-crystallization, crystallization or salification, alone or in combination.

Also, the matter after completion of the reaction may be placed in water or ice without removal of the reaction solvent by evaporation, and may be neutralized or not be neutralized, and then may be provided after performing operations including sendimentation of precipitated solids, and purification by decantation.

The synthesis method of the azo pigment used in the present invention will be described in more detail.

The preparation method of the azo pigment used in the present invention is characterized in that in the coupling reaction between a diazonium compound obtained by diazotization of the heterocyclic amine represented by Formula (1)-1 above, and the compound represented by Formula (3), the coupling reaction is performed after the compound of Formula (3) is dissolved or suspended in the organic solvent.

The diazotization reaction of the heterocyclic amine represented by Formula (1)-1 above may be performed, for example, by reacting with a reagent such as sodium nitrite, or nitrosyl sulfuric acid in an acidic solvent such as sulfuric acid, phosphoric acid, or acetic acid, at a temperature of 30°C or less for about 10 minutes to 6 hours. The coupling reaction is preferably performed by reacting the diazonium salt obtained from the above described method, with the compound represented by Formula (3) at 50°C or less, preferably 40°C or less for about 10 minutes to 12 hours.

The control of tautomerism and/or crystal polymorphism as described above may be controlled by preparation conditions at the time of coupling reaction. As for a method of preparing the (1)-$\alpha$ type crystal used in the present invention as the always included form, for example, a method is preferably used in which the compound represented by Formula (3) is dissolved in the organic solvent once, and then the coupling reaction is performed. Here, examples of the organic solvent that may be used may include alcohol solvent, and ketone-based solvent. Examples of the alcohol solvent may preferably include methanol, ethanol, iso propanol, ethylene glycol, diethylene glycol and the like, and among them, methanol is particularly preferred. Examples of the ketone-based solvent may preferably include acetone, methylethylketone, cyclohexanone and the like, and among them, acetone is particularly preferred. These solvents may be used as a solvent mixed with water.

The preparation method of another azo pigment useful in the present invention is characterized in that in the coupling reaction between a diazonium compound obtained by diazotization of the heterocyclic amine represented by Formula (1)-1 above, and the compound represented by Formula (3), the coupling reaction is performed in the presence of a polar aprotic solvent.

By the method of performing the coupling reaction in the presence of the polar aprotic solvent, the (1)-$\alpha$ type crystal may be also efficiently prepared. Examples of the polar aprotic solvent may include N,N-dimethylformamide, N,N-dimethylacetamide, N-methyl-2-pyrrolidone, dimethylsulfoxide, tetramethylurea, acetone, methylethylketone, acetonitrile, and a mixture solvent thereof. Among these solvents, acetone, methylethylketone, N,N-dimethylacetamide, and acetonitrile are particularly preferred. When these solvents are used, the compound of Formula (3) may be completely dissolved in the solvent or may not be completely dissolved.

The compound obtained by the above preparation method may be or may not be subjected to pH adjustment by addition of a base as a purification process according to its use. When pH is adjusted, pH preferably ranges from 4 to 10. Especially, pH more preferably ranges from 4.5 to 8, and particularly preferably from 5.5 to 7.

PH of 10 or less is desirable from the viewpoint of hue because the hue is not reddish. A case of pH of 4 or more is desirable because a problem such as corrosion of a nozzle hardly occurs in use as, for example, an ink for inkjet recording.

By the above preparation method, the compound represented by Formula (1) above is obtained as a crude azo pigment.

Hereinafter, the preparation method useful in the present invention will be described in detail.

The preparation method of the azo pigment used in the present invention is characterized in that it includes the steps of (1)-(a) mixing a diazotization agent with an amino compound, (1)-(b) performing a reaction by mixing the reaction product obtained from the step (1)-(a) with a coupling component, and obtaining a solution in which at least a part of an azo compound produced by the reaction, which is represented by Formula (1) below, is dissolved, and (1)-(c)

mixing the solution obtained from the step (1)-(b) with a poor solvent for the azo compound represented by Formula (1) so as to crystallize the pigment represented by Formula (1).

The step (1)-(a) in association with the present invention will be described in detail.

In the step (1)-(a), the diazotization agent is mixed with the amino compound (1)-1, thereby deriving a diazonium compound through a reaction of the amino compound (1)-1 with the diazotization agent. This reaction is desirably performed in a medium containing an acid. In the present specification, the solution containing the diazonium compound is referred to as a "diazonium compound preparation liquid". There is no particular limitation in the mixing method of the amino compound (1)-1 with the acid and the diazotization agent, but the diazotization agent is preferably added in a solution of the amino compound (1)-1 and the acid. In the step (1)-(a), the diazotization agent is used to derive the amino compound (1)-1 to the diazonium compound, but is not limited as long as it has such an action. Representative examples of the diazotization agent may include nitrite (e.g., sodium nitrite or potassium nitrite), isoamyl nitrite, and nitrosyl sulfuric acid, and further more preferably include sodium nitrite, potassium nitrite, and nitrosyl sulfuric acid, and among them, nitrosyl sulfuric acid is particularly preferred.

The acid used in the step (1)-(a) refers to an acid by which the amino compound (1)-1 may be even slightly dissolved although not completely dissolved, and preferably refers to an acid by which the amino compound (1)-1 may be completely dissolved. As the acid, an inorganic acid or an organic acid may be used. Examples of the inorganic acid may include hydrochloric acid, phosphoric acid, and sulfuric acid, preferably include phosphoric acid, and sulfuric acid and further more preferably include sulfuric acid. Examples of the organic acid may include formic acid, acetic acid, propionic acid, and methanesulfonic acid, preferably include acetic acid, propionic acid, and methanesulfonic acid, and further more preferably include acetic acid, and propionic acid. Also, these acids may be used alone or by mixing. Examples of a mixed acid may include phosphoric acid/acetic acid, sulfuric acid/acetic acid, methanesulfonic acid/acetic acid, and acetic acid/propionic acid, preferably include phosphoric acid/acetic acid, sulfuric acid/acetic acid, sulfuric acid/acetic acid/propionic acid, and acetic acid/propionic acid, and among them, sulfuric acid/acetic acid, and acetic acid/propionic acid are particularly preferred. The mass ratio of the mixed acids is preferably 1/(0.1 to 20), more preferably 1/(0.5 to 10), and further more preferably 1/(1 to 10).

In the step (1)-(a), the amount of the acid added to the amino compound (1)-1 is 1 to 100 times by mass ratio, more preferably 2 to 50 times, and further preferably 3 to 25 times. When the mass ratio is less than 1 time, a stirring characteristic is deteriorated and thus the diazonium compound may not be derived. Meanwhile, the mass ratio of 100 times or more degrades productivity, and thus is uneconomical.

Also, in the step (1)-(a), the amount of the diazotization agent added to the amino compound (1)-1 is 1.0 to 20 times by molar ratio, more preferably 1.0 to 10 times, and further more preferably 1.0 to 5 times. The diazotization agent in an amount of at least one time by molar ratio is required for derivation into the diazonium compound, and in an amount of 20 times or more, the diazonium compound is decomposed by a side reaction.

The mixing of the diazotization agent with the amino compound (1)-1 in the step (1)-(a) is preferably performed at 50°C or less, more preferably at 40°C or less, and further more preferably at 30°C or less. In the preparation of a diazo solution at 50°C or more, there is a concern that the diazotization agent may be decomposed. The stirring time for derivation into the diazonium compound preferably ranges from 0.3 to 10 hours, more preferably from 0.5 to 5 hours, and further more preferably from 1 to 3 hours. For 0.3 or less hours, derivation may not be completely performed, and for 10 or more hours, there is a concern that the diazonium compound may be decomposed. Also, in the mixing, a conventional stirrer is used without particular limitation. Although depending on production facility, the desirable revolutions per minute in the stirring preferably range from 30 rpm to 300 rpm, more preferably from 40 rpm to 200 rpm, and further more preferably from 50 rpm to 200 rpm. When the stirring rate is 30 rpm or less based on the revolutions per minute, the stirring efficiency of the diazonium compound preparation liquid is lowered causing a concern about the progress in a required reaction.

A solvent that may be mixed in the step (1)-(a) is not particularly limited as long as by the solvent, the diazonium compound to be derived is not decomposed. Examples of the solvent that may be mixed may include hydrocarbon-based solvents such as hexane, benzene, and toluene, ether-based solvents such as diethylether, and tetrahydrofuran, ketone-based solvents such as acetone and methylethylketone, amide-based solvents such as dimethylformamide, dimethylacetamide, pyrrolidone, and N-methyl-2-pyrrolidone, dimethylsulfoxide, sulfolane, acetonitrile, and water.

A desirable pH of the diazonium compound preparation liquid in the step (1)-(a) is preferably 7 or less, more preferably 5 or less, and further more preferably 3 or less. When the pH of diazonium compound preparation liquid in the step (1)-(a) is 7 or more, there is a concern about decomposition of the diazonium compound to be derived.

Then, the step (b) in association with the present invention will be described in detail.

The step (1)-(b) is a step of coupling the diazonium compound in the diazonium compound preparation liquid obtained in the step (1)-(a) with the coupling component (1)-(3) by mixing the diazonium compound in the diazonium compound preparation liquid obtained from the step (1)-(a) with the coupling component (3), and obtaining a solution in which at least a part of the azo compound produced by the reaction, which is represented by Formula (1) above, is dissolved.

In the present specification, the solution in which at least a part of the azo compound is dissolved is referred to as an "azo compound solution". There is no particular limitation in the method of mixing the diazonium compound preparation liquid obtained in the step (1)-(a) with the coupling component, but preferably, a part or all of the coupling component is added by being dissolved in a solvent, or the coupling component is added in a solid state without using a solvent, and more preferably, a solution of the coupling component is added in the diazonium compound preparation liquid obtained in the step (1)-(a) or the coupling component is added in a solid state in the diazonium compound preparation liquid obtained in the step (1)-(a).

In the step (1)-(b), based on the coupling component, the diazonium compound in the diazonium compound preparation liquid obtained in the step (1)-(a) is preferably used in an amount of 0.8 to 3 equivalents, with respect to the coupling position of the coupling component, more preferably of 0.9 to 2 equivalents, and further more preferably of 0.95 to 1.5 equivalents. In an amount of 0.8 or less equivalents, the coupling component with an unreacted coupling position remains in a large amount, and also in an amount of 3 or more equivalents, an unreacted diazonium compound remains in a large amount. Both cases are uneconomical.

Also, in the preparation method useful in the present invention, in the step (1)-(b), at least a part of the azo compound represented by Formula (1) is dissolved, and thus the coupling reaction is further smoothly proceeded, and the azo compound with higher purity may be produced. The reason for this may be assumed as follows. Since two or more coupling positions exist, for example, the preparation proceeds by way of a reaction intermediate reacted at only one coupling position. If the reaction intermediate is precipitated in the reaction system, the reaction rate in the coupling reaction following the second is decreased. Meanwhile, there is a concern that the diazonium compound is unstable, and thus may be decomposed after a long period of time. Accordingly, it is important to quickly proceed the coupling reaction, and as a result, the preparation method in which the precipitation is not produced in the step (1)-(b) is suitable for preparing a high purity pigment.

In the step (1)-(b), the coupling component (3) may be added without using the solvent, but preferably is added by mixing with the solvent. In the step (1)-(b), the solvent used for the coupling component (3) is not particularly limited as long as by the solvent, a solution in which at least a part of the azo compound produced by the reaction, which is represented by Formula (1), is dissolved may be obtained. Examples of the solvent may include alcohol-based solvents such as methanol, isopropanol, and ethylene glycol, ketone-based solvents such as acetone and methylethylketone, organic acid solvents such as acetic acid, propionic acid, and methanesulfonic acid, inorganic acid solvents such as sulfuric acid, hydrochloric acid, and phosphoric acid, amide-based solvents such as dimethylformamide, dimethylacetamide, pyrrolidone, and N-methyl-2-pyrrolidone, dimethylsulfoxide, sulfolane, and acetonitrile. Among them, ketone-based solvents such as acetone, and methylethylketone, organic acid solvents such as acetic acid, propionic acid, and methanesulfonic acid, and inorganic acid solvents such as sulfuric acid, hydrochloric acid, and phosphoric acid are preferable, an acidic solvent of an organic acid or an inorganic acid is more preferred, and acetic acid, methanesulfonic acid, phosphoric acid, and sulfuric acid are most preferred. Also, a mixed solvent of solvents mentioned above is suitable.

That is, in the step (1)-(b), an acidic solution containing the coupling component dissolved in the acidic solvent is preferably mixed with the reaction product obtained in the step (1)-(a). Especially, the acidic solvent is preferably at least one of acetic acid and sulfuric acid.

The preferred solvent is preferably added in an amount of 0.5 to 200 times by mass ratio in the coupling component, more preferably of 1 to 100 times, and further more preferably of 1 to 50 times. When the preferred solvent is added in the coupling component in an amount of 0.5 times or less by mass ratio, the stirring of the coupling component and the solvent in a production machine becomes difficult, and thus a required reaction does not proceed. Also, an amount of 200 times or more is uneconomical.

In the step (1)-(b), in the azo compound solution obtained by mixing the diazonium compound preparation liquid in the step (1)-(a) with the coupling component, with respect to the total amount of the azo compound produced by the step (1)-(b) (the total of the azo compound represented by Formula (1) dissolved in the azo compound solution, and the azo pigment represented by Formula (1) precipitated from the azo compound solution), the ratio of the azo compound represented by Formula (1) dissolved in the azo compound solution is preferably 50% by mass or more, preferably 75% by mass or more, preferably 90% by mass or more, and most preferably 100% by mass (a state where the azo compound produced by the step (1)-(b) is completely dissolved in the reaction solution).

In the step (1)-(b), the mixing of the diazonium compound preparation liquid of the step (1)-(a) with the coupling component is preferably carried out at a temperature of 50°C or less, more preferably of 30°C or less, and further more preferably of 25°C or less. At 50°C or more, there is a concern about decomposition of the diazonium compound derived in the step (1)-(a), and the produced azo compound represented by Formula (1). Also, for the mixing, a conventional stirrer is used without a particular limitation. Although depending on production facility, the desirable revolutions per minute in the stirring preferably range from 30 rpm to 300 rpm, more preferably from 40 rpm to 200 rpm, and further more preferably from 50 rpm to 200 rpm. When the stirring rate is 30 rpm or less based on the revolutions per minute, the stirring efficiency of the mixed liquid is lowered causing a concern about the progress in a required reaction. The stirring time in the step (1)-(b) preferably ranges from 0.1 to 10 hours, more preferably from 0.3 to 5 hours, and further

more preferably from 0.3 to 3 hours. For 0.1 or less hours, it is difficult to completely derive into the pigment, and for 10 or more hours, there is a concern about decomposition of the azo compound represented by Formula (1).

[Synthesis of δ Type Crystal Form Azo Pigment represented by Formula (2)]

Hereinafter, the synthesis of the δ type crystal form azo pigment represented by Formula (2) will be described in detail.

The δ type crystal form azo pigment represented by Formula (2) (hereinafter, this may be simply referred to as "azo pigment" or "pigment") may be synthesized by, for example, a method of performing an azo coupling reaction between a diazonium salt derived from heterocyclic amine represented by Formula (2)-1 below and a compound represented by Formula (3) below.

Formula (2) — 1

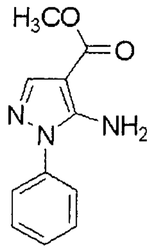

Formula (3)

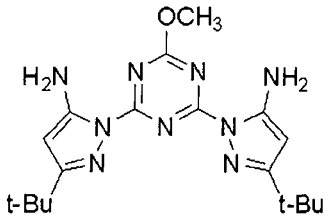

Formula (2)

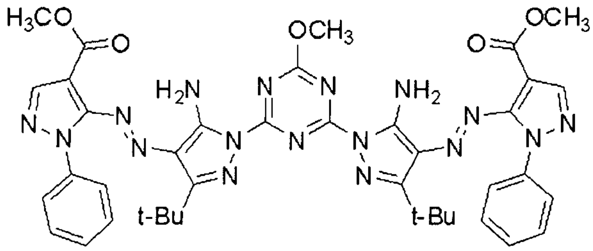

The preparation of the diazonium salt, and the coupling reaction between the diazonium salt and the compound represented by Formula (3) may be performed by a conventional method.

The control of tautomerism and/or crystal polymorphism as described above may be controlled by preparation conditions at the time of coupling reaction, or crystal transformation.

[Crystal Transformation]

The solvent that may be used in the crystal transformation is preferably a solvent in which the azo pigment represented by Formula (2) after the crystal transformation has a low solubility in terms of suppressing the crystal growth during the crystal transformation. Water, an organic acid, an inorganic acid, or an organic solvent may be used, but water or an organic solvent is preferred. Examples of a more preferred solvent may include water, methanol, ethanol, isopropanol, isobutanol, ethylene glycol, diethylene glycol, diethylene glycoldiethylether, diethylene glycolmonomethylether, dipropylene glycol, acetic acid, propionic acid, sulfuric acid, and a mixed solvent of these, more preferably ethylene glycol, water, acetic acid, sulfuric acid, and a mixed solvent of these, and most preferably ethylene glycol.

In solvent heating treatment, the solvent is preferably used in an amount of 1 to 100 times with respect to the azo pigment represented by Formula (2), more preferably of 5 to 50 times, and further more preferably of 8 to 30 times.

The amount of 1 time or more is preferred because a stirring characteristic may be achieved. Also, the amount of 100 times or less is preferred because it improves a productivity and is economical.

In solvent heating treatment, the temperature for heating/stirring varies according to a required primary particle diameter size of the pigment, but preferably ranges from 15 to 150°C, more preferably from 20 to 120°C, and further more preferably ranges from 20 to 100°C. The temperature of 15°C or more is efficient because it does not require a long period of time for crystal transformation. Meanwhile, the temperature of 150°C or less is preferred because it may suppress a part of the azo pigment of Formula (2) from being decomposed.

The stirring time for the crystal transformation may be several minutes as long as the crystal transformation occurs, but preferably ranges from 5 to 1500 minutes, more preferably from 10 to 600 minutes, and further preferably from 30 to 300 minutes. The time of 5 minutes or more is preferred because it is possible to suppress partially amorphous locations from remaining. Meanwhile, the time of 1500 minutes or less is preferred because it is efficient.

[Homogenous Reaction System]

Hereinafter, a method of preparing an amorphous azo compound represented by Formula (2) to be provided to a crystal transformation process will be described in detail.

The preparation method of the azo compound represented by Formula (2) used for crystal transformation preferably includes the steps of (2)-(a) mixing a diazotization agent with an amino compound represented by Formula (2)-1, (2)-(b) performing a reaction by mixing the reaction product obtained from the step (a) with a coupling component represented by Formula (3), and obtaining a solution in which at least a part of an azo compound produced by the reaction, which is represented by Formula (2) below, is dissolved, and (2)-(c) mixing the solution obtained from the step (b) with a poor solvent for the azo compound so as to crystallize an amorphous azo compound represented by Formula (2).

The step (2)-(a) will be described in detail.

In the step (2)-(a), the diazotization agent is mixed with the amino compound, thereby deriving a diazonium compound through a reaction of the amino compound with the diazotization agent. This reaction is desirably performed in a medium containing an acid. In the present specification, the solution containing the diazonium compound is referred to as a "diazonium compound preparation liquid". There is no particular limitation in the mixing method of the amino compound with the acid and the diazotization agent, but the diazotization agent is preferably added in a solution of the amino compound and the acid. In the step (2)-(a), the diazotization agent is used to derive the amino compound to the diazonium compound, but is not limited as long as it has such an action. Representative examples of the diazotization agent may include nitrite esters (e.g., isopentyl nitrite) nitrite (e.g., sodium nitrite or potassium nitrite), isoamyl nitrite, and nitrosyl sulfuric acid, and further more preferably include sodium nitrite, potassium nitrite, and nitrosyl sulfuric acid, and among them, nitrosyl sulfuric acid is particularly preferred from the viewpoint of stably and efficiently preparing the diazonium compound.

The acid used in the step (2)-(a) refers to an acid by which the amino compound represented by Formula (2)-1 may be even slightly dissolved although not completely dissolved, and preferably refers to an acid by which the amino compound may be completely dissolved. As the acid, an inorganic acid or an organic acid may be used. Examples of the inorganic acid may include hydrochloric acid, phosphoric acid, and sulfuric acid, preferably include phosphoric acid, and sulfuric acid and further more preferably include sulfuric acid. Examples of the organic acid may include formic acid, acetic acid, propionic acid, and methanesulfonic acid, preferably include acetic acid, propionic acid, and methanesulfonic acid, and further more preferably include acetic acid, and propionic acid. Also, these acids may be used alone or by mixing. Examples of a mixed acid may include phosphoric acid/acetic acid, sulfuric acid/acetic acid, methanesulfonic acid/acetic acid, and acetic acid/propionic acid, preferably include phosphoric acid/acetic acid, sulfuric acid/acetic acid, sulfuric acid/acetic acid/propionic acid, and acetic acid/propionic acid, and among them, sulfuric acid/acetic acid, and acetic acid/propionic acid are particularly preferred. The mass ratio of the mixed acids is preferably 1/(0.1 to 20), more preferably 1/(0.5 to 10), and further more preferably 1/(1 to 10).

In the step (2)-(a), the amount of the acid added to the amino compound is 1 to 100 times by mass ratio, more preferably 2 to 50 times, and further preferably 3 to 25 times. When the mass ratio is 1 time or more, a stirring characteristic is improved and thus the diazonium compound may be more securely derived. Meanwhile, the mass ratio of 100 times or less improves productivity, and thus is economical.

Also, in the step (2)-(a), the amount of the diazotization agent added to the amino compound is 1.0 to 20 times by molar ratio, more preferably 1.0 to 10 times, and further more preferably 1.0 to 5 times. The diazotization agent in an amount of one time or more by molar ratio in the amino compound may further securely derive the diazonium compound, and the diazotization agent in an amount of 20 times or less may suppress the diazonium compound from being decomposed by a side reaction.

The mixing of the diazotization agent with the amino compound in the step (2)-(a) is preferably performed at 50°C or less, more preferably at 40°C or less, and further more preferably at 30°C or less. In the preparation of a diazo solution at 50°C or more, there is a concern that the diazotization agent may be decomposed. The stirring time for

derivation into the diazonium compound preferably ranges from 0.3 to 10 hours, more preferably from 0.5 to 5 hours, and further more preferably from 1 to 3 hours. The stirring time for 0.3 or more hours, derivation into the diazonium compound may be easily completely performed, and for 10 or less hours, the diazonium compound may be hardly decomposed. Also, in the mixing, a conventional stirrer is used without particular limitation. Although depending on production facility, the desirable revolutions per minute in the stirring preferably range from 30 rpm to 300 rpm, more preferably from 40 rpm to 200 rpm, and further more preferably from 50 rpm to 200 rpm. When the stirring rate is 30 rpm or more based on the revolutions per minute, the stirring efficiency of the diazonium compound preparation liquid is improved, and thus progress in a required reaction may be securely performed.

A solvent that may be mixed in the step (2)-(a) is not particularly limited as long as by the solvent, the diazonium compound to be derived is not decomposed. Examples of the solvent that may be mixed may include hydrocarbon-based solvents such as hexane, benzene, and toluene, ether-based solvents such as diethylether, and tetrahydrofuran, ketone-based solvents such as acetone and methylethylketone, amide-based solvents such as dimethylformamide, dimethylacetamide, pyrrolidone, and N-methyl-2-pyrrolidone, dimethylsulfoxide, sulfolane, acetonitrile, and water.

A desirable pH of the diazonium compound preparation liquid in the step (2)-(a) is preferably 7 or less, more preferably 5 or less, and further more preferably 3 or less. When the pH of diazonium compound preparation liquid in the step (2)-(a) is 7 or more, there is a concern about decomposition of the diazonium compound to be derived.

Then, the step (2)-(b) will be described in detail.

The step (2)-(b) is a step of performing a reaction by mixing the reaction product obtained from the step (2)-(a) with a coupling component, and obtaining a solution in which at least a part of the azo compound produced by the reaction, which is represented by Formula (2), is dissolved.

In the present specification, the solution in which at least a part of the azo compound is dissolved is referred to as an "azo compound solution".

A method of preparing the azo compound solution may include,

(i) a method of performing a coupling reaction by mixing the reaction product obtained from the step (2)-(a) with a coupling component, and dissolving the azo pigment represented by Formula (2) which is precipitated by the reaction, in a solvent, and

(ii) a method of performing a coupling reaction so that at least a part of the compound represented by Formula (2) which is obtained by the coupling reaction may be dissolved in the reaction solution, and using the reaction solution as it is, as an azo compound solution, or a method of employing the azo compound solution obtained as above in the step (2)-(c) described below, and further dissolving the resultant obtained (crystallized) azo pigment in a solvent.

For both methods (i) and (ii) above, there is no particular limitation in the method of mixing the diazonium compound preparation liquid obtained in the step (2)-(a) with the coupling component, but preferably, a part or all of the coupling component is added by being dissolved in a solvent, or the coupling component is added in a solid state without using a solvent, and more preferably, a solution of the coupling component is added in the diazonium compound preparation liquid obtained in the step (a) or the coupling component is added in a solid state in the diazonium compound preparation liquid obtained in the step (a).

In the step (2)-(b), based on the coupling component, the diazonium compound in the diazonium compound preparation liquid obtained in the step (2)-(a) is preferably used in an amount of 0.8 to 3 equivalents, with respect to the coupling position of the coupling component, more preferably of 0.9 to 2 equivalents, and further more preferably of 0.95 to 1.5 equivalents. In an amount of 0.8 or more equivalents, the coupling component with an unreacted coupling position may be suppressed from remaining, and also in an amount of 3 or less equivalents, an unreacted diazonium compound may be suppressed from remaining. This is more economical.

Also, in the method (ii), in the step (2)-(b), at least a part of the azo compound represented by Formula (2) is dissolved, and thus the coupling reaction is further smoothly proceeded, and the azo compound with higher purity may be prepared. The reason for this may be assumed as follows. In Formula (3) above, since two or more coupling positions exist, for example, the preparation proceeds by way of a reaction intermediate reacted at only one coupling position. When the reaction intermediate is precipitated in the reaction system, the reaction rate in the coupling reaction following the second is decreased. Meanwhile, there is a concern that the diazonium compound is unstable, and thus may be decomposed after a long period of time. Accordingly, it is important to quickly proceed the coupling reaction, and as a result, the preparation method (ii) in which the precipitation is not produced in the step (2)-(b) is more suitable for preparing a high purity pigment.

In the step (2)-(b), the coupling component may be added without using the solvent, or may be added by mixing with the solvent, but is preferably added without using the solvent. In the step (2)-(b), the solvent used for the coupling component is not particularly limited but is preferably a solvent by which a solution in which at least a part of the azo compound produced by the reaction which is represented by Formula (2) is dissolved may be obtained as in the method (ii).

In the method (i), that is, in a case of precipitating the pigment, as the solvent, water, an organic acid, an

inorganic acid, or an organic solvent may be used. Particularly, water or an organic solvent is preferred, and a solvent which does not cause a liquid separation phenomenon during the reaction, and shows a homogeneous solution with the solvent is preferred. Examples thereof may include water, alcoholic organic solvents such as methanol, ethanol, propanol, isopropanol, butanol, t-butyl alcohol, and amyl alcohol, ketone-based organic solvents such as acetone and methylethylketone, diol-based organic solvents such as ethylene glycol, diethylene glycol, triethylene glycol, propylene glycol, dipropylene glycol, and 1,3-propanediol, ether-based organic solvents such as ethylene glycolmonomethylether, ethylene glycolmonoethylether, and ethylene glycoldiethylether, tetrahydrofuran, dioxane, acetonitrile and the like. These solvents may be a mixed liquid of two or more kinds.

Preferably, the solvent is an organic solvent which has a polar parameter (ET) value of 40 or more. Among them, a glycol-based solvent that has two or more hydroxyl groups in solvent molecules, an alcohol-based solvent in which the number of carbon atoms is 3 or less, or a ketone-based solvent in which the total number of carbons is 5 or less is preferred, or desirably, an alcohol solvent in which the number of carbon atoms is 2 or less (e.g., methanol, ethylene glycol), or a ketone-based solvent in which the total number of carbons is 4 or less (e.g., acetone, methylethylketone) is preferred. Also, a mixed solvent of these may be included.

Also, in the method (ii), that is, in a case of performing the coupling reaction so that at least a part of the compound represented by Formula (2) may be dissolved in the reaction solution, examples of the solvent may include water, alcohol-based solvents such as methanol, iso propanol, and ethylene glycol, ketone-based solvents such as acetone and methylethylketone, organic acid solvents such as acetic acid, propionic acid, and methanesulfonic acid, inorganic acid solvents such as sulfuric acid, hydrochloric acid, and phosphoric acid, amide-based solvents such as dimethylformamide, dimethylacetamide, pyrrolidone, and N-methyl-2-pyrrolidone, dimethylsulfoxide, sulfolane, and acetonitrile. Among them, ketone-based solvents such as acetone, and methylethylketone, organic acid solvents such as acetic acid, propionic acid, and methanesulfonic acid, and inorganic acid solvents such as sulfuric acid, hydrochloric acid, and phosphoric acid are preferable, an acidic solvent of an organic acid or an inorganic acid is more preferred, and acetic acid, methanesulfonic acid, phosphoric acid, and sulfuric acid are most preferred. Also, a mixed solvent of solvents mentioned above is suitable.

Especially, in a case of the method (ii), in the step (2)-(b), it is desirable that an acidic solution containing the coupling component dissolved or suspended in the acidic solvent is mixed with the reaction product obtained in the step (2)-(a), or the coupling component is added to the reaction product obtained in the step (a) without using the solvent. Especially, the acidic solvent is preferably a solvent that contains at least one of acetic acid and sulfuric acid.

In both the methods (i) and (ii), the preferred solvent is preferably added in an amount of 0.5 to 200 times by mass ratio in the coupling component, more preferably of 1 to 100 times, and further more preferably of 1 to 50 times. When the preferred solvent is added in the coupling component in an amount of 0.5 times or less by mass ratio, the stirring of the coupling component and the solvent in a production machine becomes difficult, and thus a required reaction does not proceed. Also, an amount of 200 times or more is uneconomical.

In the preparation method of the azo compound solution according to the method (i) above, or in the preparation method of the azo compound solution according to the method (ii) above, especially, the method where the coupling reaction solution containing at least a part of the compound represented by Formula (2) is dissolved therein is employed in step (2)-(c), and further dissolving the obtained azo pigment in a solvent, a solvent for dissolving the obtained azo pigment is not particularly limited as long as it may dissolve at least a part of the azo pigment, but examples thereof may be the same as the above described examples of a solvent desirable in the method (ii).

When any one of the above methods (i) and (ii) is selected, as the azo compound solution finally obtained in the step (2)-(b), an acidic solution is preferred, and particularly a solution containing at least one of acetic acid and sulfuric acid is preferred.

In the step (2)-(b), in the obtained azo compound solution, with respect to the total amount of the azo compound produced by the step (2)-(b) (the total of the azo compound represented by Formula (2) dissolved in the azo compound solution, and the azo pigment represented by Formula (2) precipitated from the azo compound solution), the ratio of the azo compound represented by Formula (2) dissolved in the azo compound solution is preferably 50% by mass or more, preferably 75% by mass or more, preferably 90% by mass or more, and most preferably 100% by mass (a state where the azo compound produced by the step (b) is completely dissolved in the reaction solution). This may result a tendency to further decrease the particle diameter of the pigment.

In the step (2)-(b), the mixing of the diazonium compound preparation liquid of the step (2)-(a) with the coupling component is preferably carried out at a temperature of 50°C or less, more preferably of 30°C or less, and further more preferably of 25°C or less. At 50°C or more, there is a concern about decomposition of the diazonium compound derived in the step (2)-(a), and the produced azo compound represented by Formula (2). Also, for the mixing, a conventional stirrer is used without a particular limitation. Although depending on production facility, the desirable revolutions per minute in the stirring preferably range from 30 rpm to 300 rpm, more preferably from 40 rpm to 200 rpm, and further more preferably from 50 rpm to 200 rpm. When the stirring rate is 30 rpm or less based on the revolutions per minute, the stirring efficiency of the mixed liquid is lowered causing a concern about the progress in a required reaction. The

stirring time in the step (b) preferably ranges from 0.1 to 10 hours, more preferably from 0.3 to 5 hours, and further more preferably from 0.3 to 3 hours. For 0.1 or less hours, it is difficult to completely derive into the pigment, and for 10 or more hours, there is a concern about decomposition of the azo compound represented by Formula (2).

Hereinafter, the steps (1)-(c) and (2)-(c) in association with the present invention will be described in detail.

The step (1)-(c) or (2)-(c) is a step of mixing the azo compound solution obtained in the step (1)-(b) or (2)-(b), with the poor solvent in which the azo compound has a low solubility, so as to crystallize the pigment. There is no particular limitation in the method of mixing the azo compound solution obtained in the step (1)-(b) or (2)-(b) with the poor solvent, but the azo compound solution obtained in the step (b) is preferably added in the poor solvent, and here, the poor solvent is preferably placed in a stirred state.

The stirring rate preferably ranges from 100 rpm to 10000 rpm, more preferably from 150 rpm to 8000 rpm, and particularly preferably from 200 rpm to 6000 rpm. In the addition, a pump or the like may be used. Here, addition in the liquid or addition outside the liquid may be performed, but addition in the liquid is more preferable. Also, desirably, the compound is continuously fed into the liquid via a supply tube through a pump.

The poor solvent is not particularly limited, but a solvent in which the solubility of the azo compound is 1 g/L or less is preferred, and a solvent in which the solubility of the azo compound is 0.1 g/L or less is more preferred. The solubility may be a solubility in a case of dissolution in the presence of acid or alkali. For the compatibility or the homogenous mixing characteristic between the azo compound solution obtained in the step (1)-(b) or (2)-(b) with the poor solvent, a dissolved amount of the good solvent of the azo compound in the poor solvent is preferably 30% by mass or more, and more preferably 50% by mass. In the present specification, the solubility refers to a solubility at 25°C.

Examples of the poor solvent may include aqueous solvents such as water, hydrochloric acid, ammonia water, sodium hydroxide aqueous solution, alcohol-based solvents such as methanol, ethanol, isopropylalcohol, and 1-methoxy-2-propanol, glycol-based solvents such as ethylene glycol, and diethylene glycol, ketone compound solvents such as acetone, methylethylketone, methylisobutyl ketone, and cyclohexanone, ether-based solvents such as diethylether and tetrahydrofuran, hydrocarbon-based solvents such as hexane, benzene, and toluene, nitrile-based solvents such as acetonitrile, halogen-based solvents such as dichloromethane and trichloroethylene, and ester-based solvents such as acetic acidethyl, ethyl lactate, and 2-(1-methoxy)propyl acetate, preferably include aqueous solvents such as water, hydrochloric acid, ammonia water, sodium hydroxide aqueous solution, alcohol-based solvents such as methanol, ethanol, isopropylalcohol, and 1-methoxy-2-propanol, glycol-based solvents such as ethylene glycol and diethylene glycol, and ketone compound solvents such as acetone, methylethylketone, methylisobutyl ketone, and cyclohexanone, and more preferably include aqueous solvents such as water and ammonia water, an alcohol solvent with 1 to 3 carbon atoms, and a glycol-based solvent with 1 to 6 carbon atoms. Also, a mixed solvent of solvents mentioned above is suitable. Most preferably, the solvent is a at least one kind solvent selected from the group including water, alcohol of 1 to 3 carbon atoms, and glycol of 1 to 6 carbon atoms.

The mixing ratio of the azo compound solution obtained in the step (1)-(b) or (2)-(b) to the poor solvent preferably ranges from 1/50 to 2/3 by volume ratio, more preferably from 1/40 to 1/2, and particularly preferably from 1/20 to 1/2. When the ratio by volume ratio is greater than 2/3, the crystallization of the pigment becomes insufficient, and thus the reaction yield is lowered, and the ratio of less than 1/20 degrades the productivity and thus is uneconomical.

The temperature for mixing the azo compound solution obtained in the step (1)-(b) with the poor solvent is not particularly limited, but the mixing is preferably carried out at -10 to 50°C, more preferably at -5 to 30°C, and most preferably at -5 to 15°C.

The temperature for mixing the azo compound solution obtained in the step (2)-(b) with the poor solvent is not particularly limited, but the mixing is preferably carried out at -10 to 50°C, more preferably at -5 to 30°C, particularly preferably at -5 to 15°C, and most preferably at 10 to 25°C.

In the mixing of the azo compound solution obtained in the step (1)-(b) or (2)-(b) with the poor solvent, Reynolds number may be controlled so as to control the particle diameter of the precipitated/produced organic nano particles. Here, Reynolds number is a dimensionless number representing the flow state of fluid, and is represented by the following Formula.

$$\text{Mathematical Formula (1): } Re=\rho UL/\mu$$

(Mathematical Formula (1), Re represents the Reynolds number, $\rho$ represents the density [kg/m$^3$] of the azo compound solution obtained in the step (1)-(b) or (2)-(b), U represents the relative velocity [m/s] at which the azo compound solution meets the poor solvent, L represents the equivalent diameter [m] of a flow path or a feed opening at a portion where the azo compound solution meets the poor solvent, and $\mu$ represents the viscosity coefficient [Pa·s] of the azo compound solution.)

The equivalent diameter L refers to the diameter of an equivalent circular pipe when the equivalent circular

pipe is assumed with respect to the opening size or the flow path of a pipe in any cross-sectional shape. The equivalent diameter L is represented by Mathematical Formula (2) below when the cross section of the pipe is A, and the wetted perimeter (circumference length) of the pipe or the outer circumference of the flow path is p.

$$\text{Mathematical Formula (2): } L=4A/p$$

The relative velocity U at which the azo compound solution meets the poor solvent is defined as a relative velocity in the direction perpendicular to the plane of the portion where two elements meet. That is, for example, in a case where the azo compound solution is injected into and mixed with the poor solvent stood still, the speed of injection from the feed opening becomes equal to the relative velocity U. The value of the relative velocity U is not particularly limited, but, for example, preferably ranges from 0.5 to 100m / s, and more preferably ranges from 1.0 to 50m / s.

The density $\rho$ of the azo compound solution is a value determined according to the kind of a selected material, but, for example, practically ranges from 0.8 to 2.0 $kg/m^3$. Also, the viscosity coefficient $\mu$ of the azo compound solution is also a value determined according to a used material or an environmental temperature, but, for example, preferably ranges from 0.5 to 100 mPa·s, and more preferably ranges from 1.0 to 50.0 mPa·s.

As the value of the Reynolds number is decreased, it is easy to form a laminar flow, and as the value is increased, it is easy to form a turbulent flow. For example, the particle diameter of the pigment nanoparticles may be obtained by control through adjustment of the Reynolds number up to 60 or more, preferably up to 100 or more, and more preferably up to 150 or more. There is no particular upper limit on the Reynolds number, but for example, the pigment particles having a desired average particle diameter may be obtained by control through adjustment within a range of 100,000 or less. Here, within the range described above, by generally increasing the Reynolds number, the pigment particles having a smaller particle size may be obtained by control.

[Particle Diameter in a case of forming Particles from Homogenous Reaction Liquid]

The average particle diameter of the pigment particles obtained using the above method preferably ranges from 1 nm to 1 $\mu$m, more preferably ranges from 5 to 500 nm, further more preferably ranges from 10 to 200 nm, and particularly preferably ranges from 10 to 100 nm.

The preferred average particle diameter of the pigment particles is achieved by properly adjusting (1) temperature in the step (1)-(c) or (2)-(c), (2) solubility of the azo compound in the poor solvent, and (3) stirring rate (or Reynolds number).

In the preparation method of the azo pigment used in the present invention, the product obtained in the steps (1)-(a) to (c) or the steps (2)-(a) to (c) may be provided by purification or without purification after subjected to treatment according to a post-processing method of a conventional organic synthesis reaction.

That is, for example, a matter isolated from a reaction system may be provided without purification, or may be provided after subjected to a purification operation, such as re-crystallization or salification, alone or in combination.

Also, the matter after completion of the reaction may be placed in water or ice after removal or non-removal of the reaction solvent by evaporation, and may be neutralized or not be neutralized, and then the isolated matter or the matter extracted with an organic solvent/aqueous solution may be provided without purification, or may be provided after subjected to a purification operation, such as re-crystallization, crystallization or salification, alone or in combination.

Then, the pigment particles obtained by the preparation method useful in the present invention, that is, the azo pigment represented by Formula (1) or Formula (2) obtained by the above described method will be described.

[Particle diameter by all methods]

The volume average particle diameter of azo pigment particles represented by Formula (1) or (2) obtained by the preparation method useful in the present invention preferably ranges from 0.01 $\mu$m to 10 $\mu$m, more preferably from 0.01 $\mu$m to 3 $\mu$m, and further more preferably from 0.02 $\mu$m to 0.5 $\mu$m. Among them, the diameter particularly preferably ranges from 0.02 $\mu$m to 0.2 $\mu$m, and most preferably from 0.02 $\mu$m to 0.15 $\mu$m.

Also, the volume average particle diameter of the pigment particles refers to a particle diameter of the pigment itself, or a diameter of a particle attached with an additive in a case where the additive such as a dispersant is attached to a coloring material,. In the present invention, as a measurement device for the volume average particle diameter of the pigment particles, a nano-track UPA particle size analyzer (UPA-EX150 ; manufactured by Nikkiso Co., Ltd) may be used. The measurement may be performed according to a predetermined measurement method while 3ml of a pigment dispersion is palced in a measurement cell. Also, as for parameters to be input for the measurement, ink viscosity is used as viscosity, and pigment density is used as density of dispersed particles.

The azo pigment represented by Formula (1) or (2) prepared by the method useful in the present invention may be subjected to post-processing if necessary. Examples of the post-processing method may include trituration processing such as solvent salt milling, salt milling, dry milling, solvent milling, and acid pasting, a pigment particle control process by solvent heating treatment, and a surface treatment process by resin, surfactant and dispersant.
When the post-processing represented by solvent salt milling or salt milling is performed, the primary particle diameter may be decreased. For this reason, in order to obtain a further preferred form of pigment particles, solvent salt milling, salt milling or dry milling is preferably performed from the viewpoint of dispersibility.

[Solvent salt milling]

In the solvent salt milling, for example, a crude azo pigment, an inorganic salt and an organic solvent that does not dissolve them are injected to a kneading machine, and within the machine, kneading trituration may be performed. As the inorganic salt, a water-soluble inorganic salt may be suitably used, and for example, an inorganic salt such as sodium chloride, potassium chloride, or sodium sulfate is preferably used. Also, an inorganic salt that has an average particle diameter ranging from 0.5 $\mu$m to 50 $\mu$m is more preferably used.
The inorganic salt is preferably used in an amount of 3 to 20 times by mass based on the crude azo pigment, and more preferably of 5 to 15 times by mass. As the organic solvent, a water-soluble organic solvent may be suitably used, and since the solvent may be in a state of being easily evaporated by an increase of temperature during kneading, a high boiling point solvent is preferred in terms of safety.
Examples of such an organic solvent may include diethylene glycol, glycerin, ethylene glycol, propylene glycol, liquid polyethylene glycol, liquid polypropylene glycol, 2-(methoxymethoxy)ethanol, 2-butoxyethanol, 2-(isopentyloxy)ethanol, 2-(hexyloxy)ethanol, diethylene glycolmonomethylether, diethylene glycolmonoethylether, diethylene glycolmonobutylether, triethylene glycol, triethylene glycolmonomethylether, 1-methoxy-2-propanol, 1-ethoxy-2-propanol, dipropylene glycol, dipropylene glycolmonomethylether, dipropylene glycolmonomethylether, dipropylene glycol and a mixture thereof. The water-soluble organic solvent may be preferably used in an amount of 0.1 to 5 times by mass with respect to the crude azo pigment. The kneading temperature preferably ranges from 20 to 130°C, and particularly from 40 to 110°C. As the kneading machine, for example, a kneader or a mix muller may be used.

[Dispersant]

In the present invention, the dispersant may be freely selected out of a polymer matter, and is water-soluble matter. It is a polymer from the viewpoint of image quality of printed matter. Further, since water-based dispersion is performed, it is a water-soluble matter from the viewpoints of dispersibility, and storage stability of dispersions. In the present invention, the dispersant is a water-soluble polymer.
Also, in the present invention, "dispersant" also refers to a matter in a state of being cross-linked by a cross-linking agent. In the pigment dispersion of the present invention, the dispersant is preferably adsorbed to the pigment.
The dispersant has an effect due to charge repulsion in the molecule, and thus, from the viewpoint of storage stability of the dispersion, has one or more carboxyl groups, and preferably 10 or more carboxyl groups. When the cross-linking agent has two epoxy groups, an epoxy group is cross-linked to a carboxyl group by the cross-linking reaction, thereby decreasing the carboxyl groups. Thus, the polymer preferably has 10 or more carboxyl groups.
The carboxyl groups in the polymer may be in the form of acid (-COOH) or salt. Examples of the salt may include a metal ion, ammonium, substituted ammonium, quaternary ammonium, and a pyridinium salt, preferably include a metal ion, and ammonium, and further more preferably include a potassium ion, and a sodium ion.
The polymer dispersant used in the present invention includes polyurethane, poly ester, or polyvinyl, more preferably polyurethane, polyester or polyvinyl, and most preferably polyvinyl (vinyl polymer). In the present invention, two or more kinds of polymers may be used in combination.
The introduction of the carboxyl groups into the polymer is carried out by copolymerization of monomers containing at least one carboxyl group. In preferred polyvinyl, as a monomer, itaconic acid, maleic acid, fumaric acid, crotonic acid, methacrylic acid, acrylic acid, or $\beta$-carboxyethyl acrylate is used, but preferably methacrylic acid, acrylic acid, or $\beta$-carboxyethyl acrylate is used.
The carboxyl group in the polymer, above all, has an action capable of cross-linking with a cross-linking group in the cross-linking agent. As the cross-linking group, acid anhydride, or epoxy group may be used, and an epoxy group is particularly preferred. This is because due to high reactivity, cross-linking may be carried out under mild condition. Also, an unreacted carboxyl group is effective in the stability of final fine particle dispersion in precipitation and aggregation. The carboxyl group is effective as a stable group in a polar solvent especially an aqueous solvent. If the carboxyl group is only one group that contributes to the stability in the pigment dispersion, when all of the carboxyl groups are cross linked with the cross-linking agent, the stability of the dispersion is significantly lowered. Accordingly, in order that unreacted carboxyl groups may remain after the completion of the cross-linking reaction, a molar excess of the carboxyl

groups with respect to the epoxy groups is preferred, and with respect to the epoxy groups, the carboxyl groups are included in a molar ratio of 30 : 1 to 1.1 : 1, more preferably of 25 : 1 to 1.1 : 1, and particularly preferably 20 : 1 to 2 : 1.

The polymer may contain other stable groups. The selection and amount of the stable group are largely dependent on the properties of the solvent. The stable group is practically dependent on whether the solvent is hydrophilic (e.g., polar solvent) or hydrophobic (e.g., non-polar solvent).

The preferred polymer dispersant is obtained from both of hydrophilic monomers, and hydrophobic monomers.

The hydrophilic monomer is a monomer containing hydrophilicity which may be an ionic or nonionic group. The ionic group may be cationic, but preferably anionic. The anionic group as well as the cationic group give amphoteric stabilisation to the dispersant. The preferred anionic group is a group (or salt) of phenoxy, sulfonic acid, sulfuric acid, phosphonic acid, polyphosphoric acid, or phosphoric acid. The preferred cationic group is quaternary ammonium, benzalkonium, guanidine, biguanidine, or pyridinium. These may be in the form of salt such as hydroxide, sulfate, nitrate, chloride, bromide, iodide or fluoride. The preferred nonionic group is glucoxide, saccharide, pyrrolidone, or acrylamide, and particularly a hydroxyl group or a poly(alkyleneoxide) group, and more preferably a poly(ethyleneoxide) group or a poly(propyleneoxide) group, and particularly $-(CH_2CH_2O_nH$ or $-(CH_2CH_2O_nC)_{1}$-$_{4}$-alkyl Here, n represents 3 to 200 (preferably 4 to 20). After this, for example, the expression of $C_1$-$_4$- represents "1 to 4 carbons". The polymer may contain only nonionic groups, may contain a plurality of nonionic groups through the polymer, or may contain one or more polymer chains including nonionic groups. The hydroxyl group is incorporated using polyvinylalcohol, polyhydroxyl functional acrylics and celluloses. The ethyleneoxy group is incorporated using a polymer chain such as polyethylene oxide.

The hydrophobic monomer is a monomer including a hydrophobic group. Representative examples of the monomer including a hydrophobic group include hydrocarbons, fluorocarbons, poly $C_3$-$_4$ alkyleneoxys and alkylsiloxanes, which have 3 or less hydrophilic groups, and preferably no hydrophilic groups. The hydrophobic group is preferably a $C_3$-$_{50}$ chain, and also propyleneoxide may be included in side chain or straight chain in the hydrophobic monomer.

The polymer may be a homopolymer, but preferably a copolymer. The polymer includes a random polymer (statistically short blocks or segments), but preferably includes a graft polymer (long blocks or segments). Also, the polymer may be an alternating polymer. The polymer may be branched but is preferably linear. The polymer may have 2 or more segments (for example, block and graft, and copolymer), but preferably is random.

In an embodiment where the polymer has two or more segments, preferably, at least one segment is hydrophobic, and at least one segment is hydrophilic relative to each other. A preferred method of preparing hydrophobic and hydrophilic segments is performed by copolymerization of hydrophobic and hydrophilic monomers, respectively. When the polymer has at least one hydrophobic segment and at least one hydrophilic segment, the carboxyl group may be situated in a hydrophobic segment, in a hydrophilic segment, or in both segments.

The vinyl polymer (polyvinyl) may be prepared by any suitable means. A preferred method of preparing the vinyl polymer is free radical polymerization using vinyl monomers such as (meth)acrylate and vinylnaphthalene (especially, styrene monomer). Examples of the suitable free radical polymerization may include suspension polymerization, solution polymerization, dispersion polymerization, and emulsion polymerization, but not limited thereto. The solution polymerization is preferred.

The vinyl polymer may preferably use (meth)acrylate monomers.

The vinyl polymer is preferably a copolymer.

The copolyvinyl dispersant derived from the hydrophobic monomers or the hydrophilic monomers preferably has no segments substantially. For example, the copolyvinyl polymer is prepared by free radical polymerization in which a segment is very short or does not exist. Such a case is frequently referred to as "random" polymerization. The copolyvinyl polymer having a segment is prepared by polymerization methods such as living polymerization, especially, group transfer polymerization, atom transfer polymerization, macromonomer polymerization, graft polymerization, anionic or cationic polymerization. A suitable hydrophilic vinyl monomer is a nonionic or ionic monomer. A preferred nonionic monomer is that includes saccharides, glucose, amide, or pyrrolidone, and especially has a hydroxyl group or an ethoxy group. Examples of a preferred nonionic monomer may include hydroxyethyl acrylate, hydroxyethylmethacrylate, vinylpyrrolidone, ethoxylated (meth)acrylate and (meth)acrylamide. A suitable ionic vinyl monomer may be cationic, but is preferably anionic.

A preferred anionic vinyl monomer is that includes a carboxyl group and/or a phosphoric acid group and/or a sulfonic acid group (which may be in the free acid form or salt form). Preferred examples thereof may include (meth)acrylic acid, styrenesulfonic acid, vinylbenzyl sulfonic acid, vinylsulfonic acid, (meth)acryloyloxyalkyl sulfonic acid (e.g., acryloyloxymethylsulfonic acid, acryloyloxyethylsulfonic acid, acryloyloxypropylsulfonic acid, acryloyloxybutylsulfonic acid, methacryloyloxymethylsulfonic acid, methacryloyloxyethylsulfonic acid, methacryloyloxypropylsulfonic acid, methacryloyloxybutylsulfonic acid), 2-acrylamide-2-alkylalkanesulfonic acid (e.g., 2-acrylamide-2-methylethanesulfonic acid, 2-acrylamide-2-methylpropane sulfonic acid, 2-acrylamide-2-methylbutanesulfonic acid), 2-methacrylamide-2-alkylalkanesulfonic acid (e.g., 2-methacrylamide-2-methylethanesulfonic acid, 2- methacrylamide-2-methylpropanesulfonic acid, 2-methacrylamide-2-methylbutanesulfonic acid), mono-(acryloyloxyalkyl) phosphate (e.g., mono-(acryloyloxyethyl) phosphate, mono-(3-acryloyloxypropyl)phosphate), mono-(methacryloyloxyalkyl)phosphate (e.g.,

mono-(methacryloyloxyethyl)phosphate , and mono-(3-methacryloyloxypropyl)phosphate).

The preferred cationic vinyl monomer is that includes a group of quaternary amine, pyridine, guanidine or biguanidine.

The Preferred hydrophobic vinyl monomer does not include a hydrophilic group. Examples of preferred hydrophobic vinyl monomer may include $C_1$-$_{20}$-hydrocarbyl (meth)acrylate, butadiene, styrene and vinylnaphthalene, preferably include $C_1$-$_{20}$-hydrocarbyl(meth)acrylate (e.g., methyl(meth)acrylate, butyl(meth)acrylate, octyl(meth)acrylate, 2-ethylhexyl(meth)acrylate, isobornylacrylate, laurylacrylate, stearylacrylate, benzyl(meth)acrylate, phenoxyethyl(meth)acrylate), and particularly preferably include methylmethacrylate, benzyl methacrylate, and 2-ethylhexylmethacrylate, phenoxyethylmethacrylate. These hydrocarbyl groups may be branched but is preferably linear.

The polyester having at least one carboxyl group is also generated by a reaction of a diol monomer with excess of a dicarboxylic acid monomer. The carboxyl group may be introduced by copolymerization of a dicarboxylic acid monomer and a diol moner having a carboxyl group.

The polyester is typically prepared by esterification of dicarboxylic acids and diols.

The polyester having the carboxyl group may be prepared, for example, by performing a dehydration condensation reaction of a carboxyl group-containing compound with a hydroxyl group-containing compound through a known method such as a melting method and a solvent method so that the carboxyl group may remain.

The polyester may be obtained by dehydration condensation by appropriately selecting a compound having a carboxyl group such as monobasic acid, or polybasic acid, and a compound having a hydroxyl group such as diol or polyol, and also the polyester that uses fats or fatty acids become an alkyd resin.

The carboxyl group included in the polyester used in the present invention is mainly an unreacted carboxyl group derived from polybasic acids of dibasic acids or more constituting the polyester.

Examples of the polybasic acid may include adipic acid, (anhydrous) succinic acid, sebacic acid, dimer acid, maleic acid (anhydride), (anhydrous) phthalic acid, isophthalic acid, terephthalic acid, tetrahydro (anhydrous) phthalic acid, hexahydro (anhydrous) phthalic acid, hexahydro terephthalic acid, 2,6-naphthalenedicarboxylic acid, (anhydrous) trimellitic acid, and (anhydrous) pyromellitic acid.

Examples of the compound having the available carboxyl group except for the polybasic acid may include lower alkyl esters of the acids such as dimethyl terephthalate; monobasic acids such as benzoic acid, p-tertiary butyl benzoic acid, rosin, hydrogenated rosin; fats and fatty acids; macro monomers having one or two carboxyl groups at a molecular end; and 5 - sodium sulfo isophthalic acid and dimethyl esters thereof.

Examples of the compound having the hydroxyl group may include diols such as ethylene glycol, neopentyl glycol, propylene glycol, diethylene glycol, dipropylene glycol, 2-methyl-1,3-propanediol, 2,2-diethyl-1,3-propanediol, 1,4-butanediol, 1,3-propanediol, 1,6-hexanediol, 1,4-cyclohexanedimethanol, 1,5-pentanediol, alkylene oxide adduct of bisphenol A, hydrogenated bisphenol A, hydrogenated alkylene oxide adduct of bisphenol A, polyethylene glycol, polypropylene glycol, poly tetramethylene glycol; polyols such as glycerin, trimethylol propane, trimethylol ethane, di-glycerin, pentaerythritol, tris-hydroxyethyl isocyanurate; monoglycidyl compounds such as Cardura E-10 "(such as glycidyl esters of synthetic fatty acids manufactured by Shell Chemical Co., Ltd.), and macro-monomers having two hydroxyl groups at one molecular terminal.

Also, when the polyester is synthesized, hydroxyl-containing fatty acids or fats such as castor oil, or 12-hydroxystearic acid; and compounds having a hydroxyl group and a carboxyl group such as; dimethylolpropionic acid, p-hydroxybenzoic acid, and ε-caprolactone may be used.

Also, it is also possible to substitute a part of dibasic acids with a diisocyanate compound.

Further, the polyester having the carboxyl group may be prepared by the method of addition reaction of the polyester having a hydroxyl group with acid anhydride such as anhydride maleic anhydride, phthalic anhydride, tetrahydro phthalic anhydride, hexahydro phthalic anhydride, and trimellitic anhydride.

The polyester having the hydroxyl group and the carboxyl group may be easily prepared by performing the dehydration condensation reaction of the polyester resin according to known methods so that a carboxyl group and a hydroxyl group main remain.

For example, the polyester having a carboxyl group and a tertiary amino group may be easily prepared by using a compound having a hydroxyl group and a tertiary amino group such as triethanolamine, N-methyldiethanolamine, N,N-dimethylethanolamine as an alcohol component in the preparation of a polyester resin

For example, the polyester having a carboxyl group and a radical polymerizable unsaturated group may be easily prepared by [1] a method of addition reaction of a polyester having a carboxyl group and a hydroxyl group with radical polymerizable unsaturated group-containing monomers having an isocyanate group such as 2 - methacryloyloxyethyl isocyanate or acid anhydride having a radical polymerizable unsaturated group such as maleic anhydride, [2] a method of addition reaction of a polyester resin having a carboxyl group with polymerizable monomers having an epoxy group, and [3] a method of synthesizing a polyester resin by using radical polymerizable unsaturated group-containing monomers such as maleic anhydride as an acid component

The polyurethane is preferably prepared by the condensation reaction of a polyol component (for example, di

- isocyanate) with a polyol component (for example, diol).

For example, the polyurethane having a carboxyl group may be easily prepared by reacting a polyisocyanate component with a polyol component containing a compound having a hydroxyl group and a carboxyl group such as dimethylol propionic acid as a component for introducing a carboxyl group.

As the polyol component, in addition to the diol component described in the preparation method of the polyester, a polyol compound having three or more functional groups may be used if necessary.

As the polyisocyanate component, for example, besides a diisocyanate compound such as 2,4-tolylene diisocyanate, 2,6-tolylene diisocyanate, 4,4'-diphenylmethane diisocyanate, hexamethylene diisocyanate, phenylene diisocyanate, 1,5-naphthalene diisocyanate, metaxylylene diisocyanate, isophorone diisocyanate, hydrogenated tolylene diisocyanate, hydrogenated 4,4'-diphenylmethane diisocyanate, hydrogenated metaxylylene diisocyanate, and crude 4,4'-diphenylmethane diisocyanate, a polyisocyanate compound such as polymethylene polyphenyl isocyanate may be used.

Preparation of the polyurethane, may follow conventional methods. For example, it is preferable to carry out the addition reaction at a temperature of 40 to 100°C or at room temperature in an inert organic solvent solution which does not react with the isocyanate groups. At that time, a known catalyst such as dibutyltin dilaurate may be used.

In the reaction system at the time of preparing polyurethane, a known chain extender, for example, N-alkyl dialkanolamine such as diamine, polyamine, N-methyldiethanolamine; and a dihydrazide compound, may be used

For example, the polyurethane having a hydroxyl group and a carboxyl group may be easily prepared by reaction in a ratio where more hydroxyl groups than isocyanate groups are included in the preparation of polyurethane. Alternatively, the polyurethane may be easily prepared by addition reaction of polyisocyanate having a terminal isocyanate group and a carboxyl group with a compound having two or more hydroxyl groups in one molecule

For example, the polyurethane having a carboxyl group and a tertiary amino group, may be easily prepared by using N-alkyl-dialkanolamines such as N-methyl-diethanolamine as a part of the polyol component.

For example, the polyurethane having a carboxyl group and a blocked isocyanate group may be easily prepared by addition reaction of a polyisocyanate having a terminal isocyanate group and a carboxyl group, with a known block agent.

For example, the polyurethane having a carboxyl group and an epoxy group may be easily prepared by addition reaction of a polyisocyanate having a terminal isocyanate group and a carboxyl group, with a compound having an epoxy group and a hydroxyl group.

Examples of the compound having an epoxy group and a hydroxyl group may include, glycidol, glycerin diglycidyl ether, trimethylolpropane diglycidyl ether,diglycidyl ether of bisphenol A.

For example, the polyurethane having a carboxyl group as the acidic group with a radical polymerizable unsaturated group may be easily prepared by addition reaction of polyisocyanate having a terminal isocyanate group, with polymerizable monomers having a hydroxyl group as described above, and a compound having a radical polymerizable unsaturated group and a hydroxyl group such as glycerolmo(meth)acrylate, trimethylolpropanedi(meth)acrylate, pentaerythritol triacrylate

For example, polyurethane having a carboxyl group as the acidic group with a hydrolyzable alkoxysilane group may be easily prepared by addition reaction of polyisocyanate having a terminal isocyanate group, with a silane coupling agent having an active hydrogen capable of reacting with an isocyanate group such as γ-mercaptopropyl trimethoxysilane, γ-mercaptopropylmethyldimethoxysilane, γ-aminopropyltrimethoxysilane, and γ-aminopropyltriethoxysilane.

The polymer is chosen to fit in the liquid medium used in preparation of fine particle dispersion, and also to fit in a liquid vehicle in final composition (e.g., ink) used in fine particle dispersion. When the fine particle dispersion is used for a water-based ink for inkjet recording, the polymer is preferably hydrophilic.

[Molecular weight]

The weight average molecular weight of the dispersant preferably ranges from 10000 to 200000, and also preferably from 15000 to 150000, and further preferably from 20000 to 100000. The weight of 10000 or more is preferred because the image quality of printed matter is excellent, and meanwhile, the weight of 200000 or less is preferred because it may suppress the viscosity from being increased, and the storage stability from being lowered.

[D/P value]

The dispersant is preferably included in an amount of 20 parts by mass to 100 parts by mass based on 100 parts by mass of pigment, more preferably of 25 parts by mass to 90 parts by mass, and further more preferably of 30 parts by mass to 70 parts by mass. Also, dispersants may be used alone or in combination thereof.

When the dispersant is included in an amount of 20 parts by mass or less, the amount of dispersant is insufficient in the pigment, causing insufficiency of storage stability. Meanwhile, an amount of 100 parts by mass or more is not

suitable because the viscosity is increased and the storage stability is lowered.

When the content of colorant in the pigment dispersion is P, the content of dispersant is D, and the ratio of D and P is a D/P value, the D/P value preferably ranges from 0.15 to 1.0, more preferably from 0.16 to 0.8, and further more preferably from 0.17 to 0.7.

[Acid value]

The dispersant must have a sufficient acid value in cross-linking with a cross-linking agent, and preferably has an acid value of at least 50 mgKOH/g. It is more preferable that the dispersant is a water-soluble polymer dispersant, and the water-soluble polymer dispersant has at least one carboxyl group, and has an acid value of at least 50 mgKOH/g.

In all embodiments, the acid value preferably ranges from 70 mgKOH/g to 200 mgKOH/g, and more preferably from 70 mgKOH/g to 160 mgKOH/g. The dispersant having such an acid value may provide an improved storage stability.

Also, the value of lower than 50 mgKOH/g is not suitable because solubility in an aqueous solvent is low.

[Solubility]

The dispersant is water-soluble, and the solubility in water is preferably 1 g/100 mL or more, more preferably 3 g/100 mL or more, and particularly preferably 5 g/100 mL or more.

In the solubility of 1 g/(100 m)L or less, the dispersant is hardly adsorbed on pigment particles due to a low solubility in water, and thus, the dispersibility is lowered.

[Cross linking]

The water-based dispersion is cross-linked by the cross-linking agent.

In the preferred embodiment of the present invention, the dispersant is adsorbed on the pigment surface prior to cross-linking, thereby forming a relatively stable dispersion, and then, subsequently to this dispersion step, a cross-linking step using the cross-linking agent is performed so that a dispersion having a higher storage stability, and resulting in an excellent image quality of printed matter may be obtained.

When a dispersant having an acid value of at least 50 mg/KOH is used, the cross-linking agent may have or may not have an oligomeric dispersing group. The term of "oligomer" is used in the sense there is no upper limit to the molecular weight and also to the repeat units. The cross-linking agent having at least one oligomeric dispersing group increases the stability of generated fine particle dispersion. The increased stability is especially useful in liquid vehicle used for inkjet recording. This is because in the dispersant having an acid value of 50 mg/KOH or less, dispersion hardly occurs.

The oligomeric dispersing group is preferably polyalkylene oxide, more preferably poly $C_2$-$_4$-alkylene oxide, and particularly preferably polyethyleneoxide. The polyethylene oxide improves the stability of generated fine particle dispersion. The polyalkylene oxide has alkylene oxide repeating units preferably in a range of 3 to 200, more preferably 5 to 50, and particularly preferably of 5 to 20.

The cross-linking agent preferably has two or more epoxy groups. The preferred cross-linking agent having at least two epoxy groups is an epichlorohydrin derivative. Examples of a cross-linking agent that has two or more epoxy groups, and does not have an oligomeric dispersing group may include ethylene glycoldiglycidyl ether, resorcinoldiglycidyl ether, neopentyl glycol diglycidyl ether, 1,6-hexanediol diglycidyl ether, halogenated bisphenol A diglycidyl ether, trimethylolpropane polyglycidyl ether, polyglycerol polyglycidyl ether, glycerol polyglycidyl ether, pentaerythritol polyglycidyl ether, diglycerol polyglycidyl ether, sorbitol polyglycidyl ether, and polybutadiene diglycidyl ether. Examples of a preferred cross-linking agent that has two epoxy groups and at least one oligomeric dispersing group include diethylene glycoldiglycidyl ether, polyethylene glycoldiglycidyl ether, and dipropylene glycoldiglycidyl ether.

Further, acid anhydride such as phthalic anhydride, succinic anhydride, and the like, may be used as the cross-linking agent.

[Temperature, pH]

In the present invention, the cross-linking reaction is preferably performed at 100°C or less, and pH of 6 or more. The cross-linking reaction is performed more preferably at 30°C to 90°C, and more preferably at 40°C to 85°C.

The pH of the cross-linking reaction preferably ranges from 7 to 10, and more preferably from 8 to 9.5.

It is desirable that the cross-linking reaction of a carboxyl group with an epoxy group is at 100°C or less, and pH 6 of or more.

The cross-linking reaction is carried out in aqueous, the temperature is preferably 100°C or less. On the other hand, a low temperature is not preferred because the cross-linking reaction is slowly proceeded, and the temperature

is preferably 30°C or more, and more preferably 40°C or more.

At pH of 10 or more, when heat is applied in the cross-linking reaction, the polymer may be hydrolyzed. Meanwhile, pH of 6 or less is not preferred because the pigment dispersion may be easily aggregated, and thus become unstable.

[Membrane purification]

The membrane purification may use a reverse osmosis membrane (NF membrane), or an ultrafiltration membrane (UF membrane), and may be subjected or not be subjected to pressurization. But, pressurization is efficient because a time required for purification becomes short. The UF membrane preferably has MWCO of 10 000 to 150000, and more preferably of 20000 to 100000. MWCO of 10,000 or less is inefficient since the time for purification becomes long. On the other hand, MWCO of 200000 or more is not preferred because there is a possibility that the dispersant may flows out.

In the present invention, a method of preparing the water-based pigment dispersion is a method, in which the components (a) to (d) below are mixed to perform a cross-linking reaction.

(a) 30 parts to 99.7parts, preferably 50 parts to 90 parts of water
(b) 0.1 parts to 50 parts, preferably 1 part to 30 parts of pigment represented by Formula (1) or (2)
(c) 0.1 parts to 40 parts, preferably 1 part to 30 parts of vinyl polymer
(d) 0.00001 parts to 10 parts, preferably 0.0001 parts to 5 parts of cross-linking agent

In the above, "part" are by mass, and the sum of (a)+(b)+(c)+(d) is 100 parts by mass or less based on 100 parts by mass of the total weight of the pigment dispersion.

Also, the ratio of (b)/(c) = preferably ranges from 10/2 to 1/1, and the ratio of (c)/(d) preferably ranges from 100/1 to 5/1. Preferably, in the above method, the azo pigment, water, and vinyl polymer may be mixed at the same time or in any order. Then, remaining components are added to the mixture. Also, membrane purification is preferably performed.

In the mixing and dispersing, for example, a ball mill, a roll mill, a sand grinder mill, gravel mill, a high-pressure homogenizer, or a high-speed stirrer type dispersion machine may be used.

The pigment used in the present invention has an average primary particle diameter in a range preferably of 0.01 μm to 20 μm, more preferably of 0.01 μm to 5 μm, and further preferably of 0.02 μm to 0.5 μm. Among them, the diameter particularly preferably ranges from 0.02 μm to 0.2 μm, and most preferably from 0.03 μm to 0.15 μm.

In the pigment dispersion of the present invention, a pigment-adsorbed resin has an average particle diameter (Mv) in a range preferably of 20 to 250 nm, and more preferably from 40 to 100 nm. A diameter of less than 20 nm is not preferred because white-out occurs on printed matter due to small aprticles. A diameter of greater than 250 nm is not preferred because there is a concern of defect in discharge due to nozzle cloging, and also it is difficult to obtain a required concentration due to a decreased specific surface area of particles.

[Coloring Composition]

The coloring composition described herein contains the above azo pigment or at least one kind of a salt, a hydrate and a solvate of the azo pigment. The coloring composition may contain a medium, and is particularly suitable as an ink according to this invention for inkjet recording when a solvent is used as the medium. The coloring composition may be prepared by dispersing the pigment described herein in an aqueous medium used as the medium. In the coloring composition besides the medium, a composition for an ink is contained. If necessary, the coloring composition may contain other additives in a range not impairing the effects of the present invention. Other additives may be known additives (described in Japanese Patent Application Laid-Open No. 2003-306623) such as a drying preventing agent (wetting agent), a discoloration preventing agent, an emulsion stabilizer, a permeation promoting agent, a UV absorbent, a preservative, a mycostat, a pH adjusting agent, a surface tension regulator, an antifoaming agent, a viscosity regulator, a dispersant, a dispersion stabilizer, a rust inhibitor, and a chelating agent. These various additives are directly added to an ink liquid in the case of a water-soluble ink. In the case of an oil-soluble ink, the additives are generally added to the dispersion after preparation of the azo pigment dispersion, but may be added in an oil phase or an aqueous phase during the preparation.

Examples of an aqueous coloring liquid using the pigment dispersion obtained in the present invention may include a water paint for automobiles, coated steel, construction materials, or cans; a textile printing agent for dyeing textiles; a water ink such as a gravure ink, or a flexographic ink; an ink for writing instruments such as a water-based ball pen, a fountain pen, a water-based sign pen, and a water-based marker; an aqueous recording liquid for an on-demand type of inkjet printer used for a bubble jet (registered trademark) method, a thermal jet method, or a piezo

method; and a dispersion liquid for color filters used for an LCD TV, or a laptop type personal computer, but are not limited to these applications. Subject-matter of this invention is the aqueous coloring liquid in the form of an ink for inkjet recording comprising the water-based pigment dispersion.

The aqueous coloring liquid is prepared by mixing the pigment dispersion obtained in the present invention with a coating film-forming resin, a curing agent, various kinds of auxiliary agents, an organic solvent, water, a basic material, or various kinds of pigments which are conveniently selected according to application.

The pigment dispersion obtained in the present invention is contained in the aqueous coloring liquid in a ratio within a range preferably of 50% by mass or less based on the pigment, and particularly preferably of 0.1% by mass to 40% by mass. When the ratio of the pigment is greater than 50% by mass, viscosity in the aqueous coloring liquid is increased, resulting in a tendency that an object to be coated may not be colored.

Examples of the coating film-forming resin may include a native protein such as glue, gelatin, casein, albumin, gum arabic, and fish glue; a synthetic polymer such as alginic acid, methylcellulose, carboxy methylcellulose, polyethyleneoxide, hydroxyethylcellulose, polyvinylalcohol, polyacrylamide, aromaticamide, polyacrylic acid, polyvinylether, polyvinylpyrrolidone, acryl, polyester, alkyd, urethane, amide resin, melamine resin, ether resin, fluorine resin, styrene acrylic resin, and styrene maleic acid resin; and a common resin such as photosensitive resin, thermosetting resin, UV curable resin, and electron beam curable resin, but are not particularly limited thereto. Also, these are selectively used according to the use of an aqueous coloring liquid.

The ratio of the coating film-forming resin in the aqueous coloring liquid preferably ranges from 0% by mass to 50% by mass. Depending on the application, the resin used in the pigment dispersion may act as a resin for coating film, or there is an application as, for example, a recording liquid in which a resin for coating film formation is not necessary. Thus, the coating film-forming resin is not necessarily required in the aqueous coloring liquid.

Examples of the curing agent of the coating film-forming resin may include an amino resin such as melamine resin, benzoguanamine resin, and urea resin; a phenolic resin such as trimethylol phenol, and a condensation product thereof; polyisocyanate such as tetramethylenediisocyanate (TDI), diphenylmethane diisocyanate (MDI), hexamethylenediisocyanate (HDI), naphthalenediisocyanate (NDI), isophorone diisocyanate (IPDI), xylylenediisocyanate (XDI), and modified isocyanates or blocked isocyanates thereof; amines such as aliphatic amine, aromatic amine, N-methylpiperazine, triethanolamine, morpholine, dialkylaminoethanol, and benzyldimethylamine; acid anhydride such as polycarboxylic acid, phthalic anhydride, maleic anhydride, hexahydro phthalic anhydride, pyromellitic anhydride, benzophenone tetracarboxylic acid anhydride, and ethylene glycol bis-trimellitate; an epoxy compound such as bisphenol A type epoxy resin, phenolic epoxy resin, glycidyl methacrylate copolymer, glycidyl ester resin of carboxylic acid, and alicyclic epoxy; alcohols such as polyether polyol, polybutadiene glycol, polycaprolactone polyol and trishydroxyethyl isocyanate (THEIC); a polyvinyl compound or a polyallyl compound as an unsaturated group-containing compound used in UV curing, electron beam curing or radical curing with peroxide; and a vinyl compound such as a reaction product of polyol or glycol with acrylic acid or methacrylic acid.

The curing agent is appropriately selected and used depending on the suitability and use, and may not be used. The ratio of the curing agent to be used, based on 100% by mass of the coating film-forming resin, is preferably in the range of 0% by mass to 50% by mass, and particularly preferably of 0% by mass to 40% by mass.

Examples of the organic solvent may include alcohols such as methyl alcohol, ethyl alcohol, n-butyl alcohol, isobutyl alcohol, tert-butyl alcohol, n-propyl alcohol and isopropyl alcohol; amides such as dimethylformaldehyde, and dimethylacetamide; ketones such as acetone and methylethylketone; ethers such as tetrahydrofuran, dioxane, ethylene glycol methyl ether, ethylene glycol ethyl ether, diethylene glycol methyl ether, diethylene glycol ethyl ether, triethylene glycol monomethyl ether, triethylene glycol monoethyl ether; polyhydric alcohols such as ethylene glycol, propylene glycol, butylene glycol, triethylene glycol, 1,2,6-hexane triol, thiodiglycol, diethylene glycol, polyethylene glycol, polypropylene glycol and glycerin; N-methyl-pyrrolidone, and 1,3-dimethyl-2-imidazolidinone. Among the water-soluble organic solvents, polyhydric alcohols and ethers are preferred.

The ratio of the organic solvent included in the aqueous coloring liquid is preferably 50% by mass or less, and particularly preferably ranges from 0% by mass to 30% by mass. In particular, preferably, if there is no case where the performance of the aqueous coloring liquid is poor, it is needless to say that the solvent is never included in terms of environmental issues.

Examples of the auxiliary agent used as necessary may include various kinds of stabilizers and auxiliary materials such as a dispersing wetting agent, an anti-skinning agent, a UV absorbent, an antioxidant, a preservative, a fungicide, a pH adjusting agent, a viscosity regulator, a chelating agent, and a surfactant, but are not limited thereto. Examples of the basic substance may include an inorganic compound such as sodium hydroxide and potassium hydroxide; and an organic amine compound such as ethanolamine, diethanolamine, triethanolamine, N-methyl ethanolamine, N-ethyl diethanolamine, 2 - amino-2 - methylpropanol, 2-ethyl-2-amino-1,3-propanediol, 2-(aminoethyl) ethanolamine, tris (hydroxymethyl) aminomethane, ammonia, piperidine and morpholine, but are not limited thereto.

As the dispersing machine for dispersing the pigment dispersion of the present invention in the aqueous coloring liquid, a known simple dispersing machine such as dspar is sufficient, but is not limited thereto.

The aqueous coloring liquid may be prepared by simply adding the pigment dispersion with a coating film-forming resin, an effective agent, various kinds of auxiliary agents, an organic solvent, water, or various kinds of pigment compositions, followed by stirring and mixing. However, in a case of adding an organic solvent or a resin with high viscosity, it is more preferable that the pigment dispersion is stirred, and therein, the resin or the effective agent, the organic solvent, and various kinds of auxiliary agents are sequentially added.

The aqueous coloring liquid containing the pigment dispersion obtained in the present invention may be prepared according to its application. Also, it is possible to provide performances required for an aqueous coloring liquid such as storage stability, solvent stability or hydrophilicity capable of suppressing nozzle clogging at a pen tip of a writing instrument, and performances of a coating film which is excellent in various sutabilities such as water-resistance, weather-resistance, transparency or clearness.

[Ink for inkjet recording]

In an ink (composition) for inkjet recording in which the pigment dispersion of the present invention is employed, an average particle diameter(Mv) of a pigment-adsorbed resin preferably ranges from 20 to 250 nm, and more preferably from 20 to 100 nm. When the average particle diameter of the pigment-adsorbed resin is 20 nm or more, dispersion stability is improved, and thus it is possible to achieve a good storage stability or discharge stability, and also a high OD value of a recorded matter may be secured. Also, when the average particle diameter of the pigment-adsorbed resin is 250 nm or less, it is possible to suppress nozzle clogging, and also suppress the pigment-adsorbed resin from precipitating.

The ink composition for inkjet recording is prepared by the pigment dispersion, and based on the total amount of the ink composition, the pigment is included in an amount in a \ range of 2% by mass to 15% by mass. When the amount of the pigment is 2% by mass, a high OD value of a recorded matter may be achieved. Also, when the amount of the pigment is 15% by mass or less, it is easy to fit to an appropriate inkjet property value, and to ensure a better storage stability or discharge stability.

Also, as the solvent in the ink composition for inkjet recording, an organic solvent may be used in combination with water. Such an organic solvent is preferably compatible with water, enhances permeation of the ink composition into the recording medium, and suppress nozzle clogging, and increases the solubility of components in the ink composition such as a permeating agent described below. Examples thereof may include alkyl alcohols having 1 to 4 carbons such as ethanol, methanol, butanol, propanol, and isopropanol, glycol ethers such as ethylene glycolmonomethylether, ethylene glycolmonoethylether, ethylene glycolmonobutylether, ethylene glycolmonomethyletheracetate, diethylene glycolmonomethylether, diethylene glycolmonoethylether, diethylene glycolmononpropylether, ethylene glycolmono-iso-propylether, diethylene glycolmono-iso-propylether, ethylene glycolmono-n-butylether, ethylene glycolmono-t-butylether, diethylene glycolmono-t-butylether, 1-methyl-1-methoxybutanol, propylene glycolmonomethylether, propylene glycolmonoethylether, propylene glycolmono-n-propylether, and dipropylene glycolmono-iso-propylether; 2-pyrrolidone, formamide, acetamide, dimethylsulfoxide, sorbitol, sorbitan, acetin, diacetin, triacetin, and sulfolane. One kind or two or more kinds of these may be preferably used in an amount of 0 to 10% by mass in the ink composition of the present invention.

In terms of improving printing quality, it is preferable that the ink composition for inkjet recording contains a surfactant. The surfactant may be selected from commonly used surfactants such as anionic surfactants, cationic surfactants, amphoteric surfactants and nonionic surfactants, and among them, a nonionic surfactant is particularly preferred. Specific examples of the nonionic surfactant may include acetylene glycol-based surfactant, acetylenealcohol-based surfactant, polyoxyethylenealkylether, and polyoxyethylenephenylether, and by using these, it is possible to obtain an ink composition with low foaming property as compared to an ionic surfactant. Also, among the nonionic surfactants, an acetyleneglycol-based surfactant is particularly preferred in a case of being used inkjet recording because an ink composition in which foaming hardly occurs may be obtained. Examples of such an acetylene glycol-based surfactant may include 2,4,7,9-tetramethyl-5-decyn-4,7-diol, 3,6-dimethyl-4-octyn-3,6-diol, 3,5-dimethyl-l-hexyn-3-ol, and substances formed by adding an average 1 to 30 ethyleneoxy groups or propylene oxy groups to a plurality of hydroxyl groups in each of the above substances. Also, as the acetylene glycol-based surfactant, a commercially available product may be used, and examples thereof may include "Olfin E1010" and "Olfin STG" (both manufactured by Nisshin Chemical Industry Co., Ltd). One kind or two or more kinds of these may be used. The acetylene glycol-based surfactant is preferably included in an amount of 0.1% by mass to 3% by mass in the ink composition of the present invention, and more preferably of 0.5% by mass to 1.5% by mass.

It is preferable that the ink composition for inkjet recording preferably contains a permeating agent in order to further improve fixedness to the recording medium, and enhance abrasion resistance of the recording image. As such a permeating agent, glycolethers such as diethylene glycolmono-n-butylether, diethylene glycolmono-t-butylether, triethylene glycolmono-n-butylether, propylene glycolmono-n-butylether, and dipropylene glycolmono-n-butylether are preferable, and diethylene glycolmono-n-butylether, truethylene glycolmono-n-butylether, and dipropylene glycolmono-n-butylether are particularly preferable in terms of the excellent permeation performance and the easiness in handling.

The permeating agent is preferably included in an amount of 1% by mass to 20% by mass, and further more preferably of 2% by mass to 10% by mass in the ink composition of the present invention in terms of improving the permeation and drying speed of the ink composition, and thereby effectively preventing the ink from bleeding.

It is preferable that the ink composition for inkjet recording contains water-soluble glycols in order to further improve reliability by preventing nozzle clogging. Examples of such water-soluble glycols may include dihydric alcohols such as ethylene glycol, diethylene glycol, triethylene glycol, tetraethylene glycol, propylene glycol, dipropylene glycol, tripropylene glycol, polyethylene glycol with a molecular weight of 2000 or less, 1,3-propylene glycol, isobutylene glycol, 1,4-butanediol, 1,3-butanediol, 1,5-pentanediol, 1,2-hexanediol, and 1,6-hexanediol, trihydric and higher alcohols such as glycerin, mesoerythritol, and pentaerythritol, and the like. One kind or two or more kinds of these may be used. The water-soluble glycols are preferably included in an amount of 1% by mass to 30% by mass in the ink composition of the present invention.

Also, the ink composition for inkjet recording may contain a mycostat or a preservative in order to suppress nozzle clogging, as with the water-soluble glycols. Examples thereof may include sodium benzoate, pentachlorophenol sodium, 2-pyridinethiol-1-oxide sodium, sodium sorbate, sodium dehydroacetate, and 1,2-dibenzisothiazolin-3-one (Proxel CRL, Proxel BDN, Proxel GXL, Proxel XL-2, and Proxel TN of AVECIA), and one kind or two or more kinds of these may be preferably used in an amount of 0.01% by mass to 0.5% by mass in the ink composition of the present invention.

In the ink composition for inkjet recording, from the viewpoints of improvement of printing concentration, and liquid stability, pH preferably ranges from 6 to 11, and more preferably from 7 to 10. In order that pH of the ink composition is within the above range, as the pH adjusting agent, inorganic alkalis such as sodium hydroxide, potassium hydroxide, and lithium hydroxide, or tertiary amines of 6 to 10 carbon atoms such as ammonia, triethanolamine, ethyldiethanolamine, diethylethanolamine, and tripropanolamine may be preferably included. One kind or two or more kinds of pH adjusting agent may be preferably used in an amount of 0.01% by mass to 2% by mass in the ink composition of the present invention.

The inkjet recording method using the ink of the present invention may employ any method as long as it allows an ink to be discharged from a fine nozzle as droplets, and the droplets to be attached on a recording medium.

Among them, several things will be described. First, there is an electrostatic attraction method. In this method, an intense electric field is applied between a nozzle and acceleration electrodes in front of the nozzle, and the nozzle continuously jets droplets of an ink, and while the ink drops are flying between the flying deflecting electrodes, recording is performed by providing printing information signals to the deflecting electrodes. Alternately, there is another method, in which ink drops are jetted correspondingly to printing information signals without deflection.

A second method is a method for forcedly jetting ink drops by applying pressure to an ink liquid via a small pump and mechanically vibrating nozzle by crystal resonator or the like. Jetted ink drops are electrostatically charged at the same time they are jetted, and then while the ink drops are flying between deflecting electrodes, printing information signals are provided to the deflecting electrodes so as to perform recording.

A third method is a method that uses an piezoelectric element, in which an ink is applied simultaneously with printing information signals and pressure by the piezoelectric element, and thereby ink drops are jetted and recorded.

A fourth method is for rapidly volumetrically expanding an ink by action of thermal energy, in which the ink is heat-foamed by a micro-electrode according to printing information signals, thereby ink drops are jetted/recorded.

Any method above may be used for an inkjet recording method using the ink composition. When the ink composition for inkjet recording of the present invention is employed, it is possible to achieve excellence in discharge stability and nozzle clogging by any inkjet recording method.

The recorded matter is obtained by performing inkjet recording using at least the ink composition. For the recorded matter, the ink composition of the present invention is used, and thus fixedness of an ink, especially, a pigment in an ink is improved, and images such as characters or figures excellent in concentration, scratch resistance, and glossiness may be formed.

Example

Hereinafter, the present invention will be described in more detail based on Synthesis Examples, Examples, and Examples, but is not limited these Examples at all. Also, in Examples, "parts" refers to parts by mass.

[Synthesis Example (1)-1]

An azo pigment (1)-1 of Formula (1) which has $\alpha$ type crystal form was synthesized by the method described in Japanese Patent Application Laid-Open No. 2010-159405. The longitudinal direction length of primary particles of the obtained azo pigment (1)-1 was about 0.2 $\mu$m. A view of CuK$\alpha$ characteristic X-ray diffraction of the obtained azo pigment (1)-1 is illustrated in FIG. 1.

[Synthesis Example (1)-2]

An azo pigment (1)-2 of Formula (1) which has β type crystal form was synthesized by the method described in Japanese Patent Application Laid-Open No. 2010-138232. The longitudinal direction length of primary particles of the obtained azo pigment (1)-2 was about 10 μm. A view of CuKα characteristic X-ray diffraction of the obtained azo pigment (1)-2 is illustrated in FIG. 2.

[Synthesis Example (1)-3]

An azo pigment (1)-3 of Formula (1) which has γ type crystal form was synthesized by the method described in Japanese Patent Application Laid-Open No. 2011-127042. The longitudinal direction length of primary particles of the obtained azo pigment (1)-3 was about 0.3 μm. A view of CuKα characteristic X-ray diffraction of the obtained azo pigment (1)-3 is illustrated in FIG. 3.

[Synthesis Example (1)-4]

The azo pigment (1)-1 obtained in Synthesis Example (1)-1 was subjected to salt milling, so as to obtain an azo pigment (1)-4 that has primary particles with a longitudinal direction length of 0.03 μm was obtained. The X-ray diffraction of the obtained azo pigment (1)-4 was measured by the above conditions, and characteristic X-ray diffraction peaks were observed at Bragg angles (2θ±0.2°) of 7.2°, 13.4°, 15.0° and 25.9°. A view of CuKα characteristic X-ray diffraction of the obtained azo pigment (1)-4 is illustrated in FIG. 4.

[Synthesis Example (1)-5]

The azo pigment (1)-1 obtained in Synthesis Example (1)-1 was subjected to salt milling, so as to obtain azo pigments (1)-5 and (1)-6 in (1)-α type crystal form, in which in the azo pigments (1)-5 and (1)-6, longitudinal direction lengths of primary particles were 0.08 μm, and 0.15 μm, respectively.

(Synthesis of Dispersant)

[Synthesis Example (1)-6]

Under a nitrogen atmosphere, dipropylene glycol 58.7 g was heated to inside temperature of 70°C, and thereto, a solution obtained by mixing methacrylic acid 10.8 g, benzyl methacrylate 39.4 g, V-601 1.2 g, and dipropylene glycol 58.7 g was added dropwise over 3 hours. At the same temperature, after further stirring for 1 hour, V-601 0.6 g (polymerization initiator: manufactured by Wako Pure Chemical Industries, Ltd) was added thereto, followed by further stirring at the same temperature for 2 hours. At the same temperature, 11.3 g of 50% potassium hydroxide aqueous solution was added dropwise thereto, followed by stirring for 1 hour at the same temperature. After cooling to room temperature, a dipropylene glycol solution of the copolymer (Mw=83,000, acid value 140 mgKOH) of benzyl methacrylate (66.7 mol%) and methacrylic acid (33.3 mol%) was obtained.

[Synthesis Example (1)-7]

A dipropylene glycol solution of the copolymer (Mw=25,000, acid value 128 mgKOH) of benzyl methacrylate (66.7 mol%) and methacrylic acid (33.3 mol%) was obtained by the same operation as in Synthesis Example (1)-6 except that an amount of V-601 was increased from 1.2 g to 2.5 g, and the temperature was 86°C.

[Synthesis Example (1)-8]

A dipropylene glycol solution of the copolymer (Mw=31,000, acid value 106 mgKOH) of benzyl methacrylate (70.2 mol%) and methacrylic acid (29.8 mol%) was obtained by the same operation as in Synthesis Example (1)-6 except that an amount of methacrylic acid was 9.0 g, an amount of benzyl methacrylate was 43.3 g, and an amount of V-601 was increased from 1.2 g to 2.5 g, and the temperature was 86°C.

[Synthesis Example (1)-9]

A dipropylene glycol solution of the copolymer (Mw=36,000, acid value 81 mgKOH) of benzyl methacrylate (76.7 mol%) and methacrylic acid (23.3 mol%) was obtained by the same operation as in Synthesis Example (1)-6 except

that an amount of methacrylic acid was 7.0 g, an amount of benzyl methacrylate was 47.3 g, and an amount of V-601 was increased from 1.2 g to 2.5 g, and the temperature was 86°C.

[Synthesis Example (1)-10]

A dipropylene glycol solution of the copolymer (Mw=41,000, acid value 135 mgKOH) of benzyl methacrylate (66.7 mol%) and methacrylic acid (33.3 mol%) was obtained by the same operation as in Synthesis Example (1)-6 except that an amount of V-601 was increased from 1.2 g to 2.5 g.

[Synthesis Example (1)-11]

A dipropylene glycol solution of the copolymer (Mw=61,000, acid value 136 mgKOH) of benzyl methacrylate (66.7 mol%) and methacrylic acid (33.3 mol%) was obtained by the same operation as in Synthesis Example (1)-6 except that an amount of V-601 was increased from 1.2g to 1.7 g.

[Synthesis Example (1)-12]

A dipropylene glycol solution of the copolymer (Mw=83,000, acid value 195 mgKOH) of benzyl methacrylate (52.4 mol%) and methacrylic acid (47.6 mol%) was obtained by the same operation as in Synthesis Example (1)-6 except that an amount of methacrylic acid was 14.3 g, and an amount of benzyl methacrylate was 32.3 g.

[Synthesis Example (1)-13]

A dipropylene glycol solution of the copolymer (Mw=150,000, acid value 142 mgKOH) of benzyl methacrylate (66.7 mol%) and methacrylic acid (33.3 mol%) was obtained by the same operation as in Synthesis Example (1)-6 except that an amount of V-601 was decreased from 1.2 g to 0.8 g.

[Synthesis Example (1)-14]

A dipropylene glycol solution of the copolymer (Mw=15,000, acid value 123 mgKOH) of benzyl methacrylate (66.7 mol%) and methacrylic acid (33.3 mol%) was obtained by the same operation as in Synthesis Example (1)-6 except that an amount of V-601 was increased from 1.2 g to 3.5 g, and the temperature was 86°C.

[Synthesis Example (1)-15]

A dipropylene glycol solution of the copolymer (Mw=56,000, acid value 343 mgKOH) of benzyl methacrylate (28.8 mol%) and methacrylic acid (71.2 mol%) was obtained by the same operation as in Synthesis Example (1)-6 except that an amount of methacrylic acid was 21.5 g, an amount of benzyl methacrylate was 17.8 g, and an amount of V-601 was increased from 1.2 g to 1.8 g.

[Synthesis Example (1)-16]

A dipropylene glycol solution of the copolymer (Mw=83,000, acid value 27 mgKOH) of benzyl methacrylate (91.6 mol%) and methacrylic acid (8.4 mol%) was obtained by the same operation as in Synthesis Example (1)-6 except that an amount of methacrylic acid was 2.5 g, and an amount of benzyl methacrylate was 56.5 g.

[Synthesis Example (1)-17]

Under a nitrogen atmosphere, dipropylene glycol 41.1 g was heated to inside temperature of 70°C, and thereto, a solution obtained by mixing methacrylic acid 9.6 g, methyl methacrylate 16.8 g, 2-ethylhexyl methacrylate 8.9 g, V-601 2.5 g, and dipropylene glycol 41.1 g was added dropwise over 3 hours. Other operations were performed in the same manner as in Synthesis Example (1)-6 so as to obtain a dipropylene glycol solution of the copolymer (Mw=83,000, acid value 154 mgKOH) of methyl methacrylate (47.8 mol%), methacrylic acid (31.8 mol%), and 2-ethylhexyl methacrylate (20.4 mol%).

[Example (1)-1]

Example (1)-1

80.0 g of the azo pigment powder (1)-4 was mixed with 68.1 g of dispersant (a dipropylene glycol solution of the copolymer of methyl methacrylate (47.8 mol%), methacrylic acid (31.8 mol%), and 2-ethylhexyl methacrylate (20.4 mol%), Mw=83,000, acid value 154 mgKOH) (solid content 35.2%, solids 24.0 g), and water 251.8 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 14 hours at 4200 rpm using MiniCer (manufactured by Netzch) formed with recirculation, and washed with water to provide 457 g of a crude pigment dispersion liquid (1)-1 with a pigment concentration of 15.6 wt%.

The obtained crude pigment dispersion liquid (1)-1 457 g was added with Denacol EX-321 (manufactured by Nagase Chemtex Co., Ltd.) 0.9 g, 6.18% boric acid aqueous solution 6.4 g, and water 230 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000, and sufficient washing with water, 520 g of a pigment dispersion liquid (1)-1 with a pigment concentration of 9.9% was obtained. Viscosity: 2.9 mPa·S.

Example (1)-2

80.0 of the azo pigment powder (1)-4 was mixed with 68.1 g of dispersant (a dipropylene glycol solution of the copolymer of methyl methacrylate (47.8 mol%), methacrylic acid (31.8 mol%), and 2-ethylhexyl methacrylate (20.4 mol%), Mw=83,000, acid value 154 mgKOH) (solid content 35.2%, solids 24.0 g), and water 251.8 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 14 hours at 4200 rpm using MiniCer (manufactured by Netzch) formed with recirculation, and washed with water to provide 457 g of a crude pigment dispersion liquid (1)-2 with a pigment concentration of 15.6wt%.

The obtained crude pigment dispersion liquid (1)-2 457 g was added with Denacol EX-321 (manufactured by Nagase Chemtex Co., Ltd.) 0.4 g, 6.18% boric acid aqueous solution 3.2 g, and water 230 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight of 50,000, and sufficient washing with water, 510 g of a pigment dispersion liquid (1)-2 with a pigment concentration of 9.8% was obtained. Viscosity: 2.9 mPa·S.

Example (1)-3

160.0 g of the azo pigment powder (1)-4 was mixed with 266.7g of dispersant (a dipropylene glycol solution of the copolymer of methyl methacrylate (47.8 mol%), methacrylic acid (31.8 mol%), and 2-ethylhexyl methacrylate (20.4 mol%), Mw=25,000, acid value 138 mgKOH) (solid content 30%, solids 80.0 g), and water 373.4 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 7 hours at 4200 rpm using MiniCer (manufactured by Netzch) formed with recirculation, and washed with water to provide 950 g of a crude pigment dispersion liquid (1)-3 with a pigment concentration of 15.5 wt%.

The obtained crude pigment dispersion liquid (1)-3 475 g was added with Denacol EX-321 (manufactured by Nagase Chemtex Co., Ltd.) 1.5 g, 6.18% boric acid aqueous solution 11.0 g, and water 230g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000, and sufficient washing with water, 620g of a pigment dispersion liquid (1)-3 with a pigment concentration of 9.9% was obtained. Viscosity: 1.7 mPa·S.

Example (1)-4

The crude pigment dispersion liquid (1)-3 475 g was added with Denacol EX-321 (manufactured by Nagase Chemtex Co., Ltd.) 0.8g, 6.18% boric acid aqueous solution 5.5g, and water 230g, followed by stirring at 70°C for 5hours. After the reaction was completed, the resultant product was cooled to room temperature, and passed through a filter

with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficiently washing with water, 610g of a pigment dispersion liquid (1)-4 with a pigment concentration of 9.9% was obtained. Viscosity: 2.0mPa·S.

Example (1)-5

80.0 g of the azo pigment powder (1)-4 was mixed with 266.7 g of dispersant (a dipropylene glycol solution of the copolymer of methyl methacrylate (47.8 mol%), methacrylic acid (31.8 mol%), and 2-ethylhexyl methacrylate (20.4 mol%), Mw=83,000, acid value 154 mgKOH) (solid content 35.2%, solids 40.0g), and water 206.4 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 7 hours at 4200 rpm using MiniCer (manufactured by Netzch) formed with recirculation, and washed with water to provide 770 g of a crude pigment dispersion liquid (1)-4 with a pigment concentration of 8.7 wt%.

The obtained crude pigment dispersion liquid (1)-4 770 g was added with Denacol EX-321 (manufactured by Nagase Chemtex Co., Ltd.) 0.7g, and 6.18% boric acid aqueous solution 5.0g, followed by stirring at 70°C for 5hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 710g of a pigment dispersion liquid (1)-5 with a pigment concentration of 9.0% was obtained. Viscosity: 2.8mPa·S.

Example (1)-6

80.0 g of the azo pigment powder (1)-4 was mixed with 85.8 g of dispersant (a dipropylene glycol solution of the copolymer of methyl methacrylate (47.8 mol%), methacrylic acid (31.8 mol%), and 2-ethylhexyl methacrylate (20.4 mol%), Mw=25,000, acid value 138 mgKOH) (solid content 30%, solids 24.0 g), and water 234.9 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 12 hours at 4200 rpm using MiniCer (manufactured by Netzch) formed with recirculation, and washed with water to provide 469 g of a crude pigment dispersion liquid (1)-5 with a pigment concentration of 14.5 wt%.

The obtained crude pigment dispersion liquid (1)-5 469 g was added with Denacol EX-321 (manufactured by Nagase Chemtex Co., Ltd.) 0.9g, 6.18% boric acid aqueous solution 6.1g, and water 180g, followed by stirring at 70°C for 5hours. After the reaction was completed, the resultant product was cooled to room temperature, and passed through a filter with a pore diameter of 1.0μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 590g of a pigment dispersion liquid (1)-6 with a pigment concentration of 9.2% was obtained. Viscosity: 1.6 mPa·S.

Example (1)-7

90.0 g of the azo pigment powder (1)-4 was mixed with 225.0 g of dispersant (a dipropylene glycol solution of the copolymer of benzyl methacrylate (70.2 mol%), and methacrylic acid (29.8 mol%), Mw=31,000, acid value 106 mgKOH) (solid content 20.0%, solids 45.0 g), and water 94.1 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 3 hours at 4200 rpm using MiniCer (manufactured by Netzch) with recirculation, and washed with water to provide 518 g of a crude pigment dispersion liquid (1)-6 with a pigment concentration of 12.7 wt% (average volume particle diameter Mv=88.3 nm).

The obtained crude pigment dispersion liquid (1)-6 518 g was added with Denacol EX-321 (manufactured by Nagase Chemtex Co., Ltd.) 0.7g, 6.18% boric acid aqueous solution 4.9g, and water 140 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 620g of a pigment dispersion liquid (1)-7 with a pigment concentration of 9.9% was obtained. Viscosity: 1.8 mPa·S.

Example (1)-8

110.0 g of the azo pigment powder (1)-4 was mixed with 220 g of dispersant (a dipropylene glycol solution of the copolymer of benzyl methacrylate (76.7 mol%) and methacrylic acid (23.3 mol%), Mw=36,000, acid value 81 mgKOH) (solid content 25.0%, solids55.0 g), and water 170 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 3 hours at 4200 rpm using MiniCer (manufactured by Netzch) formed with recirculation, and washed with water to provide 583 g of a crude pigment dispersion liquid (1)- 7 with a pigment concentration of 13.2 wt% (average volume particle diameter Mv=89.5 nm).

The obtained crude pigment dispersion liquid (1)-7 583 g was added with Denacol EX-321 (manufactured by Nagase Chemtex Co., Ltd.) 0.8 g, 6.18% boric acid aqueous solution 5.8 g, and water 180 g, followed by stirring at 70°C for 5hours. After the reaction was completed, the resultant product was cooled to room temperature, and passed through a filter with a pore diameter of 1.0μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 560g of a pigment dispersion liquid (1)-8 with a pigment concentration of 11.0% was obtained. Viscosity: 2.4 mPa·S.

Example (1)-9

80.0 g of the azo pigment powder (1)-4 was mixed with 129.8 g of dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 40.0 g), and water 190.2 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 5hours at 4200 rpm using MiniCer (manufactured by Netzch) formed with recirculation, and washed with water to provide 518 g of a crude pigment dispersion liquid (1)-8 with a pigment concentration of 12.0 wt%.

The obtained crude pigment dispersion liquid (1)-8 518 g was added with Denacol EX-321 (manufactured by Nagase Chemtex Co., Ltd.) 1.3 g, and 6.18% boric acid aqueous solution 9.4 g, followed by stirring at 70°C for 5hours. After the reaction was completed, the resultant product was cooled to room temperature, and passed through a filter with a pore diameter of 1.0μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 580 g of a pigment dispersion liquid (1)-9 with a pigment concentration of 9.9% was obtained. Viscosity: 2.5 mPa·S.

Example (1)-10

158.4 g of the azo pigment powder (1)-4 was mixed with 257.1 g of the dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 79.2 g), and water 450 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 8 hours at 4200 rpm using MiniCer (manufactured by Netzch) filled with 0.2 to 0.3 mmφ beads made of polystyrene formed with recirculation, and washed with water to provide 740 g of a crude pigment dispersion liquid (1)-9 with a pigment concentration of 14.9 wt% (average volume particle diameter Mv=90.8 nm).

The obtained crude pigment dispersion liquid (1)-9 740 g was added with water 300 g, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 950 g of a pigment dispersion liquid (1)-10 with a pigment concentration of 10.3% was obtained. Viscosity: 2.6 mPa·S.

Example (1)-11

90.0 g of the azo pigment powder (1)-4 was mixed with 128.6 g of the dispersant obtained in Synthesis Example (1)-7 (a dipropylene glycol solution of the copolymer of benzyl methacrylate (66.7 mol%) and methacrylic acid (33.3 mol%), Mw=25,000, acid value 128 mgKOH) (solid content 35%, solids 45.0 g), and water 260 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 7 hours at 4200 rpm using MiniCer (manufactured by Netzch) filled with 0.2 to 0.3 mmφ beads made of polystyrene formed with recirculation, and washed with water to provide 520 g of a crude pigment dispersion liquid (1)-10 with a pigment concentration of 14.2 wt% (average volume particle diameter Mv=91.9 nm).

The obtained crude pigment dispersion liquid (1)-10 520 g was added with water 150g and passed through a filter with a pore diameter of 1.0μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 650 g of a pigment dispersion liquid (1)-11 with a pigment concentration of 10.3% was obtained. Viscosity: 2.7 mPa·S.

Example (1)-12

120.0 g of the azo pigment powder (1)-4 was mixed with 194.8 g of the dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 60.0 g), and water 300 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 12 hours at 4200 rpm using MiniCer (manufactured by Netzch) filled with 0.2 to 0.3 mmφ beads made of polystyrene formed with recirculation, and washed with water to provide 750 g of a crude pigment dispersion liquid (1)- 11 with a pigment concentration of 13.9 wt% (average volume particle diameter Mv=92.6 nm).

The obtained crude pigment dispersion liquid (1)-11 225 g was added with Denacol EX-321 (manufactured by Nagase Chemtex Co., Ltd.) 0.3 g, 6.18% boric acid aqueous solution 2.3 g, and water 60 g followed by stirring at 70°C for 5hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 270 g of a pigment dispersion liquid (1)-12 with a pigment concentration of 10.6% was obtained. Viscosity: 2.5 mPa·S.

Example (1)-13

The crude pigment dispersion liquid (1)-11 233 g was added with Denacol EX-321 (manufactured by Nagase Chemtex Co., Ltd.) 2.0 g, 6.18% boric acid aqueous solution 14.3 g, and water 60 g followed by stirring at 70°C for 5 hours. After the reaction was completed, the resultant product was cooled to room temperature, and passed through a filter with a pore diameter of 1.0μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 310 g of a pigment dispersion liquid (1)-13 with a pigment concentration of 9.4% was obtained. Viscosity: 2.7 mPa·S.

Example (1)-14

The crude pigment dispersion liquid (1)-11 292 g was added with Denacol EX-521 (manufactured by Nagase Chemtex Co., Ltd.) 3.0 g, 6.18% boric acid aqueous solution 13.9 g, and water 50g followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 340 g of a pigment dispersion liquid (1)-14 with a pigment concentration of 10.3% was obtained. Viscosity: 2.8 mPa·S.

Example (1)-15

90.0 g of the azo pigment powder (1)-4 was mixed with 150 g of the dispersant obtained in Synthesis Example (1)-11 (a dipropylene glycol solution of the copolymer of benzyl methacrylate (66.7 mol%) and methacrylic acid (33.3 mol%), Mw=61,000, acid value 136 mgKOH) (solid content 30.0%, solids 45.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 9 hours at 4200 rpm using MiniCer (manufactured by Netzch) filled with 0.2 to 0.3 mmφ beads made of polystyrene formed with recirculation, and washed with water to provide 660 g of a crude pigment dispersion liquid (1)-12 with a pigment concentration of 13.1 wt% (average volume particle diameter Mv=96.0 nm).

The obtained crude pigment dispersion liquid (1)-12 320 g was added with Denacol EX-321 (manufactured by Nagase Chemtex Co., Ltd.) 0.4 g, 6.18% boric acid aqueous solution 3.2 g, and water 80 g, followed by stirring at 70°C

for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 320 g of a pigment dispersion liquid (1)-15 with a pigment concentration of 10.3% was obtained. Viscosity: 2.2 mPa·S.

Example (1)-16

120.0 g of the azo pigment powder (1)-4 was mixed with 201 g of the dispersant obtained in Synthesis Example (1)-10 (a dipropylene glycol solution of the copolymer of benzyl methacrylate (66.7 mol%) and methacrylic acid (33.3 mol%), Mw=41,000, acid value 135 mgKOH) (solid content 25.0%, solids 60.3 g), and water 300 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 4 hours at 4200 rpm using MiniCer (manufactured by Netzch) filled with 0.2 to 0.3 mmφ beads made of polystyrene formed with recirculation, and washed with water to provide 830 g of a crude pigment dispersion liquid (1)-13 with a pigment concentration of 12.3 wt% (average volume particle diameter Mv=89.4 nm).

The obtained crude pigment dispersion liquid (1)-13 417 g was added with Denacol EX-321 (manufactured by Nagase Chemtex Co., Ltd.) 0.5 g, 6.18% boric acid aqueous solution 3.9 g, and water 30 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 430 g of a pigment dispersion liquid (1)-16 with a pigment concentration of 10.4% was obtained. Viscosity: 2.0 mPa·S

Example (1)-17

70.0 g of the azo pigment powder (1)-4 was mixed with 116.7 g of the dispersant obtained in Synthesis Example (1)-12 (a dipropylene glycol solution of the copolymer of benzyl methacrylate (52.4 mol%) and methacrylic acid (47.6 mol%), Mw=83,000, acid value 195 mgKOH) (solid content 30.0%, solids 35.0g), and water 150 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 14 hours at 4200 rpm using MiniCer (manufactured by Netzch) filled with 0.2 to 0.3 mmφ beads made of polystyrene formed with recirculation, and washed with water to provide 435 g of a crude pigment dispersion liquid (1)-14 with a pigment concentration of 13.1 wt% (average volume particle diameter Mv=90.6 nm).

The obtained crude pigment dispersion liquid (1)-14 435 g was added with Denacol EX-321 (manufactured by Nagase Chemtex Co., Ltd.) 2.8 g, 6.18% boric acid aqueous solution 2.0 g, and water 70 g followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 530 g of a pigment dispersion liquid (1)-17 with a pigment concentration of 9.3% was obtained. Viscosity: 2.9 mPa·S.

Example (1)-18

90.0 g of the azo pigment powder (1)-1 was mixed with 146.0 g of the dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 45.0g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 18 hours at 4200 rpm using MiniCer (manufactured by Netzch) filled with 0.2 to 0.3 mmφ beads made of polystyrene formed with recirculation, and washed with water to provide 590 g of a crude pigment dispersion liquid (1)-15 with a pigment concentration of 12.0 wt% (average volume particle diameter Mv=98.9 nm).

The obtained crude pigment dispersion liquid (1)-15 590 g was added with Denacol EX-321 (manufactured by Nagase Chemtex Co., Ltd.) 3.5 g, and 6.18% boric acid aqueous solution 24.8 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 620 g of a pigment dispersion liquid (1)-18 with a pigment

concentration of 9.9% was obtained. Viscosity: 2.6 mPa·S.

Example (1)-19

90.0 g of the azo pigment powder (1)-4 was mixed with 292.0 g of dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 90.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 10 hours at 4200 rpm using MiniCer (manufactured by Netzch) filled with 0.2 to 0.3 mmφ beads made of polystyrene formed with recirculation, and washed with water to provide 595g of a crude pigment dispersion liquid (1)- 16 with a pigment concentration of 11.6wt% (average volume particle diameter Mv=95.6 nm).

The obtained crude pigment dispersion liquid (1)-16 595 g was added with Denacol EX-321 (manufactured by Nagase Chemtex Co., Ltd.) 6.8 g, 6.18% boric acid aqueous solution 48.3 g, and water 40 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 530 g of a pigment dispersion liquid (1)-19 with a pigment concentration of 10.3% was obtained. Viscosity: 2.9 mPa·S.

Example (1)-20

A pigment dispersion liquid (1)-20 was prepared by replacing the azo pigment in Example (1)-9 with the azo pigment (1)-5. The dispersion required 9 hours (average volume particle diameter Mv=92.6 nm). Viscosity: 2.4 mPa·S.

Example (1)-21

A pigment dispersion liquid (1)-21 was prepared by replacing the azo pigment in Example (1)-9 with the azo pigment (1)-6. The dispersion required 12 hours (average volume particle diameter Mv=95.1 nm). Viscosity: 2.5 mPa·S.

Example (1)-22

A pigment dispersion liquid (1)-22 was prepared by replacing the azo pigment in Example (1)-9 with a mixture of the azo pigment (1)-4 and the azo pigment (1)-2(mixing ratio : (1)-4/(1)-2=90/10). The dispersion required 12 hours (average volume particle diameter Mv=94.3 nm). Viscosity: 2.4 mPa·S.

Example (1)-23

A pigment dispersion liquid (1)-23 was prepared by replacing the azo pigment in Example (1)-9 with a mixture of the azo pigment (1)-4 and the azo pigment (1)-3 (mixing ratio : (1)-4/(1)-3=75/25). The dispersion required 11 hours (average volume particle diameter Mv=91.6 nm). Viscosity: 2.6 mPa·S.

Example (1)-24

90.0 g of the azo pigment powder (1)-4 was mixed with 180.0 g of the dispersant obtained in Synthesis Example (1)-13 (a dipropylene glycol solution of the copolymer of benzyl methacrylate (66.7 mol%), and methacrylic acid (33.3 mol%), Mw=150,000, acid value 142 mgKOH) (solid content 25%, solids 45.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 16 hours at 4200 rpm using MiniCer (manufactured by Netzch) filled with 0.2 to 0.3 mmφ beads made of polystyrene formed with recirculation, and washed with water to provide 515 g of a crude pigment dispersion liquid (1)-17 with a pigment concentration of 13.1 wt% (average volume particle diameter Mv=94.5 nm).

The obtained crude pigment dispersion liquid (1)-17 515 g was added with Denacol EX-321 (manufactured by Nagase Chemtex Co., Ltd.) 3.3 g, 6.18% boric acid aqueous solution 23.6 g and water 80 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 150,000 and sufficient washing with water, 520 g of a pigment dispersion liquid (1)-24 with a pigment

concentration of 9.9% was obtained. Viscosity: 2.9 mPa·S.

Example (1)-25

90.0 g of the azo pigment powder (1)-4 was mixed with 128.6 g of dispersant obtained in Synthesis Example (1)-14 (a dipropylene glycol solution of the copolymer of benzyl methacrylate (66.7 mol%), and methacrylic acid (33.3 mol%), Mw=15,000, acid value 123 mgKOH) (solid content 35%, solids 45.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 6 hours at 4200 rpm using MiniCer (manufactured by Netzch) filled with 0.2 to 0.3 mmφ beads made of polystyrene formed with recirculation, and washed with water to provide 680 g of a crude pigment dispersion liquid (1)-18 with a pigment concentration of 12.6 wt% (average volume particle diameter Mv=91.8 nm).

The obtained crude pigment dispersion liquid (1)-18 680g was added with Denacol EX-321 (manufactured by Nagase Chemtex Co., Ltd.) 4.0 g, 6.18% boric acid aqueous solution 28.8 g, and water 150 g, followed by stirring at 70°C for 5hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 10,000 and sufficient washing with water, 620 g of a pigment dispersion liquid (1)-25 with a pigment concentration of 9.6% was obtained. Viscosity: 1.5 mPa·S.

Example (1)-26

110.0 g of the azo pigment powder (1)-4 was mixed with 165.0 g of the dispersant obtained in Synthesis Example (1)-8 (a dipropylene glycol solution of the copolymer of benzyl methacrylate(70.2 mol%), and methacrylic acid(29.8 mol%), Mw=31,000, acid value 106 mgKOH) (solid content 20.0%, solids 33.0 g), and water 225 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 3 hours at 4200 rpm using MiniCer (manufactured by Netzch) formed with recirculation, and washed with water to provide 526 g of a crude pigment dispersion liquid (1)-19 with a pigment concentration of 15.0 wt% (average volume particle diameter Mv=89.5 nm).

The obtained crude pigment dispersion liquid (1)-19 526 g was added with Denacol EX-321 (manufactured by Nagase Chemtex Co., Ltd.) 0.5 g, 6.18% boric acid aqueous solution 3.6 g, and water 260 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 650 g of a pigment dispersion liquid (1)-26 with a pigment concentration of 10.3% was obtained. Viscosity: 2.0 mPa·S.

Example (1)-27

110.0 g of the azo pigment powder (1)-4 was mixed with 132 g of the dispersant obtained in Synthesis Example (1)-9 (a dipropylene glycol solution of the copolymer of benzyl methacrylate(76.7 mol%), and methacrylic acid(23.3 mol%), Mw=36,000, acid value 81 mgKOH) (solid content 25.0%, solids 33.0 g), and water 260 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 7 hours at 4200 rpm using MiniCer (manufactured by Netzch) formed with recirculation, and washed with water to provide 667 g of a crude pigment dispersion liquid (1)-20 with a pigment concentration of 12.0 wt% (average volume particle diameter Mv=91.3 nm).

The obtained crude pigment dispersion liquid (1)-20 667 g was added with Denacol EX-321 (manufactured by Nagase Chemtex Co., Ltd.) 0.5 g, 6.18% boric acid aqueous solution 3.6 g, and water 130 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 580 g of a pigment dispersion liquid (1)-27 with a pigment concentration of 11.5% was obtained. Viscosity: 2.4 mPa·S.

Example (1)-28

70.0 g of the azo pigment powder (1)-4 (solids) was mixed with 116.7 g of the dispersant obtained in Synthesis Example (1)-15 (a dipropylene glycol solution of the copolymer of benzyl methacrylate (28.8 mol%), and methacrylic acid (71.2 mol%), Mw=56,000, acid value 343 mgKOH) (solid content 30.0%, solids 35.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 18 hours at 4200 rpm using MiniCer (manufactured by Netzch) filled with 0.2 to 0.3 mmφ beads made of polystyrene formed with recirculation, and washed with water to provide 460 g of a crude pigment dispersion liquid (1)-21 with a pigment concentration of 12.5 wt% (average volume particle diameter Mv=97.1 nm).

The obtained crude pigment dispersion liquid (1)-21 460 g was added with Denacol EX-321 (manufactured by Nagase Chemtex Co., Ltd.) 2.8 g, 6.18% boric acid aqueous solution 20.2 g, and water 50 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 520 g of a pigment dispersion liquid (1)-28 with a pigment concentration of 9.9% was obtained. Viscosity: 3.2 mPa·S.

Example (1)-29

70.0 g of the azo pigment powder (1)-4 was mixed with 175.0 g of the dispersant obtained in Synthesis Example (1)-16 (a dipropylene glycol solution of the copolymer of benzyl methacrylate (91.6 mol%), and methacrylic acid (8.4 mol%), Mw=83,000, acid value 27 mgKOH) (solid content 20.0%, solids 35.0 g), and water 200 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 12 hours at 4200 rpm using MiniCer (manufactured by Netzch) filled with 0.2 to 0.3 mmφ beads made of polystyrene formed with recirculation, and washed with water to provide 470 g of a crude pigment dispersion liquid (1)-22 with a pigment concentration of 12.6 wt% (average volume particle diameter Mv=91.5 nm).

The obtained crude pigment dispersion liquid (1)-22 470 g was added with Denacol EX-321 (manufactured by Nagase Chemtex Co., Ltd.) 0.62 g, 6.18% boric acid aqueous solution 4.4 g, and water 130 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 490 g of a pigment dispersion liquid (1)-29 with a pigment concentration of 10.0% was obtained. Viscosity: 2.5 mPa·S.

Example (1)-30

A pigment dispersion liquid (1)-30 was prepared by replacing the dispersant in Example (1)-9 with sodium oleate 40 g, without cross-linking (average volume particle diameter Mv=95.1 nm). Viscosity: 1.8mPa·S.

Example (1)-31

A pigment dispersion liquid (1)-31 was prepared by adjusting the amount of dispersant of Example (1)-9 to 26.0 g (average volume particle diameter Mv=95.4 nm). Viscosity: 2.1 mPa·S.

Example (1)-32

A pigment dispersion liquid (1)-32 was prepared by adjusting the amount of dispersant of Example (1)-9 to 285 g (average volume particle diameter Mv=97.9 nm). Viscosity: 3.4 mPa·S.

Example (1)-33

It was intended to prepare a pigment dispersion liquid (1)-33 by replacing the dispersant in Example (1)-9 with a polymer 200 g of a dipropylene glycol solution of the copolymer of benzyl methacrylate (66.7 mol%), and methacrylic acid (33.3 mol%), Mw=250,000, acid value=146 mgKOH/g (solid content 20%, solids 40.0 g), but the desired dispersion was not obtained due to gelation during a cross-linking reaction.

Example (1)-34

A pigment dispersion liquid (1)-34 was prepared by replacing the dispersant in Example (1)-9 with a polymer 114.3 g of a dipropylene glycol solution of the copolymer of benzyl methacrylate (66.7 mol%), and methacrylic acid(33.3 mol%), Mw=5,000, acid value=120 mgKOH/g (solid content 35%, solids 40.0 g). The dispersion required 5 hours (average volume particle diameter Mv=95.1 nm). Viscosity: 1.5 mPa·S.

Comparative Example (1)-1

A comparative pigment dispersion liquid (1)-1 was prepared by replacing the azo pigment (1)-4 in Example (1)-9 with P.Y.180 powder 80.0 g, but the average volume particle diameter Mv was not 150 nm or less (average volume particle diameter Mv=154.7 nm). Viscosity: 2.6 mPa·S.

Comparative Example (1)-2

A pigment dispersion liquid (1)-2 was prepared by replacing the azo pigment (1)-4 in Example (1)-9 with P.Y.155 powder 80.0 g (average volume particle diameter Mv=91.0 nm). Viscosity: 2.7 mPa·S.
In table 3 below, the following abbreviations are used:

| | |
|---|---|
| 2-EHMA | 2-ethylhexyl methacrylate |
| MMA | methyl methacrylate |
| MAA | methacrylic acid |
| BnMA | benzyl methacrylate |

Table 3

| | Pigment | | Dispersion | | | | Cross-linking | |
|---|---|---|---|---|---|---|---|---|
| | Kind of pigment | Particle diameter | Dispersant | D/P | Mw | Acid value | Degree of cross-linking | Cross-linking agent |
| Example (1)-1 | (1)-4 | 0.03 μm | 2-EHMA/MMA/MAA | 0.3 | 83,000 | 154 | 0.11 | Ex321 |
| Example (1)-2 | (1)-4 | 0.03 μm | 2-EHMA/MMA/MAA | 0.3 | 83,000 | 154 | 0.05 | Ex321 |
| Example (1)-3 | (1)-4 | 0.03 μm | 2-EHMA/MMA/MAA | 0.5 | 25,000 | 138 | 0.12 | Ex321 |
| Example (1)-4 | (1)-4 | 0.03 μm | 2-EHMA/MMA/MAA | 0.5 | 25,000 | 138 | 0.06 | Ex321 |
| Example (1)-5 | (1)-4 | 0.03 μm | 2-EHMA/MMA/MAA | 0.5 | 83,000 | 154 | 0.05 | Ex321 |
| Example (1)-6 | (1)-4 | 0.03 μm | 2-EHMA/MMA/MAA | 0.3 | 25,000 | 138 | 0.06 | Ex321 |
| Example (1)-7 | (1)-4 | 0.03 μm | 2-EHMA/MMA/MAA | 0.5 | 31,000 | 106 | 0.08 | Ex321 |
| Example (1)-8 | (1)-4 | 0.03 μm | 2-EHMA/MMA/MAA | 0.5 | 36,000 | 81 | 0.10 | Ex321 |
| Example (1)-9 | (1)-4 | 0.03 μm | BnMA/MAA | 0.5 | 83,000 | 140 | 0.12 | Ex321 |
| Example (1)-10 | (1)-4 | 0.03 μm | BnMA/MAA | 0.5 | 83,000 | 140 | 0 | |
| Example (1)-11 | (1)-4 | 0.03 μm | BnMA/MAA | 0.5 | 25,000 | 128 | 0 | |
| Example (1)-12 | (1)-4 | 0.03 μm | BnMA/MAA | 0.5 | 83,000 | 140 | 0.06 | Ex321 |
| Example (1)-13 | (1)-4 | 0.03 μm | BnMA/MAA | 0.5 | 83,000 | 140 | 0.36 | Ex321 |

(continued)

| | Pigment | | Dispersion | | | | Cross-linking | |
|---|---|---|---|---|---|---|---|---|
| | Kind of pigment | Particle diameter | Dispersant | D/P | Mw | Acid value | Degree of cross-linking | Cross-linking agent |
| Example (1)-14 | (1)-4 | 0.03 μm | BnMA/MAA | 0.5 | 83,000 | 140 | 0.28 | Ex521 |
| Example (1)-15 | (1)-4 | 0.03 μm | BnMA/MAA | 0.5 | 61,000 | 136 | 0.06 | Ex321 |
| Example (1)-16 | (1)-4 | 0.03 μm | BnMA/MAA | 0.5 | 41,000 | 135 | 0.06 | Ex321 |
| Example (1)-17 | (1)-4 | 0.03 μm | BnMA/MAA | 0.5 | 83,000 | 195 | 0.20 | Ex321 |
| Example (1)-18 | (1)-1 | 0.2 μm | BnMA/MAA | 0.5 | 83,000 | 140 | 0.28 | Ex321 |
| Example (1)-19 | (1)-4 | 0.03 μm | BnMA/MAA | 1.0 | 83,000 | 140 | 0.28 | Ex321 |
| Example (1)-20 | (1)-5 | 0.08 μm | BnMA/MAA | 0.5 | 83,000 | 140 | 0.12 | Ex321 |
| Example (1)-21 | (1)-6 | 0.15 μm | BnMA/MAA | 0.5 | 83,000 | 140 | 0.12 | Ex321 |
| Example (1)-22 | (1)-4, (1)-2 | 0.03 μm, 10 μm | BnMA/MAA | 0.5 | 83,000 | 140 | 0.12 | Ex321 |
| Example (1)-23 | (1)-4, (1)-3 | 0.03 μm, 0.3 μm | BnMA/MAA | 0.5 | 83,000 | 140 | 0.12 | Ex321 |
| Example (1)-24 | (1)-4 | 0.03 μm | BnMA/MAA | 0.5 | 150,000 | 142 | 0.28 | Ex321 |
| Example (1)-25 | (1)-4 | 0.03 μm | BnMA/MAA | 0.5 | 15,000 | 123 | 0.32 | Ex321 |
| Example (1)-26 | (1)-4 | 0.03 μm | BnMA/MAA | 0.3 | 31,000 | 106 | 0.08 | Ex321 |
| Example (1)-27 | (1)-4 | 0.03 μm | BnMA/MAA | 0.3 | 36,000 | 81 | 0.10 | Ex321 |
| Example (1)-28 | (1)-4 | 0.03 μm | BnMA/MAA | 0.5 | 56,000 | 343 | 0.11 | Ex321 |
| Example (1)-29 | (1)-4 | 0.03 μm | BnMA/MAA | 0.5 | 83,000 | 27 | 0.31 | Ex321 |
| Example (1)-30 | (1)-4 | 0.03 μm | Sodium oleate | 0.5 | 304 | - | 0 | - |
| Example (1)-31 | (1)-4 | 0.03 μm | BnMA/MAA | 0.1 | 83,000 | 140 | 0.28 | Ex321 |
| Example (1)-32 | (1)-4 | 0.03 μm | BnMA/MAA | 1.1 | 83,000 | 140 | 0.28 | Ex321 |
| Example (1)-33 | (1)-4 | 0.03 μm | BnMA/MAA | 0.5 | 250,000 | 146 | 0.27 | Ex321 |
| Example (1)-34 | (1)-4 | 0.03 μm | BnMA/MAA | 0.5 | 5,000 | 120 | 0.33 | Ex321 |
| Comp.Example (1)-1 | P.Y. 180 | 0.2 μm | BnMA/MAA | 0.5 | 83,000 | 140 | 0.28 | Ex321 |
| Comp.Example (1)-2 | P.Y. 155 | 0.1 μm | BnMA/MAA | 0.5 | 83,000 | 140 | 0.28 | Ex321 |

- number average molecular weight (Mw) : measured by GPC manufactured by Agilent.
- acid value : measured by an automatic titrator GT-100 manufactured by Mitsubishi Chemical Corporation.

(measurement condition)

titrant: N/100 sodium hydroxide solution
mode: TEST
detection: mV Sens
injection speed : 100 μL/s

maximum quantitation: 20.0 mL

A test sample 0.5 g was weighed into 100 mL beaker, stirred and dissolved with addition of THF 55 mL, and added with ultrapure water 5 mL. This solution was measured by following titration conditions. A blank test was performed in the same manner, and the content was calculated by the following Equation.

$$\text{Acid value} = \frac{0.01 \times f \times (\text{Titration amount (mL)} - \text{Blank (mL)}) \times 56.11}{\text{Weight of sample (g)} \times \text{Solid concentration (\%)} \times 0.01}$$

- Degree of cross-linking: [a theoretically decreased value of an acid value by addition of a cross-linking agent] was set as a decreased acid value, and the degree was calculated as a ratio of the decreased acid value with respect to an acid value before a reaction with the cross-linking agent, that is, [decreased acid value] / [acid value of dispersant].

[Example (1)-I] (Pigment Dispersion)

Evaluation results on pigment dispersion liquids obtained in Examples (1)-1 to (1)-29, and (1)-31 to (1)-34, and Comparative Example (1)-1 are noted in Table 4.

[Dispersibility]

The dispersibility of the present invention was evaluated as follows. When pigment dispersion was performed, a case where a volume average particle diameter became 100 nm or less for less than 15 hours of dispersion time was evaluated as A, a case of 100 nm or less for less than 20 hours was evaluated as B, a case of 100 nm or less for greater than 20 hours was evaluated as C, and a case of greater than 100 nm was evaluated as D.

[Storage stability]

Each of pigment dispersion liquids prepared in Examples (1)-1 to (1)-29, and (1)-31 to (1)-34, and Comparative Example (1)-1 was stood still at 60°C for 2 weeks, and change ratios of viscosity and particle diameter were measured. Evaluation was as follows. Both change rates were less than 5%: A, one is less than 5% but the other one is less than 10%: B, both were less than 10%: as C, and at least any one was greater than 10%: D.

[Initial viscosity]

On each of pigment dispersion liquids prepared in Examples (1)-1 to (1)-29, and (1)-31 to (1)-34, and Comparative Example (1)-1, initial viscosity of 3.0 or less was evaluated as A, and initial viscosity of greater than 3.0 was evaluated as B.

Table 4

| | dispersibility | Storage stability | Initial viscosity |
|---|---|---|---|
| Pigment dispersion liquid (1)-1 | A | A | A |
| Pigment dispersion liquid (1)-2 | A | A | A |
| Pigment dispersion liquid (1)-3 | A | A | A |
| Pigment dispersion liquid (1)-4 | A | A | A |
| Pigment dispersion liquid (1)-5 | A | A | A |
| Pigment dispersion liquid (1)-6 | A | A | A |
| Pigment dispersion liquid (1)-7 | A | A | A |
| Pigment dispersion liquid (1)-8 | A | A | A |
| Pigment dispersion liquid (1)-9 | A | A | A |

(continued)

| | dispersibility | Storage stability | Initial viscosity |
|---|---|---|---|
| Pigment dispersion liquid (1)-10 | A | B | A |
| Pigment dispersion liquid (1)-11 | A | B | A |
| Pigment dispersion liquid (1)-12 | A | A | A |
| Pigment dispersion liquid (1)-13 | A | B | A |
| Pigment dispersion liquid (1)-14 | A | A | A |
| Pigment dispersion liquid (1)-15 | A | A | A |
| Pigment dispersion liquid (1)-16 | A | A | A |
| Pigment dispersion liquid (1)-17 | A | B | A |
| Pigment dispersion liquid (1)-18 | B | A | A |
| Pigment dispersion liquid (1)-19 | A | B | A |
| Pigment dispersion liquid (1)-20 | A | A | A |
| Pigment dispersion liquid (1)-21 | A | A | A |
| Pigment dispersion liquid (1)-22 | A | A | A |
| Pigment dispersion liquid (1)-23 | A | A | A |
| Pigment dispersion liquid (1)-24 | B | A | A |
| Pigment dispersion liquid (1)-25 | A | A | A |
| Pigment dispersion liquid (1)-26 | A | A | A |
| Pigment dispersion liquid (1)-27 | A | A | A |
| Pigment dispersion liquid (1)-28 | B | B | B |
| Pigment dispersion liquid (1)-29 | A | D | A |
| Pigment dispersion liquid (1)-31 | B | D | A |
| Pigment dispersion liquid (1)-32 | B | D | B |
| Pigment dispersion liquid (1)-33 | B | - | - |
| Comparative Pigment dispersion liquid (1)-1 | D | D | A |

[Example (1)-II]

Hereinafter, Examples of a pigment ink for inkjet recording of the present invention will be described.

A pigment ink for inkjet recording of the present invention was prepared and evaluated by the following conditions.

[Pigment ink]

27.78 g of the pigment dispersion liquid (1)-1 prepared in Example (1)-1 was added with a mixed solution of water 12.10 g, 2-pyrrolidinone 1.65 g, glycerol 8.25 g, 1,2-hexanediol 2.20 g, ethylene glycol 2.75 g, and Surfynol 465 0.28 g, and sufficiently stirred, so as to provide 55 g of a pigment ink (1)-1 with a pigment concentration of 5 wt%.

In the same manner, by using the pigment dispersion liquids in Examples (1)-1 to (1)-32, and (1)-34, and Comparative Examples (1)-1 to (1)-2, pigment inks of Examples (1)-1 to (1)-32, and (1)-34, and Comparative Examples (1)-1 and (1)-2 with a pigment concentration of 5 wt% were obtained, respectively.

Also, as a comparative pigment ink (1)-3, a pigment ink ICY-42 prepared by EPSON and as a comparative pigment ink (1)-4, a pigment ink PGI-2Y prepared by CANON were used.

Evaluation on the pigment inks using the pigment dispersion liquids of Examples and Comparative Examples is noted in Table 5.

[Evaluation]

By using the water-based ink as a yellow ink, and a commercially available printer (model number: PX-V630) manufactured by Seiko Epson Corporation, solid printing was performed on photo paper Kurisupia manufactured by Seiko Epson, PT-101 manufactured by Canon, and advanced photopaper manufactured by HP with a recommend mode and a high quality.

[Quality of printed matter]

Samples solid-printed on photo paper Kurisupia manufactured by Seiko Epson, PT-101 manufactured by Canon, and advanced photopaper manufactured by HP were evaluated with naked eye. Evaluation was as follows. No nonuniformity exists and glossiness is good: A, no nonuniformity exists, but glossiness is insufficient: B, nonuniformity exists but glossiness is good: C, nonuniformity exists and glossiness is insufficient: D.

[Storage stability]

Each of pigment inks was stood still at 60°C for 2 weeks, and change rates of viscosity and particle diameter were measured. Evaluation was as follows. Both change rates were less than 5%: A, one is less than 5% but the other one is less than 10%: B, both were less than 10%: as C, and at least any one was greater than 10%: D.

[Density]

Optical density of the sample solid-printed on PT-101 manufactured by Canon was measured. Evaluation was as follows. 2.2 or more: A, 2.0 or more: B, less than 2.0: C.

[Scratch resistance]

After an image solid-printed Kurisupia manufactured by Seiko Epson was rubbed with an eraser, and the image was evaluated with naked eye. Evaluation was as follows. No significant change between before and after: A, and change is recognized: B.

Table 5

| | Storage stability | Image quality | Density | Scratch resistance |
|---|---|---|---|---|
| Pigment ink (1)-1 | A | A | A | A |
| Pigment ink (1)-2 | A | A | A | A |
| Pigment ink (1)-3 | A | A | A | A |
| Pigment ink (1)-4 | A | A | A | A |
| Pigment ink (1)-5 | A | A | A | A |
| Pigment ink (1)-6 | A | A | A | A |
| Pigment ink (1)-7 | A | A | A | A |
| Pigment ink (1)-8 | A | A | A | A |
| Pigment ink (1)-9 | A | A | A | A |
| Pigment ink (1)-10 | B | B | B | A |
| Pigment ink (1)-11 | B | B | B | A |
| Pigment ink (1)-12 | A | A | A | A |
| Pigment ink (1)-13 | B | A | A | A |
| Pigment ink (1)-14 | A | A | A | A |
| Pigment ink (1)-15 | A | A | A | A |
| Pigment ink (1)-16 | A | A | A | A |
| Pigment ink (1)-17 | B | A | A | A |

(continued)

| | Storage stability | Image quality | Density | Scratch resistance |
|---|---|---|---|---|
| Pigment ink (1)-18 | A | A | A | A |
| Pigment ink (1)-19 | B | A | A | A |
| Pigment ink (1)-20 | A | A | A | A |
| Pigment ink (1)-21 | A | A | A | A |
| Pigment ink (1)-22 | A | A | A | A |
| Pigment ink (1)-23 | A | A | A | A |
| Pigment ink (1)-24 | A | A | A | A |
| Pigment ink (1)-25 | A | B | A | A |
| Pigment ink (1)-26 | A | A | A | A |
| Pigment ink (1)-27 | A | A | A | A |
| Pigment ink (1)-28 | D | B | A | A |
| Pigment ink (1)-29 | D | B | A | A |
| Pigment ink (1)-30 | A | B | B | B |
| Pigment ink (1)-31 | D | C | A | B |
| Pigment ink (1)-32 | D | B | A | A |
| Pigment ink (1)-34 | B | B | A | B |
| Comparative Pigment ink (1)-1 | D | C | B | A |
| Comparative Pigment ink (1)-2 | D | C | C | A |
| Comparative Pigment ink (1)-3 | A | A | C | A |
| Comparative Pigment ink (1)-4 | A | A | C | A |

[Synthesis Example (2)-1]

Formula ( 2 )

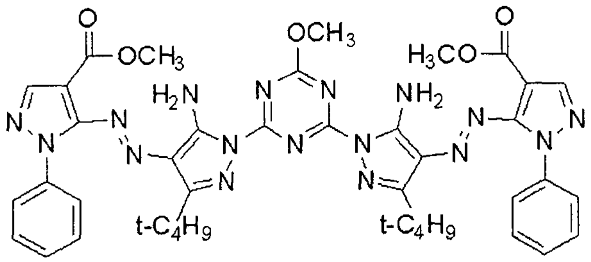

Formula ( 2 ) — 1

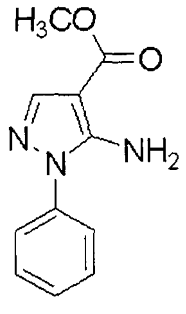

Formula ( 3 )

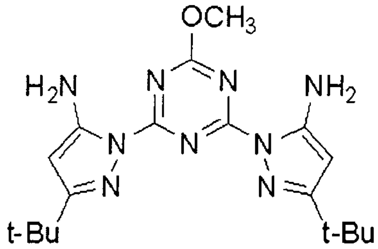

[Synthesis Example (2)-1]

11.5 g of a compound of Formula (2)-1 was suspended in acetic acid 50 g, and a sulfuric acid solution of 43% nitrosyl sulfuric acid was added dropwise so that inside temperature may range from 20°C to 30°C. After stirring for 1 hour at inside temperature of 20°C, urea 0.1 g was added thereto so as to provide a diazonium salt solution. Besides, 10g of a compound of Formula (2)-1 was dissolved in acetic acid 100 mL, and added dropwise to the above diazonium salt solution so that inside temperature may range from 20°C to 25°C. After stirring for 1 hour at inside temperature of 20°C, a homogenous reaction liquid of an azo compound (2) was obtained. Besides, water 150 g was prepared, and at inside temperature of 20°C to 25°C, the above homogenous reaction liquid of the azo compound (2) was added dropwise. Precipitated solids were filtered and separated, sufficiently spray-washed with water, suspended in water 200 mL, and added with 28% ammonia aqueous solution so as to adjust pH to 6.2. Precipitated solids were filtered and separated and sufficiently spray-washed with water so as to provide an amorphous azo compound (2).

The longitudinal direction length of primary particles of the obtained azo compound (2) was about 0.2 $\mu$m.

When moisture measurement was performed, content of water was 68%.

When X-ray diffraction measurement of the azo compound (2) was performed according to the above conditions, any characteristic X-ray diffraction peak was not observed.

A view of CuKa characteristic X-ray diffraction is illustrated in FIG. 5.

40 g of the obtained amorphous hydrous azo compound (2) was suspended in ethylene glycol 30 mL, heated up to inside temperature 80°C, and stirred at the same temperature for 2 hours. After cooling to inside temperature 30°C, precipitated solids were filtered and separated so as to provide 11 g of an azo pigment (2)-1 of a (2)-$\delta$ type crystal form.

The longitudinal direction length of primary particles of the obtained azo pigment (2)-1 was about 0.5 $\mu$m.

When X-ray diffraction measurement of the obtained azo pigment (2)-1 was performed according to the above conditions, characteristic X-ray diffraction peaks were observed at Bragg angles ($2\theta \pm 0.2°$) of 4.8°, 7.2°, 9.7°, 20.0°, 17.3°, 26.0° and 26.7°.

A view of CuK$\alpha$ characteristic X-ray diffraction is illustrated in FIG. 6.

[Synthesis Example (2)-2]

The obtained azo pigment (2)-1 was subjected to salt milling, so as to provide an azo pigment (2)-2 that has primary particles with a longitudinal direction length of 0.05 $\mu$m. The X-ray diffraction of the obtained azo pigment (2)-2 was measured by the above conditions, and characteristic X-ray diffraction peaks were observed at Bragg angles ($2\theta \pm 0.2°$) of 4.8°, 7.2°, 9.7°, 20.0°, 17.3°, 26.0° and 26.7°.

A view of CuK$\alpha$ characteristic X-ray diffraction of the (2)-$\alpha$ type crystal form azo pigment (2)-2 is illustrated in FIG. 7.

[Synthesis Example (2)-3]

The azo pigment (2)-1 was subjected to salt milling. As a result, an azo pigment (2)-3 that has primary particles with a longitudinal direction length of 0.1 μm and an azo pigment (2)-4 that has primary particles with a longitudinal direction length of 0.2 μm were obtained in which characteristic X-ray diffraction peaks were observed at Bragg angles (2θ±0.2°) of 4.8°, 7.2°, 9.7°, 20.0° 17.3°, 26.0° and 26.7°.

[Synthesis Example (2)-4]

An azo pigment (2)-5 that has primary particles with a longitudinal direction length of 2 μm was obtained by the same operation as in Synthesis Example (2)-1 except that an amount of ethylene glycol was increased from 30 mL to 80 mL. Also, an azo pigment (2)-6 that has primary particles with a longitudinal direction length of 10 μm was obtained by the same operation as in Synthesis Example (2)-1 except that the amorphous azo compound (2) obtained in Synthesis Example(2)-1 was dried, and ethylene glycol 50 mL was added. In both azo pigments, characteristic X-ray diffraction peaks were observed at Bragg angles (2θ±0.2°) of 4.8°, 7.2°, 9.7°, 20.0°, 17.3°, 26.0° and 26.7°.

[Synthesis Example (2)-5]

67.5 g of a compound of Formula (2)-1 was dissolved in phosphoric acid 530 mL, and cooled to inside temperature of 3°C. 26.9 g of sodium nitrite was dividedly added thereto over 15 minutes so that inside temperature may be 4°C or less. After the addition was completed, the resultant mixture was stirred at the same temperature for 50 minutes, and urea 18.6 g was dividedly added thereto so as to provide a diazonium salt solution. Besides, 47.9 g of a compound of Formula (3) was added to methanol 1680 mL, and completely dissolved under reflux. The inside temperature was cooled to 0°C, and the above diazonium salt solution was added thereto for 30 minutes so that inside temperature may be 10°C or less. The mixture was stirred for 90 minutes at inside temperature 5°C, and added in water 1.6 L, followed by stirring for 30 minutes. Precipitated crystals were filtered and separated, and spray-washed with water 1 L. The obtained crystals were suspended in water 2.5 L, and added with 28% ammonia water so as to adjust pH to 6.1. The crystals were filtered and separated, and sufficiently spray-washed with water, so as to provide a (2)-γ type crystal form azo pigment (2)-9. The obtained crystals were suspended in acetone 1.5 L, heated, and stirred under reflux for 2 hours. The crystals were filtered and separated at the time of heating, and sufficiently spray-washed with acetone, so as to provide 103.5 g of a (2)-β type crystal form azo pigment (2)-8.

The obtained (2)-β type crystal form azo pigment (2)-8 was dried at 60°C for 24 hours so as to provide 92.8 g of an α type crystal form azo pigment (2)-7 (yield 88.8%).

When the obtained (2)-γ type crystal form azo pigment (2)-9 was observed by a transmission microscope (manufactured by JEOL Ltd.: JEM-1010 electron microscope) with naked eye, the longitudinal direction length of primary particles was about 0.5 μm.

When X-ray diffraction measurement of the (2)-γ type crystal form pigment was performed according to the above conditions, characteristic X-ray diffraction peaks were observed at Bragg angles (2θ±0.2°) of 5.9°, 7.0°, 10.4° and 23.5°.

When the obtained (2)-β type crystal form azo pigment (2)-8 was observed by a transmission microscope (manufactured by JEOL Ltd.: JEM-1010 electron microscope) with naked eye, the longitudinal direction length of primary particles was about 10 μm.

When X-ray diffraction measurement of the (2)-β type crystal form pigment (2)-8 was performed according to the above conditions, characteristic X-ray diffraction peaks were observed at Bragg angles (2θ±0.2°) of 6.3°, 6.4° and 22.3°.

When the obtained (2)-α type crystal form azo pigment (2)-7 was observed by a transmission microscope (manufactured by JEOL Ltd.: JEM-1010 electron microscope) with naked eye, the longitudinal direction length of primary particles was about 10 μm.

When X-ray diffraction measurement of the (2)-α type crystal form pigment (2)-7 was performed according to the above conditions, characteristic X-ray diffraction peaks were observed at Bragg angles (2θ±0.2°) of 6.5°, 7.1°, 14.4°, 21.8° and 23.6°.

A view of CuKα characteristic X-ray diffraction of the (2)-α type crystal form azo pigment (2)-7 is illustrated in FIG. 8.

A view of CuKα characteristic X-ray diffraction of the (2)-β type crystal form azo pigment (2)-8 is illustrated in FIG. 9.

A view of CuKα characteristic X-ray diffraction of the (2)-γ type crystal form azo pigment (2)-9 is illustrated in FIG. 10.

[Synthesis Example 8] Synthesis of (2)-ε type crystal form azo pigment (2)-10

67.5 g of a compound of Formula (2)-1 was dissolved in phosphoric acid 530 mL, and cooled to inside temperature of 3°C. 26.9 g of sodium nitrite was dividedly added thereto over 15 minutes so that inside temperature may be 4°C or less. After the addition was completed, the resultant mixture was stirred at the same temperature for 50 minutes, and urea 18.6 g was dividedly added thereto so as to provide a diazonium salt solution. Besides, 47.9 g of a compound represented by Formula (3) was added to methanol 1680 mL, and completely dissolved under reflux. The inside temperature was cooled to 0°C, and the above diazonium salt solution was added thereto over 30 minutes so that inside temperature may be 10°C or less. The mixture was stirred for 90 minutes at inside temperature 5°C, and added in water 1.6 L, followed by stirring for 30 minutes. Precipitated crystals were filtered and separated, and spray-washed with water 1 L. The obtained crystals were suspended in water 2.5 L, and added with 28% ammonia water so as to adjust pH to 6.1. The crystals were filtered and separated, sufficiently spray-washed with water, and dried at 60°C for 24 hours so as to provide a (2)-γ type crystal form azo pigment (2)-2 represented by Formula (2) below. The obtained (2)-γ type crystal form azo pigment (2)-2 was suspended in acetone 1.5 L, heated, and stirred under reflux for 2 hours. The crystals were filtered and separated at the time of heating, and sufficiently spray-washed with acetone, so as to provide a (2)-η type crystal form azo pigment (2)-12. The obtained η type crystal form azo pigment (2)-12 was dried at 80°C for 15 hours so as to provide 98.5 g of an ε type crystal form azo pigment (2)-10 represented by Formula (2) below.

When the obtained (2)-γ type crystal form azo pigment (2)-2 was observed by a transmission microscope (manufactured by JEOL Ltd.: JEM-1010 electron microscope) with naked eye, the longitudinal direction length of primary particles was about 2 μm.

When X-ray diffraction measurement of the (2)-γ type crystal form pigment (2)-2 was performed according to the above conditions, characteristic X-ray diffraction peaks were observed at Bragg angles (2θ±0.2°) of 5.9°, 7.0° and 8.9°.

When the obtained (2)-η type crystal form azo pigment (2)-12 was observed by a transmission microscope (manufactured by JEOL Ltd.: JEM-1010 electron microscope) with naked eye, the longitudinal direction length of primary particles was about 15 μm.

A view of CuKα characteristic X-ray diffraction of the (2)-η type crystal form azo pigment (2)-12 is illustrated in FIG. 13.

When X-ray diffraction measurement of the η type crystal form pigment (2)-12 was performed according to the above conditions, characteristic X-ray diffraction peaks were observed at Bragg angles (2θ±0.2°) of 4.8°, 6.5°, 9.2°, 9.7°, 13.0° and 24.4°.

When the obtained (2)-ε type crystal form azo pigment (2)-10 was observed by a transmission microscope (manufactured by JEOL Ltd.: JEM-1010 electron microscope) with naked eye, the longitudinal direction length of primary particles was about 15 μm.

A view of CuKα characteristic X-ray diffraction of the (2)-ε type crystal form azo pigment (2)-10 is illustrated in FIG. 11 in which the pigment has characteristics X-ray diffraction peaks at Bragg angles (2θ±0.2°) of 4.9°, 8.9° and 13.1° in the CuKα characteristic X-ray diffraction, and primary particles with a longitudinal direction length of 10 μm.

[Synthesis Example 9] Synthesis of (2)-ζ type crystal form azo pigment (2)-11

11.8 g of a compound of Formula (2)-1 was dissolved in acetic acid 50 g and sulfuric acid 16 g, and cooled to inside temperature of 5°C. 16.9 g of 43% sulfuric acid solution of nitrosyl sulfuric acid was added dropwise thereto so that inside temperature may be 10°C or less. The mixture was stirred at inside temperature 5°C for 1 hour, added with urea 0.2 g, and stirred at the same temperature for 15 minutes so as to provide a diazonium salt solution. Besides, 10 g of a compound of Formula (3) was suspended in methanol 350 mL, and completely dissolved by heating, and stirring under reflux for 30 minutes. After cooling to inside temperature 5°C, the above diazonium salt solution was added thereto for 10 minutes so that inside temperature may be 10°C or less. After stirring for 2 hours at inside temperature 10°C, precipitated crystals were filtered and separated, and spray-washed with methanol 200 mL, and then suspended in water 300 mL, and added with 28% ammonia water so as to adjust pH to 6.2. Precipitated crystals were filtered and separated, and sufficiently spray-washed with water so as to provide 19.8 g of an azo pigment (2)-11 having a (2)-ζ type crystal form.

When the obtained (2)-ζ type crystal form azo pigment (2)-11 was observed by a transmission microscope (manufactured by JEOL Ltd.: JEM-1010 electron microscope) with naked eye, the longitudinal direction length of primary particles was about 0.5 μm.

When X-ray diffraction measurement of the ζ type crystal form pigment (2)-11 was performed according to the above conditions, characteristic X-ray diffraction peaks were observed at Bragg angles (2θ±0.2°) of 6.6°, 9.2°, 10.3°, 21.4° and 25.6°.

A view of CuKα characteristic X-ray diffraction of the (2)-ζ type crystal form pigment (2)-11 is illustrated in FIG. 12.

[Synthesis Example 11]

The (2)-ζ type crystal form azo pigment (2)-11 was subjected to crystal transformation using ethylene glycol so as to provide a (2)-δ type crystal form azo pigment (2)-13 which has primary particles with a longitudinal direction length of 80 μm. When the X-ray diffraction measurement of the obtained azo pigment (2)-13 was performed according to the above conditions, characteristic X-ray diffraction peaks were observed at Bragg angles (2θ±0.2°) of 4.8°, 7.2°, 9.7°, 20.0°, 17.3°, 26.0° and 26.7°. A view of CuKα characteristic X-ray diffraction of the (2)-δ type crystal form azo pigment (2)-13 is illustrated in FIG. 14.

[Example (2)-I]

Example (2)-1

597.7 g of the azo pigment paste (2)-2 (solid content 26.5%, solids 158.4 g) was mixed with 257.1 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 79.2 g), and water 25.2 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 11 hours at 4200 rpm using MiniCer (manufactured by Netzch) filled with 0.2 to 0.3 mmφ beads made of polystyrene formed with recirculation, and washed with water to provide 657 g of a crude pigment dispersion liquid (2)-1 with a pigment concentration of 16.8 wt% (average volume particle diameter Mv=92.0 nm).

The obtained crude pigment dispersion liquid (2)-1 657 g was added with 400 g, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000, and sufficient washing with water, 920 g of a pigment dispersion liquid (2)-1 with a pigment concentration of 10.6% was obtained. Viscosity: 2.4 mPa·S.

Example (2)-2

350.2 g of the azo pigment paste (2)-2 (solid content 25.7%, solids 90.0 g) was mixed with 128.6 g of the dispersant obtained in Synthesis Example (1)-7 (a dipropylene glycol solution of the copolymer of benzyl methacrylate (66.7 mol%), and methacrylic acid (33.3 mol%), Mw=25,000, acid value 128 mgKOH) (solid content 35%, solids 45.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 8 hours at 4200 rpm using MiniCer (manufactured by Netzch) filled with 0.2 to 0.3 mmφ beads made of polystyrene formed with recirculation, and washed with water to provide 590 g of a crude pigment dispersion liquid (2)-2 with a pigment concentration of 12.6 wt% (average volume particle diameter Mv=93.9 nm).

The obtained crude pigment dispersion liquid (2)-2, 590 g was added with water 100 g, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000, and sufficient washing with water, 680 g of a pigment dispersion liquid (2)-2 with a pigment concentration of 9.9% was obtained. Viscosity: 1.9 mPa·S.

Example (2)-3

604.0 g of the azo pigment paste (2)-2 (solid content 26.5%, solids 160.0 g) was mixed with 363.6 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 112.0 g), and water 2.4 g, then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 15 hours at 4200 rpm using MiniCer (manufactured by Netzch) filled with 0.2 to 0.3 mmφ beads made of polystyrene formed with recirculation, and washed with water to provide 928 g of a crude pigment dispersion liquid (2)-3 with a pigment concentration of 13.3 wt% (average volume particle diameter Mv=91.9 nm).

The obtained crude pigment dispersion liquid (2)-3 928 g was added with Denacol EX-321 (manufactured by Nagase Chemtex Co., Ltd.) 8.5 g, 6.18% boric acid aqueous solution 60.3 g, and water 234.6 g, followed by stirring at 70°C for 5hours. After the reaction was completed, the resultant product was cooled to room temperature, and passed through a filter with a pore diameter of 1.0μm so as to remove coarse particles, and then coarse particles were further precipitated by a centrifuge (at 7000 rpm, for 10 minutes). After the precipitated solids were removed, through a filter

with molecular weight cut off of 50,000 and sufficient washing with water, 1220g of a pigment dispersion liquid (2)-3 with a pigment concentration of 9.0% was obtained. Viscosity: 2.7 mPa·S.

Example (2)-4

597.7 g of the azo pigment paste (2)-2 (solid content 26.5%, solids 158.4 g) was mixed with 225.0 g of the dispersant obtained in Synthesis Example (1)-17 (a dipropylene glycol solution of the copolymer of methyl methacrylate (47.8 mol%), methacrylic acid (31.8 mol%), and 2-ethylhexyl methacrylate (20.4 mol%), Mw=83,000, acid value 154 mgKOH) (solid content 35.2%, solids 79.2 g), and water 57.3 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 25 hours at 4200 rpm using MiniCer (manufactured by Netzch) filled with 0.2 to 0.3 mmφ beads made of polystyrene formed with recirculation, and washed with water to provide 657 g of a crude pigment dispersion liquid (2)-4 with a pigment concentration of 18.6 wt% (average volume particle diameter Mv=97.6 nm).

The obtained crude pigment dispersion liquid (2)-4 657 g was added with Denacol EX-321 (manufactured by Nagase Chemtex Co., Ltd.) 6.0 g, 6.18% boric acid aqueous solution 42.7 g, and water 514 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 1190 g of a pigment dispersion liquid (2)-4 with a pigment concentration of 8.7% was obtained. Viscosity: 2.3 mPa·S.

Example (2)-5

389.0 g of the azo pigment paste (2)-2 (solid content 25.7%, solids 100.0 g) was mixed with 97.3 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 30.0 g), and water 13.5 g, then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 16 hours at 4200 rpm using MiniCer (manufactured by Netzch) filled with 0.2 to 0.3 mmφ beads made of polystyrene formed with recirculation, and washed with water to provide, 550 g of a crude pigment dispersion liquid (2)-5 with a pigment concentration of 10.2 wt% (average volume particle diameter Mv=96.5 nm).

The obtained crude pigment dispersion liquid (2)-5 550 g was added with Denacol EX-321 (manufactured by Nagase Chemtex Co., Ltd.) 1.63g, and 6.18% boric acid aqueous solution 11.67 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 520g of a pigment dispersion liquid (2)-5 with a pigment concentration of 9.9% was obtained. Viscosity: 2.0 mPa·S.

Example (2)-6

350.3 g of the azo pigment paste (2)-2 (solid content 25.7%, solids 90.0 g) was mixed with 146.0 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 45.0 g), and water 3.8 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 10 hours at 4200 rpm using MiniCer (manufactured by Netzch) filled with 0.2 to 0.3 mmφ beads made of polystyrene formed with recirculation, and washed with water to provide 606 g of a crude pigment dispersion liquid (2)-6 with a pigment concentration of 12.0 wt% (average volume particle diameter Mv=91.9 nm).

The obtained crude pigment dispersion liquid (2)-6 606 g was added with Denacol EX-321 (manufactured by Nagase Chemtex Co., Ltd.) 3.6 g, 6.18% boric acid aqueous solution 25.5 g, and water 61.0 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with MWCO of 50,000 and sufficient washing with water, 580g of a pigment dispersion liquid (2)-6 with a pigment concentration of 10.8% was obtained. Viscosity: 2.2 mPa·S.

Example (2)-7

311.3 g of the azo pigment paste (2)-2 (solid content 25.7%, solids 80.0 g) was mixed with 103.9 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 32.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 23 hours at 4200 rpm using MiniCer (manufactured by Netzch) filled with 0.2 to 0.3 mmφ beads made of polystyrene formed with recirculation, and washed with water to provide 656 g of a crude pigment dispersion liquid (2)-7 with a pigment concentration of 10.5 wt% (average volume particle diameter Mv=93.9 nm).

The obtained crude pigment dispersion liquid (2)-7 656 g was added with Denacol EX-321 (manufactured by Nagase Chemtex Co., Ltd.) 2.7 g, 6.18% boric acid aqueous solution 19.3 g, and water 10 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10minutes). After the precipitated solids were removed, through a filter with molecular weight cut off of 50,000 and sufficient washing with water, 615 g of a pigment dispersion liquid (2)-7 with a pigment concentration of 10.9% was obtained. Viscosity: 2.2 mPa·S.

Example (2)-8

622.6 g of the azo pigment paste (2)-2 (solid content 25.7%, solids 160.0 g) was mixed with 228.6 g of the dispersant obtained in Synthesis Example (1)-7 (a dipropylene glycol solution of the copolymer of benzyl methacrylate (66.7 mol%), and methacrylic acid (33.3 mol%), Mw=25,000, acid value 128 mgKOH) (solid content 35%, solids 80.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 15 hours at 4200 rpm using MiniCer (manufactured by Netzch) filled with 0.2 to 0.3 mmφ beads made of polystyrene formed with recirculation, and washed with water to provide 1100 g of a crude pigment dispersion liquid (2)-8 with a pigment concentration of 13.0 wt% (average volume particle diameter Mv=89.2 nm).

The obtained crude pigment dispersion liquid (2)-8 550 g was added with Denacol EX-321 (manufactured by Nagase Chemtex Co., Ltd.) 3.50 g, 6.18% boric acid aqueous solution 25.03 g, and water 150 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 700 g of a pigment dispersion liquid (2)-8 with a pigment concentration of 10.2% was obtained. Viscosity: 1.6 mPa·S.

Example (2)-9

The crude pigment dispersion liquid (2)-8 550 g (pigment concentration of 13 wt%) obtained in Example (2)-8 was added with Denacol EX-321 (manufactured by Nagase Chemtex Co., Ltd.) 0.75 g, 6.18% boric acid aqueous solution 5.36 g, and water 150 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 760g of a pigment dispersion liquid (2)-9 with a pigment concentration of 9.2% was obtained. Viscosity: 1.5 mPa·S.

Example (2)-10

466.9 g of the azo pigment paste (2)-2 (solid content 25.7%, solids 120.0 g) was mixed with 194.8 g of the dispersant obtained in Synthesis Example (1)-6 (a dipropylene glycol solution of the copolymer of benzyl methacrylate (66.7 mol%), and methacrylic acid (33.3 mol%), Mw=83,000, acid value 140 mgKOH) (solid content 30.8%, solids 60.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 18 hours at 4200 rpm using MiniCer (manufactured by Netzch) filled with 0.2 to 0.3 mmφ beads made of polystyrene formed with recirculation, and washed with water to provide 900.8 g of a crude pigment dispersion liquid (2)-9 with a pigment concentration of 11.3 wt% (average volume particle diameter Mv=92.6 nm).

The obtained crude pigment dispersion liquid (2)-9 270 g was added with Denacol EX-321 (manufactured by Nagase Chemtex Co., Ltd.) 0.3 g, 6.18% boric acid aqueous solution 2.3 g, and water 30 g, followed by stirring at 70°C

for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 290 g of a pigment dispersion liquid (2)-10 with a pigment concentration of 10.1% was obtained. Viscosity: 2.4 mPa·S.

Example (2)-11

The crude pigment dispersion liquid (2)-9 280 g was added with Denacol EX-321 (manufactured by Nagase Chemtex Co., Ltd.) 2.0 g, 6.18% boric acid aqueous solution 14.3 g, and water 15 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 280 g of a pigment dispersion liquid (2)-11 with a pigment concentration of 10.4% was obtained. Viscosity: 2.5 mPa·S.

Example (2)-12

The crude pigment dispersion liquid (2)-9 350.8 g was added with Denacol EX-521 (manufactured by Nagase Chemtex Co., Ltd.) 3.0 g, 6.18% boric acid aqueous solution 13.9 g, and water 20 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 320 g of a pigment dispersion liquid (2)-12 with a pigment concentration of 10.8% was obtained. Viscosity: 2.8 mPa·S.

Example (2)-13

622.6 g of the azo pigment paste (2)-2 (solid content 25.7%, solids 160.0 g) was mixed with 182.9 g of the dispersant obtained in Synthesis Example (1)-7 (a dipropylene glycol solution of the copolymer of benzyl methacrylate (66.7 mol%), and methacrylic acid (33.3 mol%), Mw=25,000, acid value 128 mgKOH) (solid content 35.0%, solids 64.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 22 hours at 4200 rpm using MiniCer (manufactured by Netzch) filled with 0.2 to 0.3 mmφ beads made of polystyrene formed with recirculation, and washed with water to provide 1355 g of a crude pigment dispersion liquid (2)-10 with a pigment concentration of 10.7 wt% (average volume particle diameter Mv=90.8 nm).

The obtained crude pigment dispersion liquid (2)-10 700 g was added with Denacol EX-321 (manufactured by Nagase Chemtex Co., Ltd.) 2.9 g, 6.18% boric acid aqueous solution 21.0 g, and water 15 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 630 g of a pigment dispersion liquid (2)-13 with a pigment concentration of 11.4% was obtained. Viscosity: 1.6 mPa·S.

Example (2)-14

The obtained crude pigment dispersion liquid (2)-10 655 g was added with Denacol EX-321 (manufactured by Nagase Chemtex Co., Ltd.) 0.6 g, 6.18% boric acid aqueous solution 4.2 g, and water 30 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 610 g of a pigment dispersion liquid (2)-14 with a pigment concentration of 10.5% was obtained. Viscosity: 1.5 mPa·S.

Example (2)-15

622.6 g of the azo pigment paste (2)-2 (solid content 25.7%, solids 160.0 g) was mixed with 139.1 g of the dispersant obtained in Synthesis Example (1)-7 (a dipropylene glycol solution of the copolymer of benzyl methacrylate

(66.7 mol%), and methacrylic acid (33.3 mol%), Mw=25,000, acid value 128 mgKOH) (solid content 35.0%, solids 48.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 22 hours at 4200 rpm using MiniCer (manufactured by Netzch) filled with 0.2 to 0.3 mmφ beads made of polystyrene formed with recirculation, and washed with water to provide 1407 g of a crude pigment dispersion liquid (2)-11with a pigment concentration of 11.3 wt% (average volume particle diameter Mv=91.2 nm).

The obtained crude pigment dispersion liquid (2)-11 707 g was added with Denacol EX-321 (manufactured by Nagase Chemtex Co., Ltd.) 2.4 g, 6.18% boric acid aqueous solution 17.1 g, and water 60 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 690 g of a pigment dispersion liquid (2)-15 with a pigment concentration of 10.5% was obtained. Viscosity: 1.6 mPa·S.

Example (2)-16

The crude pigment dispersion liquid (2)-11 700 g was added with Denacol EX-321 (manufactured by Nagase Chemtex Co., Ltd.) 1.0 g, 6.18% boric acid aqueous solution 7.2 g, and water 60 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 750 g of a pigment dispersion liquid (2)-16 with a pigment concentration of 9.8% was obtained. Viscosity: 1.5 mPa·S.

Example (2)-17

350.2 g of the azo pigment paste (2)-2 (solid content 25.7%, solids 90.0 g) was mixed with 180 g of the dispersant obtained in Synthesis Example (1)-9 (a dipropylene glycol solution of the copolymer of benzyl methacrylate (76.7 mol%), and methacrylic acid (23.3 mol%), Mw=36,000, acid value 81 mgKOH) (solid content 25.0%, solids 45.0 g) and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 16 hours at 4200 rpm using MiniCer (manufactured by Netzch) filled with 0.2 to 0.3 mmφ beads made of polystyrene formed with recirculation, and washed with water to provide 930 g of a crude pigment dispersion liquid (2)-12 with a pigment concentration 5.4 wt% (average volume particle diameter Mv=97.9 nm).

The obtained crude pigment dispersion liquid (2)-12 900 g was added with Denacol EX-321 (manufactured by Nagase Chemtex Co., Ltd.) 0.5 g, and 6.18% boric acid aqueous solution 3.7 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 410 g of a pigment dispersion liquid (2)-17 with a pigment concentration of 10.6% was obtained. Viscosity: 2.0 mPa·S.

Example (2)-18

350.2 g of the azo pigment paste (2)-2 (solid content 25.7%, solids 90.0 g) was mixed with 150 g of the dispersant obtained in Synthesis Example (1)-6 (a dipropylene glycol solution of the copolymer of benzyl methacrylate (66.7 mol%), and methacrylic acid (33.3 mol%), Mw=61,000, acid value 136 mgKOH) (solid content30.0%, solids 45.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 9 hours at 4200 rpm using MiniCer (manufactured by Netzch) filled with 0.2 to 0.3 mmφ beads made of polystyrene formed with recirculation, and washed with water to provide 825 g of a crude pigment dispersion liquid (2)-13 with a pigment concentration of 10.5 wt% (average volume particle diameter Mv=95.2 nm).

The obtained crude pigment dispersion liquid (2)-13 400 g was added with Denacol EX-321 (manufactured by Nagase Chemtex Co., Ltd.) 0.4 g, and 6.18% boric acid aqueous solution 3.2 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 380 g of a pigment dispersion liquid (2)-18 with a pigment

concentration of 8.7% was obtained. Viscosity: 1.9 mPa·S.

Example (2)-19

The crude pigment dispersion liquid (2)-13 400 g was added with Denacol EX-321 (manufactured by Nagase Chemtex Co., Ltd.) 2.1 g, and 6.18% boric acid aqueous solution 14.8 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 350 g of a pigment dispersion liquid (2)-19 with a pigment concentration of 10.5% was obtained. Viscosity: 2.4 mPa·S.

Example (2)-20

469.3 g of the azo pigment paste (2)-2 (solid content 25.7%, solids 120.0 g) was mixed with 201 g of the dispersant obtained in Synthesis Example (1)-10 (a dipropylene glycol solution of the copolymer of benzyl methacrylate (66.7 mol%), and methacrylic acid (33.3 mol%), Mw=41,000, acid value 135 mgKOH) (solid content 25.0%, solids 60.3 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 4 hours at 4200 rpm using MiniCer (manufactured by Netzch) filled with 0.2 to 0.3 mmφ beads made of polystyrene formed with recirculation, and washed with water to provide 736 g of a crude pigment dispersion liquid (2)-14 with a pigment concentration of 13.9 wt% (average volume particle diameter Mv=90.4 nm).

The obtained crude pigment dispersion liquid (2)-14 370 g was added with Denacol EX-321 (manufactured by Nagase Chemtex Co., Ltd.) 0.5 g, and 6.18% boric acid aqueous solution 3.9 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 410 g of a pigment dispersion liquid (2)-20 with a pigment concentration of 10.9% was obtained. Viscosity: 2.1 mPa·S.

Example (2)-21

The crude pigment dispersion liquid (2)-14 365 g was added with Denacol EX-321 (manufactured by Nagase Chemtex Co., Ltd.) 2.5 g, and 6.18% boric acid aqueous solution 17.8 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 430 g of a pigment dispersion liquid (2)-21 with a pigment concentration of 10.5% was obtained. Viscosity: 2.2 mPa·S.

Example (2)-22

273.1 g of the azo pigment paste (2)-2 (solid content 25.7%, solids 70.0 g) was mixed with 175.5 g of dispersant obtained in Synthesis Example (1)-8 (a dipropylene glycol solution of the copolymer of benzyl methacrylate (70.2 mol%), and methacrylic acid (29.8 mol%), Mw=31,000, acid value 106 mgKOH) (solid content 20.0%, solids 35.1 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 12 hours at 4200 rpm using MiniCer (manufactured by Netzch) filled with 0.2 to 0.3 mmφ beads made of polystyrene formed with recirculation, and washed with water to provide 501 g of a crude pigment dispersion liquid (2)-15 with a pigment concentration of 10.4 wt% (average volume particle diameter Mv=96.8 nm).

The obtained crude pigment dispersion liquid (2)-15 501 g was added with Denacol EX-321 (manufactured by Nagase Chemtex Co., Ltd.) 0.6 g, and 6.18% boric acid aqueous solution 3.9 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 420 g of a pigment dispersion liquid (2)-22 with a pigment concentration of 10.9% was obtained. Viscosity: 2.2 mPa·S.

Example (2)-23

273.1 g of the azo pigment paste (2)-2 (solid content 25.7%, solids 70.0 g) was mixed with 116.7 g of the dispersant obtained in Synthesis Example (1)-12 (a dipropylene glycol solution of the copolymer of benzyl methacrylate (52.4 mol%), and methacrylic acid (47.6 mol%), Mw=83,000, acid value 195 mgKOH) (solid content 30.0%, solids 35.0 g), then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 19 hours at 4200 rpm using MiniCer (manufactured by Netzch) filled with 0.2 to 0.3 mmφ beads made of polystyrene formed with recirculation, and washed with water to provide 460 g of a crude pigment dispersion liquid (2)-16 with a pigment concentration of 12.4 wt% (average volume particle diameter Mv=90.6 nm).

The obtained crude pigment dispersion liquid (2)-16 460 g was added with Denacol EX-321 (manufactured by Nagase Chemtex Co., Ltd.) 2.8 g, 6.18% boric acid aqueous solution 2.0 g, and water 70g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 480 g of a pigment dispersion liquid (2)-23 with a pigment concentration of 10.2% was obtained. Viscosity: 2.8 mPa·S.

Example (2)-24

295.1 g of the azo pigment paste (2)-1 (solid content 30.5%, solids 90.0 g) was mixed with 146.0 g of the dispersant obtained in Synthesis Example (1)-6 (a dipropylene glycol solution of the copolymer of benzyl methacrylate (66.7 mol%) and methacrylic acid (33.3 mol%), Mw=83,000, acid value 140 mgKOH) (solid content 30.8%, solids 45.0 g), and water 3.8 g, and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 28 hours at 4200 rpm using MiniCer (manufactured by Netzch) filled with 0.2 to 0.3 mmφ beads made of polystyrene formed with recirculation, and washed with water to provide 680 g of a crude pigment dispersion liquid (2)-17 with a pigment concentration of 10.4 wt% (average volume particle diameter Mv=98.9 nm).

The obtained crude pigment dispersion liquid (2)-17 680 g was added with Denacol EX-321 (manufactured by Nagase Chemtex Co., Ltd.) 3.5 g, and 6.18% boric acid aqueous solution 24.8 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 610 g of a pigment dispersion liquid (2)-24 with a pigment concentration of 10.1% was obtained. Viscosity: 2.5 mPa·S.

Example (2)-25

524.6 g of the azo pigment paste (2)-1 (solid content 30.5%, solids 160.0 g) was mixed with 228.6 g of the dispersant obtained in Synthesis Example (1)-7 (a dipropylene glycol solution of the copolymer of benzyl methacrylate (66.7 mol%) and methacrylic acid (33.3 mol%), Mw=25,000, acid value 128 mgKOH) (solid content 35%, solids 80.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 24 hours at 4200 rpm using MiniCer (manufactured by Netzch) filled with 0.2 to 0.3 mmφ beads made of polystyrene formed with recirculation, and washed with water to provide 1150 g of a crude pigment dispersion liquid (2)-18 with a pigment concentration of 12.7 wt% (average volume particle diameter Mv=95.4 nm).

The obtained crude pigment dispersion liquid (2)-18 1150 g was added with Denacol EX-321 (manufactured by Nagase Chemtex Co., Ltd.) 7.2 g, 6.18% boric acid aqueous solution 51.2 g, and water 300g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 1320 g of a pigment dispersion liquid (2)-25 with a pigment concentration of 10.1% was obtained. Viscosity: 1.6 mPa·S.

Example (2)-26

350.3 g of the azo pigment paste (2)-2 (solid content 25.7%, solids 90.0 g) was mixed with 292.0 g of the dispersant obtained in Synthesis Example (1)-6 (a dipropylene glycol solution of the copolymer of benzyl methacrylate

(66.7 mol%) and methacrylic acid (33.3 mol%), Mw=83,000, acid value 140 mgKOH) (solid content 30.8%, solids 90.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 10 hours at 4200 rpm using MiniCer (manufactured by Netzch) filled with 0.2 to 0.3 mmφ beads made of polystyrene formed with recirculation, and washed with water to provide 580 g of a crude pigment dispersion liquid (2)-19 with a pigment concentration of 11.9 wt% (average volume particle diameter Mv=94.5 nm).

The obtained crude pigment dispersion liquid (2)-19 580 g was added with Denacol EX-321 (manufactured by Nagase Chemtex Co., Ltd.) 6.8 g, 6.18% boric acid aqueous solution 48.3 g, and water 50g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 540 g of a pigment dispersion liquid (2)-26 with a pigment concentration of 10.1% was obtained. Viscosity: 2.9 mPa·S.

Example (2)-27

A pigment dispersion liquid (2)-27 was prepared by replacing the azo pigment in Example (2)-6 with the azo pigment (2)-3. The dispersion required 11 hours (average volume particle diameter Mv=91.3 nm). Viscosity: 2.4 mPa·S.

Example (2)-28

A pigment dispersion liquid (2)-28 was prepared by replacing the azo pigment in Example (2)-6 with the azo pigment (2)-4. The dispersion required 15 hours (average volume particle diameter Mv=93.6 nm). Viscosity: 2.5 mPa·S.

Example (2)-29

A pigment dispersion liquid (2)-29 was prepared by replacing the azo pigment in Example (2)-6 with the azo pigment (2)-5. The dispersion required 31 hours (average volume particle diameter Mv=98.4 nm). Viscosity: 2.6 mPa·S.

Example (2)-30

A pigment dispersion liquid (2)-30 was prepared by replacing the azo pigment in Example (2)-6 with the azo pigment (2)-6. The dispersion required 35 hours (average volume particle diameter Mv=94.8 nm). Viscosity: 2.6 mPa·S.

Example (2)-31

A pigment dispersion liquid (2)-31 was prepared by replacing the azo pigment in Example (2)-6 with a mixture of the azo pigment (2)-2 and the azo pigment (2)-7 (mixing ratio : (2)-2/(2)-7=70/30). The dispersion required 15 hours (average volume particle diameter Mv=92.6 nm). Viscosity: 2.4 mPa·S.

Example (2)-32

A pigment dispersion liquid (2)-32 was prepared by replacing the azo pigment in Example (2)-6 with a mixture of the azo pigment (2)-2 and the azo pigment (2)-8 (mixing ratio : (2)-2/(2)-8=90/10). The dispersion required 11 hours (average volume particle diameter Mv=96.4 nm). Viscosity: 2.4 mPa·S.

Example (2)-33

A pigment dispersion liquid (2)-33 was prepared by replacing the azo pigment in Example (2)-6 with a mixture of the azo pigment (2)-2 and the azo pigment (2)-9 (mixing ratio : (2)-2/(2)-9=80/20). The dispersion required 21 hours (average volume particle diameter Mv=97.5 nm). Viscosity: 2.5 mPa·S.

Example (2)-34

A pigment dispersion liquid (2)-34 was prepared by replacing the azo pigment in Example (2)-6 with a mixture of the azo pigment (2)-2 and the azo pigment (2)-10 (mixing ratio : (2)-2/(2)-10=70/30). The dispersion required 22 hours (average volume particle diameter Mv=94.3 nm). Viscosity: 2.5 mPa·S.

Example (2)-35

A pigment dispersion liquid (2)-35 was prepared by replacing the azo pigment in Example (2)-6 with a mixture of the azo pigment (2)-2 and the azo pigment (2)-11 (mixing ratio : (2)-2/(2)-11=60/40). The dispersion required 18 hours (average volume particle diameter Mv=98.1 nm). Viscosity: 2.4 mPa·S.

Example (2)-36

A pigment dispersion liquid (2)-36 was prepared by replacing the azo pigment in Example (2)-6 with a mixture of the azo pigment (2)-2 and the azo pigment (2)-12 (mixing ratio : (2)-2/(2)-12=90/10). The dispersion required 18 hours (average volume particle diameter Mv=92.1 nm). Viscosity: 2.4 mPa·S.

Example (2)-37

A pigment dispersion liquid (2)-37 was prepared by replacing the azo pigment in Example (2)-6 with a mixture of the azo pigment (2)-2 and the amorphous azo compound (2) (mixing ratio : (2)-2/amorphous(2)=90/10). The dispersion required 22 hours (average volume particle diameter Mv=98.9 nm). Viscosity: 2.6 mPa·S.

Example (2)-38

350.3 g of the azo pigment paste (2)-2 (solid content 25.7%, solids 90.0 g) was mixed with 180.0 g of the dispersant obtained in Synthesis Example (1)-13 (a dipropylene glycol solution of the copolymer of benzyl methacrylate (66.7 mol%) and methacrylic acid (33.3 mol%), Mw=150,000, acid value 142 mgKOH) (solid content 25%, solids 45.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 12 hours at 4200 rpm using MiniCer (manufactured by Netzch) filled with 0.2 to 0.3 mmφ beads made of polystyrene formed with recirculation, and washed with water to provide 558 g of a crude pigment dispersion liquid (2)-20 with a pigment concentration of 12.1 wt% (average volume particle diameter Mv=94.5 nm).

The obtained crude pigment dispersion liquid (2)-20 558 g was added with Denacol EX-321 (manufactured by Nagase Chemtex Co., Ltd.) 3.3 g, 6.18% boric acid aqueous solution 23.6 g, and water 80 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 150,000 and sufficient washing with water, 580 g of a pigment dispersion liquid (2)-38 with a pigment concentration of 9.8% was obtained. Viscosity: 2.9 mPa·S.

Example (2)-39

350.3 g of the azo pigment paste (2)-2 (solid content 25.7%, solids 90.0 g) was mixed with 128.6 g of dispersant obtained in Synthesis Example (1)-14 (a dipropylene glycol solution of the copolymer of benzyl methacrylate (66.7 mol%) and methacrylic acid (33.3 mol%), Mw=15,000, acid value 123 mgKOH) (solid content 35%, solids 45.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 8 hours at 4200 rpm using MiniCer (manufactured by Netzch) filled with 0.2 to 0.3 mmφ beads made of polystyrene formed with recirculation, and washed with water to provide 614 g of a crude pigment dispersion liquid (2)-21 with a pigment concentration of 13.4 wt% (average volume particle diameter Mv=91.8 nm).

The obtained crude pigment dispersion liquid (2)-21 614 g was added with Denacol EX-321 (manufactured by Nagase Chemtex Co., Ltd.) 4.0 g, 6.18% boric acid aqueous solution 28.8 g, and water 150 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 10,000 and sufficient washing with water, 740 g of a pigment dispersion liquid (2)-39 with a pigment concentration of 9.6% was obtained. Viscosity: 1.4 mPa·S.

Example (2)-40

273.1 g of the pigment paste (2)-2 (solid content 25.7%, solids 70.0 g) was mixed with 116.7 g of the dispersant obtained in Synthesis Example (1)-15 (a dipropylene glycol solution of the copolymer of benzyl methacrylate (28.8 mol%)

and methacrylic acid (71.2 mol%), Mw=56,000, acid value 343 mgKOH) (solid content 30.0%, solids 35.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 15 hours at 4200 rpm using MiniCer (manufactured by Netzch) filled with 0.2 to 0.3 mmφ beads made of polystyrene formed with recirculation, and washed with water to provide 490 g of a crude pigment dispersion liquid (2)-40 with a pigment concentration of 11.8 wt% (average volume particle diameter Mv=92.8 nm).

The obtained crude pigment dispersion liquid (2)-40 490 g was added with Denacol EX-321 (manufactured by Nagase Chemtex Co., Ltd.) 2.8 g, 6.18% boric acid aqueous solution 20.2 g, and water 50 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 530 g of a pigment dispersion liquid (2)-40 with a pigment concentration of 9.8% was obtained. Viscosity: 3.2 mPa·S.

Example (2)-41

273.1 g of the azo pigment paste (2)-2 (solid content 25.7%, solids 70.0 g) was mixed with 175.0 g of dispersant obtained in Synthesis Example (1)-16 (a dipropylene glycol solution of the copolymer of benzyl methacrylate (91.6 mol%) and methacrylic acid (8.4 mol%), Mw=83,000, acid value 27 mgKOH) (solid content 20.0%, solids 35.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 5 hours at 4200 rpm using MiniCer (manufactured by Netzch) filled with 0.2 to 0.3 mmφ beads made of polystyrene formed with recirculation, and washed with water to provide 440 g of a crude pigment dispersion liquid (2)-41 with a pigment concentration of 13.4 wt% (average volume particle diameter Mv=92.0 nm).

The obtained crude pigment dispersion liquid (2)-41 440 g was added with Denacol EX-321 (manufactured by Nagase Chemtex Co., Ltd.) 0.62 g, 6.18% boric acid aqueous solution 4.4 g, and water 130 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 500 g of a pigment dispersion liquid (2)-41 with a pigment concentration of 10.1% was obtained. Viscosity: 2.2 mPa·S.

Example (2)-42

A pigment dispersion liquid (2)-42 was prepared without cross-linking by replacing the dispersant in Example (2)-24 with sodium oleate 45 g (average volume particle diameter Mv=93.2 nm). Viscosity: 1.4 mPa·S.

Example (2)-43

A pigment dispersion liquid (2)-43 was prepared by adjusting the amount of the dispersant in Example (2)-6 to 29.2 g (average volume particle diameter Mv=92.0 nm). Viscosity: 1.4 mPa·S.

Example (2)-44

A pigment dispersion liquid (2)-44 was prepared by adjusting the amount of the dispersant in Example (2)-6 to 321 g (average volume particle diameter Mv=99.2 nm). Viscosity: 3.3 mPa·S.

Example (2)-45

It was intended to prepare a pigment dispersion liquid (2)-45 by replacing the dispersant in Example (2)-6 with a polymer 225 g of a dipropylene glycol solution of the copolymer of benzyl methacrylate (66.7 mol%), and methacrylic acid (33.3 mol%), Mw=250,000, acid value=146 mgKOH/g (solid content 20%, solids 45 g), but the desired dispersion was not obtained due to gelation during a cross-linking reaction.

Example (2)-46

A pigment dispersion liquid (2)-46 was prepared by replacing the dispersant in Example (2)-6 with a polymer 128.6 g of a dipropylene glycol solution of the copolymer of benzyl methacrylate (66.7 mol%), and methacrylic acid (33.3

mol%), Mw=5,000, acid value=120 mgKOH/g (solid content 35%, solids 45 g). The dispersion required 8 hours (average volume particle diameter Mv=91.2 nm). Viscosity: 1.4 mPa·S.

Example (2)-47

It was intended to prepare a pigment dispersion liquid (2)-47 by replacing the azo pigment in Example (2)-6 with the azo pigment (2)-13, but the average volume particle diameter was not 180 nm or less. Viscosity: 2.7 mPa·S.

Example (2)-48

622.6 g of the azo pigment paste (2)-2 (solid content 25.7%, solids 160.0 g) was mixed with 68.6 g of dispersant obtained in Synthesis Example (1)-7 (a dipropylene glycol solution of the copolymer of benzyl methacrylate (66.7 mol%) and methacrylic acid (33.3 mol%), Mw=25,000, acid value 128 mgKOH) (solid content 35%, solids 24.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 22 hours at 4200 rpm using MiniCer (manufactured by Netzch) filled with 0.2 to 0.3 mmφ beads made of polystyrene formed with recirculation, and washed with water to provide 980 g of a crude pigment dispersion liquid (2)-48 with a pigment concentration of 14.5 wt% (average volume particle diameter Mv=91.6 nm).

The obtained crude pigment dispersion liquid (2)-48 980 g was added with Denacol EX-321 (manufactured by Nagase Chemtex Co., Ltd.) 0.5 g, 6.18% boric acid aqueous solution 3.2 g, and water 400 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 1100 g of a pigment dispersion liquid (2)-48 with a pigment concentration of 9.6% was obtained. Viscosity: 1.5 mPa·S.

Example (2)-49

622.6 g of the azo pigment paste (2)-2 (solid content 25.7%, solids 160.0 g) was mixed with 114.3 g of dispersant obtained in Synthesis Example (1)-7 (a dipropylene glycol solution of the copolymer of benzyl methacrylate (66.7 mol%) and methacrylic acid (33.3 mol%), Mw=25,000, acid value 128 mgKOH) (solid content 35%, solids 40.0 g), and then was subjected to preliminary dispersion for 1 hour at 2400 rpm by using agitator bead mill MiniZeta (manufactured by Netzch) filled with 1 mmφ beads made of polycarbonate. The obtained preliminary dispersion liquid was dispersed for 20 hours at 4200 rpm using MiniCer (manufactured by Netzch) filled with 0.2 to 0.3 mmφ beads made of polystyrene formed with recirculation, and washed with water to provide 1050 g of a crude pigment dispersion liquid (2)-49 with a pigment concentration of 13.8 wt% (average volume particle diameter Mv=91.6 nm).

The obtained crude pigment dispersion liquid (2)-49 1050 g was added with Denacol EX-321 (manufactured by Nagase Chemtex Co., Ltd.) 0.8 g, 6.18% boric acid aqueous solution 5.4 g, and water 350 g, followed by stirring at 70°C for 5 hours. After the reaction was completed, the resultant product was cooled to room temperature, and passed through a filter with a pore diameter of 1.0 μm so as to remove coarse particles, and then coarse particles were further precipitated by a centrifuge (at 7000 rpm, for 10 minutes). After the precipitated solids were removed, through a filter with molecular weight cut off of 50,000 and sufficient washing with water, 1090 g of a pigment dispersion liquid (2)-49 with a pigment concentration of 10.5% was obtained. Viscosity: 1.6 mPa·S.

Comparative Example (2)-1

A comparative pigment dispersion liquid (2)-1 was prepared by replacing the azo pigment (2)-1 in Example (2)-24 with P.Y.180 powder 90.0 g, but the average volume particle diameter Mv was not 150 nm or less (average volume particle diameter Mv=153.1 nm). Viscosity: 2.6 mPa·S.

Comparative Example (2)-2

A comparative pigment dispersion liquid (2)-1 was prepared by replacing the azo pigment (2)-1 in Example (2)-24 with P.Y.155 powder 90.0 g (average volume particle diameter Mv=91.2 nm). Viscosity: 2.4 mPa·S.

In table 6 below, the following abbreviations are used:

| | |
|---|---|
| Bn MA | benzyl methacrylate |
| MAA | methacrylic acid |

MMA methyl methacrylate
2-EHMA 2-ethylhexyl methacrylate

Table 6

| | Pigment | | Dispersion | | | | Cross-linking | |
|---|---|---|---|---|---|---|---|---|
| | Kind of pigment | Particle diameter | Dispersant | D/P | Mw | Acid value | Degree of cross-linking | Cross-linking agent |
| Example (2)-1 | (2)-2 | 0.05 μm | BnMA/MAA | 0.5 | 83,000 | 140 | 0 | |
| Example (2)-2 | (2)-2 | 0.05 μm | BnMA/MAA | 0.5 | 25,000 | 128 | 0 | |
| Example (2)-3 | (2)-2 | 0.05 μm | BnMA/MAA | 0.7 | 83,000 | 140 | 0.28 | Ex321 |
| Example (2)-4 | (2)-2 | 0.05 μm | 2-EHMA/MMA/MAA | 0.5 | 83,000 | 154 | 0.25 | Ex321 |
| Example (2)-5 | (2)-2 | 0.05 μm | BnMA/MAA | 0.3 | 83,000 | 140 | 0.28 | Ex321 |
| Example (2)-6 | (2)-2 | 0.05 μm | BnMA/MAA | 0.5 | 83,000 | 140 | 0.28 | Ex321 |
| Example (2)-7 | (2)-2 | 0.05 μm | BnMA/MAA | 0.4 | 83,000 | 140 | 0.28 | Ex321 |
| Example (2)-8 | (2)-2 | 0.05 μm | BnMA/MAA | 0.5 | 25,000 | 128 | 0.31 | Ex321 |
| Example (2)-9 | (2)-2 | 0.05 μm | BnMA/MAA | 0.5 | 25,000 | 128 | 0.07 | Ex321 |
| Example (2)-10 | (2)-2 | 0.05 μm | BnMA/MAA | 0.5 | 83,000 | 140 | 0.06 | Ex321 |
| Example (2)-11 | (2)-2 | 0.05 μm | BnMA/MAA | 0.5 | 83,000 | 140 | 0.36 | Ex321 |
| Example (2)-12 | (2)-2 | 0.05 μm | BnMA/MAA | 0.5 | 83,000 | 140 | 0.28 | Ex521 |
| Example (2)-13 | (2)-2 | 0.05 μm | BnMA/MAA | 0.4 | 25,000 | 128 | 0.31 | Ex321 |
| Example (2)-14 | (2)-2 | 0.05 μm | BnMA/MAA | 0.4 | 25,000 | 128 | 0.07 | Ex321 |
| Example (2)-15 | (2)-2 | 0.05 μm | BnMA/MAA | 0.3 | 25,000 | 128 | 0.31 | Ex321 |
| Example (2)-16 | (2)-2 | 0.05 μm | BnMA/MAA | 0.3 | 25,000 | 128 | 0.13 | Ex321 |
| Example (2)-17 | (2)-2 | 0.05 μm | BnMA/MAA | 0.5 | 36,000 | 81 | 0.10 | Ex321 |
| Example (2)-18 | (2)-2 | 0.05 μm | BnMA/MAA | 0.5 | 61,000 | 136 | 0.06 | Ex321 |
| Example (2)-19 | (2)-2 | 0.05 μm | BnMA/MAA | 0.5 | 61,000 | 136 | 0.29 | Ex321 |

(continued)

| | Pigment | | Dispersion | | | | Cross-linking | |
|---|---|---|---|---|---|---|---|---|
| | Kind of pigment | Particle diameter | Dispersant | D/P | Mw | Acid value | Degree of cross-linking | Cross-linking agent |
| Example (2)-20 | (2)-2 | 0.05 μm | BnMA/MAA | 0.5 | 41,000 | 135 | 0.06 | Ex321 |
| Example (2)-21 | (2)-2 | 0.05 μm | BnMA/MAA | 0.5 | 41,000 | 135 | 0.29 | Ex321 |
| Example (2)-22 | (2)-2 | 0.05 μm | BnMA/MAA | 0.5 | 31,000 | 106 | 0.08 | Ex321 |
| Example (2)-23 | (2)-2 | 0.05 μm | BnMA/MAA | 0.5 | 83,000 | 195 | 0.20 | Ex321 |
| Example (2)-24 | (2)-1 | 0.5 μm | BnMA/MAA | 0.5 | 83,000 | 140 | 0.28 | Ex321 |
| Example (2)-25 | (2)-1 | 0.5 μm | BnMA/MAA | 0.5 | 25,000 | 128 | 0.31 | Ex321 |
| Example (2)-26 | (2)-2 | 0.05 μm | BnMA/MAA | 1.0 | 83,000 | 140 | 0.28 | Ex321 |
| Example (2)-27 | (2)-3 | 0.1 μm | BnMA/MAA | 0.5 | 83,000 | 140 | 0.28 | Ex321 |
| Example (2)-28 | (2)-4 | 0.2 μm | BnMA/MAA | 0.5 | 83,000 | 140 | 0.28 | Ex321 |
| Example (2)-29 | (2)-5 | 2 μm | BnMA/MAA | 0.5 | 83,000 | 140 | 0.28 | Ex321 |
| Example (2)-30 | (2)-6 | 10 μm | BnMA/MAA | 0.5 | 83,000 | 140 | 0.28 | Ex321 |
| Example (2)-31 | (2)-2, (2)-7 | 0.05 μm | BnMA/MAA | 0.5 | 83,000 | 140 | 0.28 | Ex321 |
| Example (2)-32 | (2)-2, (2)-8 | 0.05 μm | BnMA/MAA | 0.5 | 83,000 | 140 | 0.28 | Ex321 |
| Example (2)-33 | (2)-2, (2)-9 | 0.05 μm | BnMA/MAA | 0.5 | 83,000 | 140 | 0.28 | Ex321 |
| Example (2)-34 | (2)-2, (2)-10 | 0.05 μm | BnMA/MAA | 0.5 | 83,000 | 140 | 0.28 | Ex321 |
| Example (2)-35 | (2)-2, (2)-11 | 0.05 μm | BnMA/MAA | 0.5 | 83,000 | 140 | 0.28 | Ex321 |
| Example (2)-36 | (2)-2, (2)-12 | 0.05 μm | BnMA/MAA | 0.5 | 83,000 | 140 | 0.28 | Ex321 |
| Example (2)-37 | (2)-2, (2) | 0.05 μm | BnMA/MAA | 0.5 | 83,000 | 140 | 0.28 | Ex321 |
| Example (2)-38 | (2)-2 | 0.05 μm | BnMA/MAA | 0.5 | 150,000 | 142 | 0.28 | Ex321 |
| Example (2)-39 | (2)-2 | 0.05 μm | BnMA/MAA | 0.5 | 15,000 | 123 | 0.32 | Ex321 |
| Example (2)-40 | (2)-2 | 0.05 μm | BnMA/MAA | 0.5 | 56,000 | 343 | 0.11 | Ex321 |

(continued)

| | Pigment | | Dispersion | | | | Cross-linking | |
|---|---|---|---|---|---|---|---|---|
| | Kind of pigment | Particle diameter | Dispersant | D/P | Mw | Acid value | Degree of cross-linking | Cross-linking agent |
| Example (2)-41 | (2)-2 | 0.05 μm | BnMA/MAA | 0.5 | 83,000 | 27 | 0.31 | Ex321 |
| Example (2)-42 | (2)-1 | 0.5 μm | Sodium oleate | 0.5 | 304 | - | 0 | - |
| Example (2)-43 | (2)-2 | 0.05 μm | BnMA/MAA | 0.1 | 83,000 | 140 | 0.28 | Ex321 |
| Example (2)-44 | (2)-2 | 0.05 μm | BnMA/MAA | 1.1 | 83,000 | 140 | 0.28 | Ex321 |
| Example (2)-45 | (2)-2 | 0.05 μm | BnMA/MAA | 0.5 | 250,000 | 146 | 0.27 | Ex321 |
| Example (2)-46 | (2)-2 | 0.05 μm | BnMA/MAA | 0.5 | 5,000 | 120 | 0.33 | Ex321 |
| Example (2)-47 | (2)-13 | 80 μm | BnMA/MAA | 0.5 | 83,000 | 140 | 0.28 | Ex321 |
| Example (2)-48 | (2)-2 | 0.05 μm | BnMA/MAA | 0.15 | 25,000 | 128 | 0.07 | Ex321 |
| Example (2)-49 | (2)-2 | 0.05 μm | BnMA/MAA | 0.25 | 25,000 | 128 | 0.07 | Ex321 |
| Comp. Example (2)-1 | P.Y. 180 | 0.2 μm | BnMA/MAA | 0.5 | 83,000 | 140 | 0.28 | Ex321 |
| Comp. Example (2)-2 | P.Y. 155 | 0.1 μm | BnMA/MAA | 0.5 | 83,000 | 140 | 0.28 | Ex321 |

- number average molecular weight (Mw) : measured by GPC manufactured by Agilent.
- acid value : measured by an automatic titrator GT-100 manufactured by Mitsubishi Chemical Corporation.

(measurement condition)

titrant : N/100 sodium hydroxide solution
mode: TEST
detection: mV Sens
injection speed : 100 μL/s
maximum quantitation: 20.0 mL

A test sample 0.5 g was weighed into 100 mL beaker, stirred and dissolved with addition of THF 55 mL, and added with ultrapure water 5 mL. This solution was measured by following titration conditions. A blank test was performed in the same manner, and the content was calculated by the following Equation.

$$\text{Acid value} = \frac{0.01 \times f \times (\text{Titration amount (mL)} - \text{Blank (mL)}) \times 56.11}{\text{Weight of sample (g)} \times \text{Solid concentration (\%)} \times 0.01}$$

- Degree of cross-linking: [a theoretically decreased value of an acid value by addition of a cross-linking agent]was set as a decreased acid value, and the degree was calculated as a ratio of the decreased acid value with respect to an acid value before a reaction with the cross-linking agent, that is, [decreased acid value] / [acid value of dispersant].

Hereinafter, the present invention will be described in more detail based on Examples, but is not limited to these Examples at all.

In Examples described below, pigment dispersion liquids obtained from Examples (2)-1 to (2)-49, and Comparative Examples (2)-1 and (2)-2 are used.

Evaluation results on pigment dispersion liquids obtained from Examples (2)-1 to (2)-49, and Comparative Examples (2)-1 and (2)-2 are noted in Table 7.

[Dispersibility]

The dispersibility of the present invention was evaluated as follows. When pigment dispersion was performed, a case where a volume average particle diameter became 100 nm or less for less than 25 hours of dispersion time was evaluated as A, a case of 100 nm or less for less than 35 hours was evaluated as B, a case of 100 nm or less for greater than 35 hours was evaluated as C, and a case of greater than 100 nm was evaluated as D.

[Storage stability]

Each of pigment dispersion liquids prepared in Examples (2)-1 to (2)-41, (2)-43 to (2)-45, and (2)-47 to (2)-49, and Comparative Example 1 was stood still at 60°C for 2 weeks, and change rates of viscosity and particle diameter were measured. Evaluation was as follows. Both change rates were less than 5%: A, one is less than 5% but the other one is less than 10%: B, both were less than 10%: as C, and at least any one was greater than 10%: D.

[Initial viscosity]

On pigment dispersion liquids, initial viscosity of 3.0 or less was evaluated as A, and initial viscosity of greater than 3.0 was evaluated as B.

Table 7

| | dispersibility | Storage stability | Initial viscosity |
|---|---|---|---|
| Pigment dispersion liquid (2)-1 | A | B | A |
| Pigment dispersion liquid (2)-2 | A | B | A |
| Pigment dispersion liquid (2)-3 | A | B | A |
| Pigment dispersion liquid (2)-4 | A | A | A |
| Pigment dispersion liquid (2)-5 | A | A | A |
| Pigment dispersion liquid (2)-6 | A | A | A |
| Pigment dispersion liquid (2)-7 | A | A | A |
| Pigment dispersion liquid (2)-8 | A | A | A |
| Pigment dispersion liquid (2)-9 | A | A | A |
| Pigment dispersion liquid (2)-10 | A | A | A |
| Pigment dispersion liquid (2)-11 | A | B | A |
| Pigment dispersion liquid (2)-12 | A | A | A |

(continued)

| | dispersibility | Storage stability | Initial viscosity |
|---|---|---|---|
| Pigment dispersion liquid (2)-13 | A | A | A |
| Pigment dispersion liquid (2)-14 | A | A | A |
| Pigment dispersion liquid (2)-15 | A | A | A |
| Pigment dispersion liquid (2)-16 | A | A | A |
| Pigment dispersion liquid (2)-17 | A | B | A |
| Pigment dispersion liquid (2)-18 | A | A | A |
| Pigment dispersion liquid (2)-19 | A | A | A |
| Pigment dispersion liquid (2)-20 | A | A | A |
| Pigment dispersion liquid (2)-21 | A | A | A |
| Pigment dispersion liquid (2)-22 | A | A | A |
| Pigment dispersion liquid (2)-23 | A | A | A |
| Pigment dispersion liquid (2)-24 | B | A | A |
| Pigment dispersion liquid (2)-25 | B | A | A |
| Pigment dispersion liquid (2)-26 | A | A | A |
| Pigment dispersion liquid (2)-27 | A | A | A |
| Pigment dispersion liquid (2)-28 | A | A | A |
| Pigment dispersion liquid (2)-29 | B | A | A |
| Pigment dispersion liquid (2)-30 | B | A | A |
| Pigment dispersion liquid (2)-31 | A | A | A |
| Pigment dispersion liquid (2)-32 | A | A | A |
| Pigment dispersion liquid (2)-33 | A | A | A |
| Pigment dispersion liquid (2)-34 | A | A | A |
| Pigment dispersion liquid (2)-35 | A | A | A |
| Pigment dispersion liquid (2)-36 | A | A | A |
| Pigment dispersion liquid (2)-37 | A | A | A |
| Pigment dispersion liquid (2)-38 | A | B | A |
| Pigment dispersion liquid (2)-39 | A | A | A |
| Pigment dispersion liquid (2)-40 | A | B | B |
| Pigment dispersion liquid (2)-41 | A | D | A |
| Pigment dispersion liquid (2)-43 | B | D | A |
| Pigment dispersion liquid (2)-44 | B | B | B |
| Pigment dispersion liquid (2)-45 | B | - | - |
| Pigment dispersion liquid (2)-47 | D | D | A |
| Pigment dispersion liquid (2)-48 | A | A | A |
| Pigment dispersion liquid (2)-49 | A | A | A |
| Comparative Pigment dispersion liquid 1 | D | D | A |

[Example (2)-II]

Hereinafter, Examples of a pigment ink for inkjet recording of the present invention will be described.
A pigment ink for inkjet recording of the present invention was prepared and evaluated by the following conditions.

[Pigment ink]

30.6 g of the pigment dispersion liquid (2)-1 was added with a mixed solution of water 10.3 g, ethylene glycol 8.25 g, triethylene glycolmonobutylether 5.50 g, and Surfynol 485, 0.39 g and sufficiently stirred, so as to provide 55 g of a pigment ink(2)-1 with a pigment concentration of 5 wt%.
In the same manner, by using the pigment dispersion liquids in (2)-1 to (2)-44, and (2)-46 to (2)-49, and Comparative Examples (2)-1 and (2)-2, pigment inks of (2)-1 to (2)-44, and (2)-46 to (2)-49, and Comparative Examples (2)-1 and (2)-2 with a pigment concentration of 5 wt% were obtained, respectively.
Evaluation on the pigment inks using the pigment dispersion liquids of Examples and Comparative Examples is noted in Table 8.

[Evaluation]

By using the water-based ink as a yellow ink, and a commercially available printer (model number: PX-V630) manufactured by Seiko Epson Corporation, solid printing was performed on photo paper Kurisupia manufactured by Seiko Epson, PT-101 manufactured by Canon, and advanced photopaper manufactured by HP with a recommend mode and a high quality.

[Quality of printed matter]

Samples solid-printed on photo paper Kurisupia manufactured by Seiko Epson, PT-101 manufactured by Canon, and advanced photopaper manufactured by HP were evaluated with naked eye. Evaluation is as follows. No nonuniformity exists and glossiness is good: A, no nonuniformity exists, but glossiness is insufficient: B, nonuniformity exists but glossiness is good: C, nonuniformity exists and glossiness is insufficient: D.

[Discharge stability]

When solid-printing was repeatedly performed using a printer manufactured by Seiko Epson (model number: PX-V630), evaluation was as follows. On printed 300 sheets, blur is not seen: A, on printed 201 to 300 sheets, blur is seen: B, on printed 100 to 200 sheets, blur is seen: C, on printed 1 to 99 sheets, blur is seen: D.

[Storage stability]

Each of pigment inks was stood still at 60°C for 2 weeks, and change rates of viscosity and particle diameter were measured. Evaluation was as follows. Both change rates were less than 5%: A, one is less than 5% but the other one is less than 10%: B, both were less than 10%: as C, and at least any one was greater than 10%: D.

[Light resistance]

By using the above described printer, an applied matter at image density 1.0 was made on photopaper Kurisupia manufactured by Seiko Epson, and by using a fademeter, xenon light (170000 lux ; in presence of TAC filter) was irradiated for 28 days. Image densities before and after the xenon irradiation were measured using a reflection densitometer, and the pigment ink was evaluated as follows. Colorant residual ratio [(concentration after irradiation /concentration before irradiation)×100%] 95% or more: A, 90% or more: B, 80% or more: C, and less than 70%: D .

[Scratch resistance]

After an image solid-printed Kurisupia manufactured by Seiko Epson was rubbed with an eraser, and the image was evaluated with naked eye. Evaluation was as follows. No significant change between before and after: A, and change is recognized: B.

Table 8

| | Storage stability | Discharge stability | Image quality | light resistance | scratch resistance |
|---|---|---|---|---|---|
| Pigment ink 1 | B | A | B | A | A |
| Pigment ink 2 | B | A | B | A | A |
| Pigment ink 3 | B | A | A | A | A |
| Pigment ink 4 | A | A | A | A | A |
| Pigment ink 5 | A | A | A | A | A |
| Pigment ink 6 | A | A | A | A | A |
| Pigment ink 7 | A | A | A | A | A |
| Pigment ink 8 | A | A | A | A | A |
| Pigment ink 9 | A | A | A | A | A |
| Pigment ink 10 | A | A | A | A | A |
| Pigment ink 11 | B | A | A | A | A |
| Pigment ink 12 | A | A | A | A | A |
| Pigment ink 13 | A | A | A | A | A |
| Pigment ink 14 | A | A | A | A | A |
| Pigment ink 15 | A | A | A | A | A |
| Pigment ink 16 | A | A | A | A | A |
| Pigment ink 17 | B | A | A | A | A |
| Pigment ink 18 | A | A | A | A | A |
| Pigment ink 19 | A | A | A | A | A |
| Pigment ink 20 | A | A | A | A | A |
| Pigment ink 21 | A | A | A | A | A |
| Pigment ink 22 | A | A | A | A | A |
| Pigment ink 23 | A | B | A | A | A |
| Pigment ink 24 | A | A | A | A | A |
| Pigment ink 25 | A | B | A | A | A |
| Pigment ink 26 | A | A | A | A | A |
| Pigment ink 27 | A | A | A | A | A |
| Pigment ink 28 | A | A | A | A | A |
| Pigment ink 29 | A | A | A | A | A |
| Pigment ink 30 | A | A | A | A | A |
| Pigment ink 31 | A | A | A | A | A |
| Pigment ink 32 | A | A | A | A | A |
| Pigment ink 33 | A | A | A | A | A |
| Pigment ink 34 | A | A | A | A | A |
| Pigment ink 35 | A | A | A | A | A |
| Pigment ink 36 | A | A | A | A | A |
| Pigment ink 37 | A | A | A | A | A |

(continued)

| | Storage stability | Discharge stability | Image quality | light resistance | scratch resistance |
|---|---|---|---|---|---|
| Pigment ink 38 | B | B | A | A | A |
| Pigment ink 39 | A | A | B | A | A |
| Pigment ink 48 | A | A | B | A | A |
| Pigment ink 49 | A | A | B | A | A |
| Comparative Pigment ink 1 | B | D | B | A | A |
| Comparative Pigment ink 2 | D | B | B | A | A |
| Comparative Pigment ink 3 | B | A | D | A | B |
| Comparative Pigment ink 4 | D | C | B | A | A |
| Comparative Pigment ink 5 | B | D | A | A | A |
| Comparative Pigment ink 7 | B | A | D | A | B |
| Comparative Pigment ink 8 | D | C | A | A | A |
| Comparative Pigment ink 9 | D | C | A | D | A |
| Comparative Pigment ink 10 | C | A | A | D | A |

Industrial Applicability

The present invention may provide a pigment dispersion of a yellow azo pigment which is good in liquid physical properties and excellent in storage stability, and a method of preparing the pigment dispersion of the yellow azo pigment. Especially, the azo pigment dispersion of the present invention is suitable for use in a pigment ink for inkjet recording.

## Claims

**1.** A water-based pigment dispersion comprising a colorant, a dispersant and water, wherein the colorant contains

(1) an azo pigment which is an aggregate of molecules represented by Formula (1) that has characteristic X-ray diffraction peaks at Bragg angles ($2\theta \pm 0.2°$) of 7.2°, 13.4°, 15.0° and 25.9° in CuKa characteristic X-ray diffraction, or a tautomer thereof, or
(2) an azo pigment which is an aggregate of molecules represented by Formula (2) that has characteristic X-ray diffraction peaks at Bragg angles ($2\theta \pm 0.2°$) of 4.8°, 7.2° and 9.7° in CuKa characteristic X-ray diffraction, or a tautomer thereof,

Formula (1)

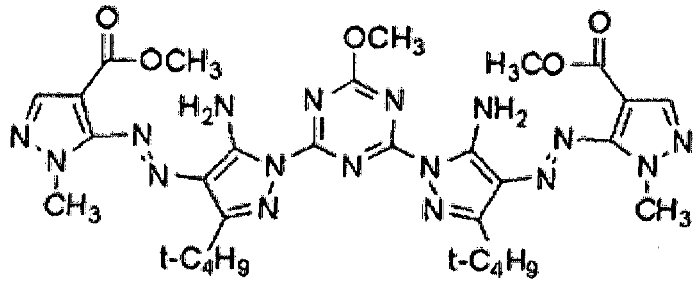

Formula (2)

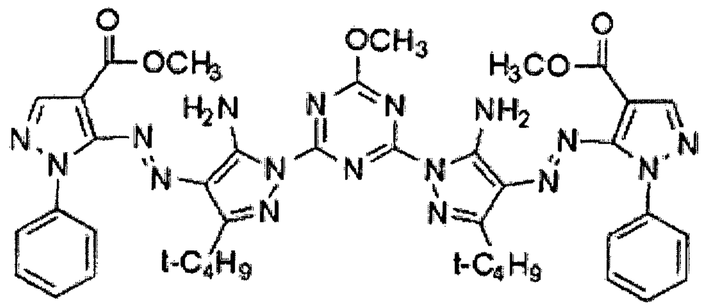

**characterized in that** the dispersant is a water-soluble polymer, and the water-based dispersion is cross-linked by a cross-linking agent.

2. The water-based pigment dispersion according to claim 1,
wherein the water-soluble polymer dispersant has a weight average molecular weight ranging from 10000 to 200000.

3. The water-based pigment dispersion according to claim 1 or 2,
wherein the water-soluble polymer dispersant has at least one carboxyl group, and an acid value of at least 50 mgKOH/g or more.

4. The water-based pigment dispersion according to claim 3,
wherein the water-soluble polymer dispersant has an acid value of 70 mgKOH/g to 160 mgKOH/g.

5. The water-based pigment dispersion according to any one of claims 1 to 4,
wherein when a content of the colorant in the pigment dispersion is P, a content of the dispersant is D, and a ratio of the content D to the content P is a D/P value, the D/P value ranges from 0.15 to 1.0.

6. The water-based pigment dispersion according to any one of claims 1 to 5,
wherein the azo pigment which is the aggregate of molecules represented by Formula (1) or the tautomer thereof has a primary particle diameter ranging from 0.01 μm to 10 μm before dispersion.

7. The water-based pigment dispersion according to any one of claims 1 to 5,
wherein the azo pigment which is the aggregate of molecules represented by Formula (2) or the tautomer thereof has a primary particle diameter ranging from 0.01 μm to 20 μm before dispersion.

8. The water-based pigment dispersion according to claim 7,
wherein the primary particle diameter before the dispersion ranges from 0.01 μm to 0.2 μm.

9. The water-based pigment dispersion according to any one of claims 1 to 8, wherein the cross-linking agent contains at least two epoxy groups.

**10.** The water-based pigment dispersion according to claim 9 , wherein a cross-linking reaction between a carboxyl group and the epoxy group is performed at 100°C or less, and pH of 6 or more.

**11.** The water-based pigment dispersion according to claim 10, wherein the cross-linking reaction is performed at 40 to 85°C.

**12.** The water-based pigment dispersion according to claim 10 or 11, wherein the cross-linking reaction is performed at pH of 7 to 10.

**13.** A method of preparing the water-based pigment dispersion according to any one of claims 1 to 12, comprising performing a cross-linking reaction by mixing components (a) to (d):

(a) 30 parts to 99.7 parts of water,
(b) 0.1 parts to 50 parts of azo pigment which is the aggregate of molecules represented by Formula (1) or the aggregate of molecules represented by Formula (2),
(c) 0.1 parts to 40 parts of vinyl polymer, and
(d) 0.00001 parts to 10 parts of cross-linking agent,

wherein the parts are by mass, and the sum of (a)+(b)+(c)+(d) is 100 parts by mass or less based on 100 parts by mass of total weight of the pigment dispersion.

**14.** The method according to claim 13, wherein the cross-linking reaction is performed at 100°C or less and pH of 6 or more.

**15.** The method according to claim 13, further comprising performing a membrane purification.

**16.** An ink for inkjet recording comprising the water-based pigment dispersion according to any one of claims 1 to 12.

**Patentansprüche**

**1.** Pigment-Dispersion auf Wasserbasis aufweisend einen Farbstoff, ein Dispergiermittel und Wasser, wobei der Farbstoff enthält

(1) ein Azo-Pigment, das ein Aggregat von Molekülen ist, die repräsentiert werden durch Formel (1), das bei der charakteristischen CuKa-Röntgendiffraktion charakteristische Röntgendiffraktionsmaxima bei Bragg-Winkeln ($2\theta \pm 0{,}2°$) von 7,2°, 13,4°, 15,0° und 25,9° hat, oder ein Tautomer davon, oder
(2) ein Azo-Pigment, das ein Aggregat von Molekülen ist, die repräsentiert werden durch Formel (2), das bei der charakteristischen CuKa-Röntgendiffraktion charakteristische Röntgendiffraktionsmaxima bei Bragg-Winkeln ($2\theta \pm 0{,}2°$) von 4,8°, 7,2° und 9,7° hat, oder ein Tautomer davon,

Formel (1)

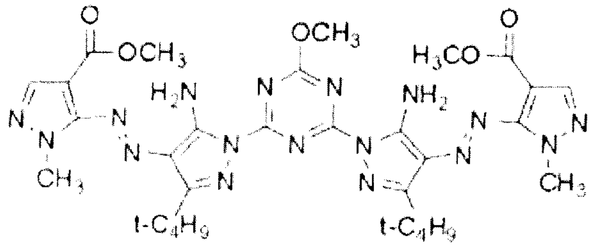

Formel (2)

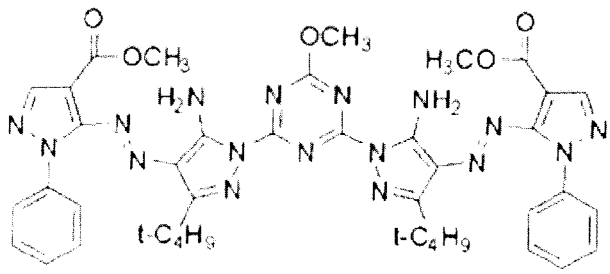

**dadurch gekennzeichnet, dass** das Dispergiermittel ein wasserlösliches Polymer ist und dass die Dispersion auf Wasserbasis mittels eines Vernetzungsmittels vernetzt ist.

**2.** Pigment-Dispersion auf Wasserbasis nach Anspruch 1, wobei das wasserlösliche Polymer-Dispergiermittel eine massegemittelte Molekülmasse im Bereich von 10000 bis 200000 hat.

**3.** Pigment-Dispersion auf Wasserbasis nach Anspruch 1 oder 2, wobei das wasserlösliche Polymer-Dispergiermittel mindestens eine Carboxylgruppe und eine Säurezahl von mindestens 50 mgKOH/g oder mehr hat.

**4.** Pigment-Dispersion auf Wasserbasis nach Anspruch 3, wobei das wasserlösliche Polymer-Dispergiermittel eine Säurezahl von 70 mgKOH/g bis 160 mgKOH/g hat.

**5.** Pigment-Dispersion auf Wasserbasis nach einem der Ansprüche 1 bis 4, wobei wenn ein Gehalt an dem Farbstoff in der Pigment-Dispersion P ist, ein Gehalt an dem Dispergiermittel D ist und ein Verhältnis des Gehalts an D zu dem Gehalt an P ein D/P-Wert ist, der D/P-Wert im Bereich von 0,15 bis 1,0 liegt.

**6.** Pigment-Dispersion auf Wasserbasis nach einem der Ansprüche 1 bis 5, wobei das Azo-Pigment, das das Aggregat von Molekülen, die durch Formel (1) repräsentiert werden, oder das Tautomer davon ist, vor dem Dispergieren einen Ausgangs-Partikeldurchmesser im Bereich von 0,01 μm bis 10 μm hat.

**7.** Pigment-Dispersion auf Wasserbasis nach einem der Ansprüche 1 bis 5, wobei das Azo-Pigment, das das Aggregat von Molekülen, die durch Formel (2) repräsentiert werden, oder das Tautomer davon ist, vor dem Dispergieren einen Ausgangs-Partikeldurchmesser im Bereich von 0,01 μm bis 20 μm hat.

**8.** Pigment-Dispersion auf Wasserbasis nach Anspruch 7, wobei der Ausgangs-Partikeldurchmesser vor dem Dispergieren im Bereich von 0,01 μm bis 0,2 μm liegt.

**9.** Pigment-Dispersion auf Wasserbasis nach einem der Ansprüche 1 bis 8, wobei das Vernetzungsmittel mindestens zwei Epoxygruppen enthält.

**10.** Pigment-Dispersion auf Wasserbasis nach Anspruch 9, wobei eine Vernetzungsreaktion zwischen einer Carboxylgruppe und der Epoxygruppe bei 100° C oder weniger und einem pH von 6 oder mehr durchgeführt wird.

**11.** Pigment-Dispersion auf Wasserbasis nach Anspruch 10, wobei die Vernetzungsreaktion bei 40 bis 85° C durchgeführt wird.

**12.** Pigment-Dispersion auf Wasserbasis nach Anspruch 10 oder 11, wobei die Vernetzungsreaktion bei pH 7 bis 10 durchgeführt wird.

**13.** Verfahren zur Herstellung der Pigment-Dispersion auf Wasserbasis nach einem der Ansprüche 1 bis 12, aufweisend ein Durchführen einer Vernetzungsreaktion durch Mischen der Komponenten (a) bis (d):

(a) 30 Teile bis 99,7 Teile Wasser,
(b) 0,1 Teile bis 50 Teile Azo-Pigment, das das Aggregat von Molekülen, die durch Formel (1) repräsentiert werden, oder das Aggregat von Molekülen, die durch Formel (2) repräsentiert werden, ist,
(c) 0,1 Teile bis 40 Teile Vinyl-Polymer, und
(d) 0,00001 Teile bis 10 Teile Vernetzungsmittel,

wobei die Teile Masseteile sind, und wobei die Summe von (a)+(b)+(c)+(d) 100 Masseteile oder weniger ist auf der Basis von 100 Masseteilen des Gesamtgewichts der Pigment-Dispersion.

**14.** Verfahren nach Anspruch 13,
wobei die Vernetzungsreaktion bei 100° C oder weniger und einem pH von 6 oder mehr durchgeführt wird.

**15.** Verfahren nach Anspruch 13, außerdem aufweisend ein Durchführen einer Reinigung mittels Membran.

**16.** Tinte zur Tintenstrahl-Aufzeichnung aufweisend die Pigment-Dispersion auf Wasserbasis nach einem der Ansprüche 1 bis 12.

**Revendications**

**1.** Dispersion de pigment à base d'eau, comprenant un colorant, un dispersant et de l'eau, dans laquelle le colorant contient :

(1) un pigment azoïque, lequel est un agrégat de molécules représenté par la formule (1) qui présente des pics de diffraction aux rayons X caractéristiques sur des angles de Bragg (2θ ±0,2°) de 7,2°, 13,4°, 15,0° et 25,9° dans une diffraction aux rayons X caractéristique CuKα, ou un tautomère de celui-ci, ou
(2) un pigment azoïque, lequel est un agrégat de molécules représenté par la formule (2) qui présente des pics de diffraction aux rayons X caractéristiques sur des angles de Bragg (2θ ±0,2°) de 4,8°, 7,2° et 9,7° dans une diffraction aux rayons X caractéristique CuKa, ou un tautomère de celui-ci

Formule (1)

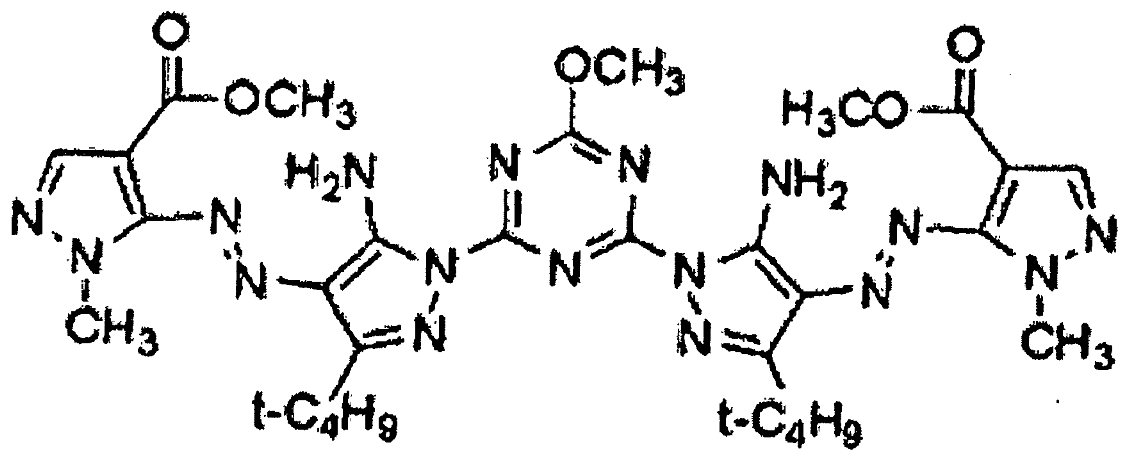

Formule (2)

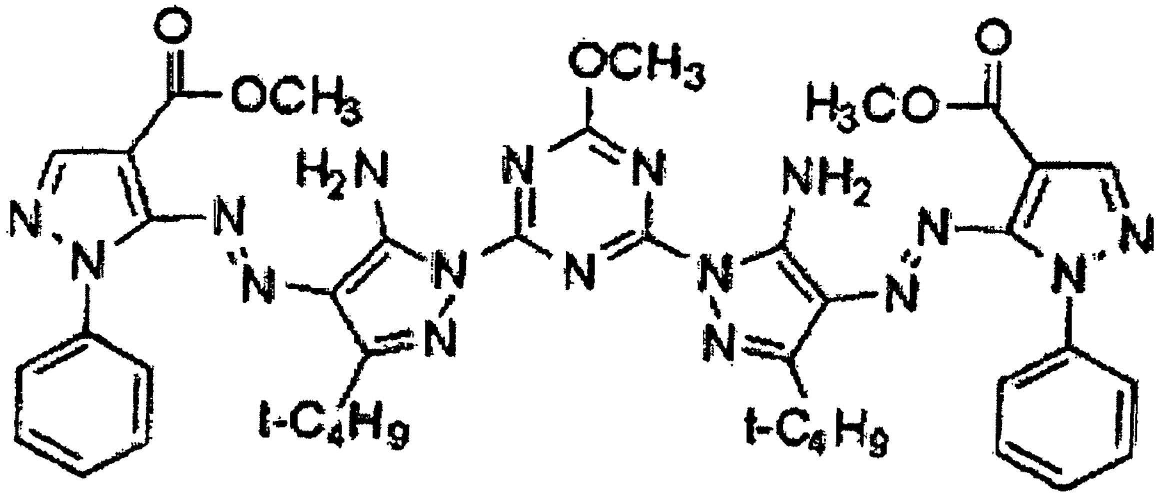

**caractérisée en ce que** le dispersant est un polymère soluble dans l'eau, et la dispersion à base d'eau est réticulée par un agent de réticulation.

2. Dispersion de pigment à base d'eau selon la revendication 1, dans laquelle le dispersant polymère soluble dans l'eau présente un poids moléculaire moyen en poids allant de 10 000 à 200 000.

3. Dispersion de pigment à base d'eau selon la revendication 1 ou 2, dans laquelle le dispersant polymère soluble dans l'eau présente au moins un groupe carboxyle, et un indice d'acide d'au moins 50 mgKOH/g ou plus.

4. Dispersion de pigment à base d'eau selon la revendication 3, dans laquelle le dispersant polymère soluble dans l'eau présente un indice d'acide allant de 70 mgKOH/g à 160 mgKOH/g.

5. Dispersion de pigment à base d'eau selon l'une quelconque des revendications 1 à 4, dans laquelle lorsqu'une teneur du colorant dans la dispersion de pigment est P, une teneur du dispersant est D, et un rapport de la teneur D à la teneur P est une valeur D/P, la valeur D/P s'étend de 0,15 à 1,0.

6. Dispersion de pigment à base d'eau selon l'une quelconque des revendications 1 à 5, dans laquelle le pigment azoïque, lequel est l'agrégat de molécules représenté par la formule (1) ou le tautomère de celui-ci, présente un diamètre de particule primaire allant de 0,01 $\mu$m à 10 $\mu$m avant dispersion.

7. Dispersion de pigment à base d'eau selon l'une quelconque des revendications 1 à 5, dans laquelle le pigment azoïque, lequel est l'agrégat de molécules représenté par la formule (2) ou le tautomère de celui-ci, présente un diamètre de particule primaire allant de 0,01 $\mu$m à 20 $\mu$m avant dispersion.

8. Dispersion de pigment à base d'eau selon la revendication 7, dans laquelle le diamètre de particule primaire avant dispersion s'étend de 0,01 $\mu$m à 0,2 $\mu$m.

9. Dispersion de pigment à base d'eau selon l'une quelconque des revendications 1 à 8, dans laquelle l'agent de réticulation contient au moins deux groupes époxydiques.

10. Dispersion de pigment à base d'eau selon la revendication 9, dans laquelle une réaction de réticulation entre un groupe carboxyle et le groupe époxydique est réalisée à 100 °C ou moins, et avec un pH de 6 ou plus.

11. Dispersion de pigment à base d'eau selon la revendication 10,

dans laquelle la réaction de réticulation est réalisée de 40 à 85 °C.

**12.** Dispersion de pigment à base d'eau selon la revendication 10 ou 11, dans laquelle la réaction de réticulation est réalisée avec un pH de 7 à 10.

**13.** Procédé destiné à préparer la dispersion de pigment à base d'eau selon l'une quelconque des revendications 1 à 12, comprenant la réalisation d'une réaction de réticulation en mélangeant les composants (a) à (d) :

(a) 30 parties à 99,7 parties d'eau ;
(b) 0,1 partie à 50 parties de pigment azoïque, lequel est l'agrégat de molécules représenté par la formule (1) ou l'agrégat de molécules représenté par la formule (2) ;
(c) 0,1 partie à 40 parties de polymère de vinyle, et
(d) 0,00001 partie à 10 parties d'agent de réticulation,

dans lequel les parties sont en masse, et la somme de (a)+(b)+(c)+(d) est égale à 100 parties en masse ou moins, sur la base de 100 parties en masse de poids total de la dispersion de pigment.

**14.** Procédé selon la revendication 13, dans lequel la réaction de réticulation est réalisée à 100 °C ou moins, et avec un pH de 6 ou plus.

**15.** Procédé selon la revendication 13, comprenant en outre une purification par membrane.

**16.** Encre pour enregistrement par jet d'encre, comprenant la dispersion de pigment à base d'eau selon l'une quelconque des revendications 1 à 12.

# FIG. 1

CuKα CHARACTERISTIC X-RAY DIFFRACTION OF AZO PIGMENT (1)-1

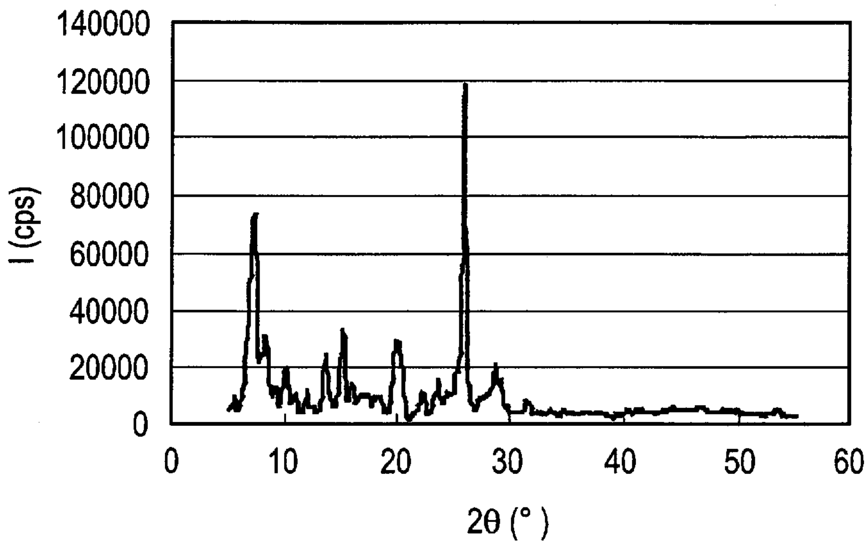


# FIG. 2

CuKα CHARACTERISTIC X-RAY DIFFRACTION OF AZO PIGMENT (1)-2

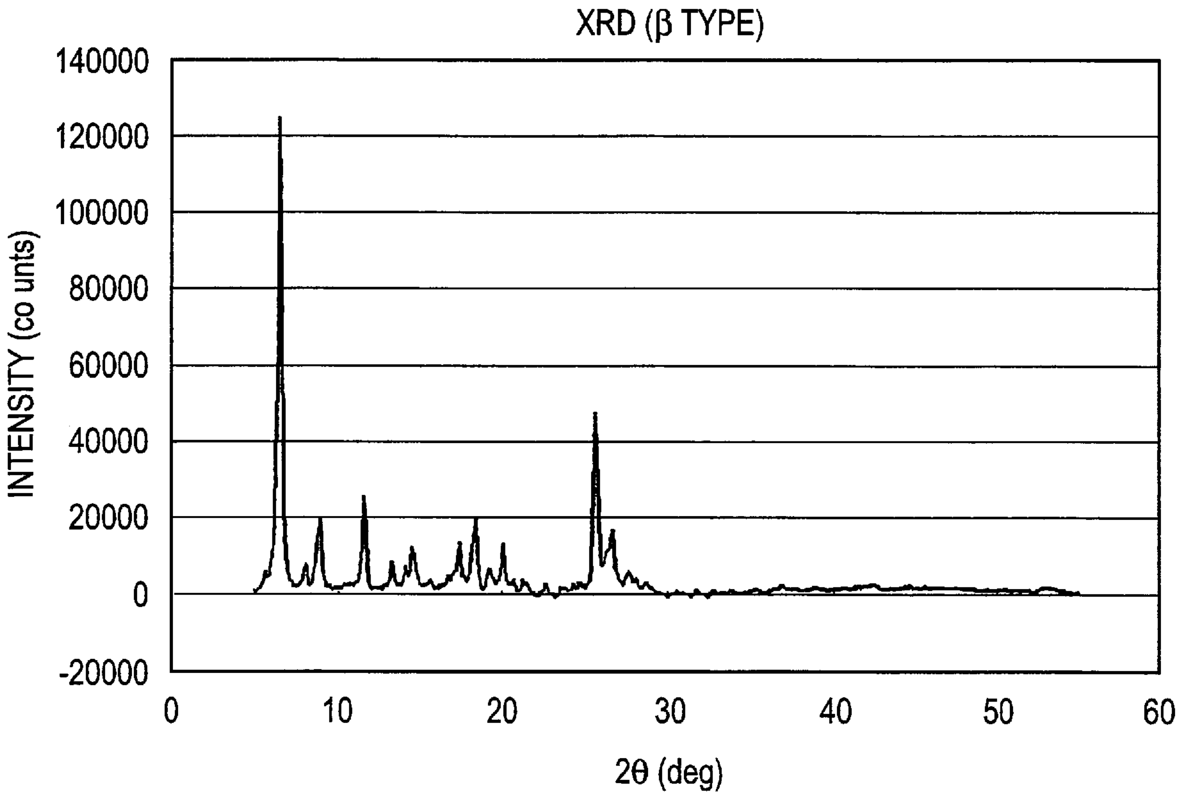

FIG. 3

CuKα CHARACTERISTIC X-RAY DIFFRACTION OF AZO PIGMENT (1)-3

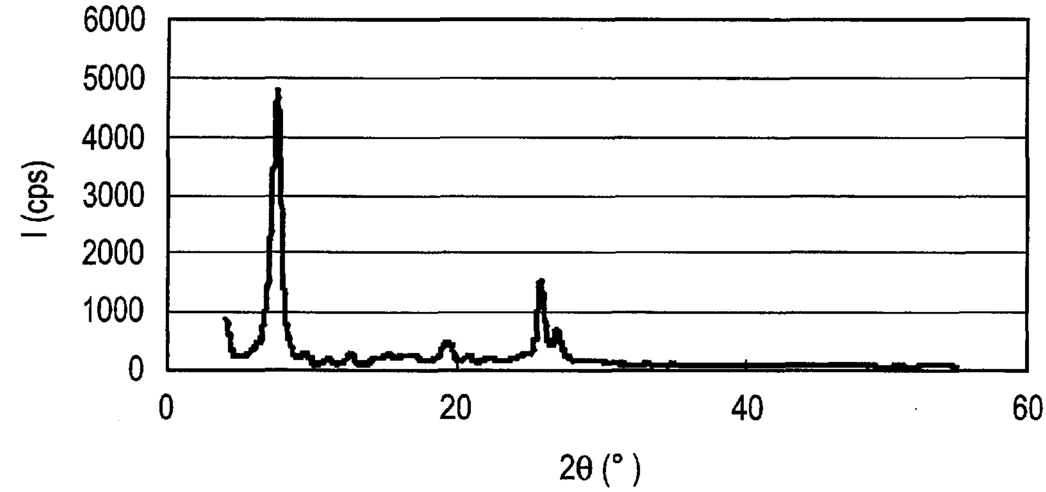


FIG. 4

CuKα CHARACTERISTIC X-RAY DIFFRACTION OF AZO PIGMENT (1)-4

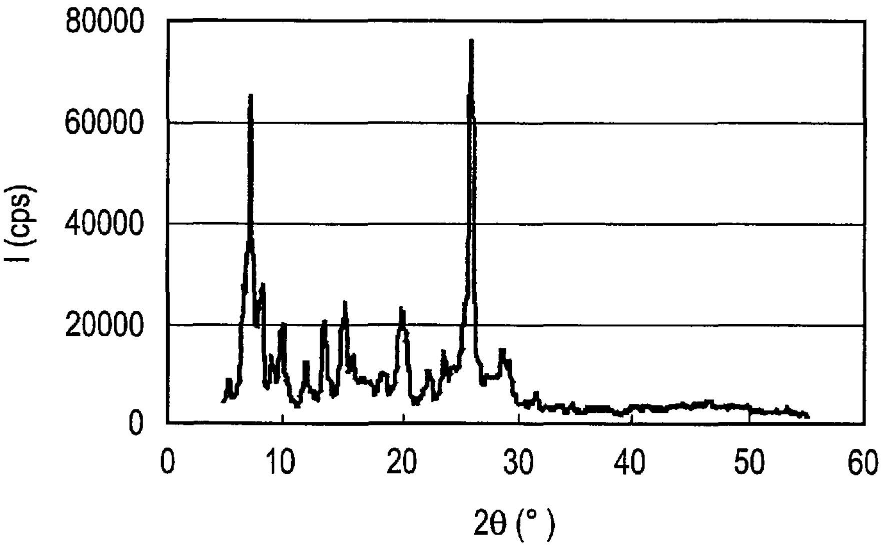

*FIG. 5*

CuKα CHARACTERISTIC X-RAY DIFFRACTION OF NON-CRYSTALLINE AZO PIGMENT (2)-10

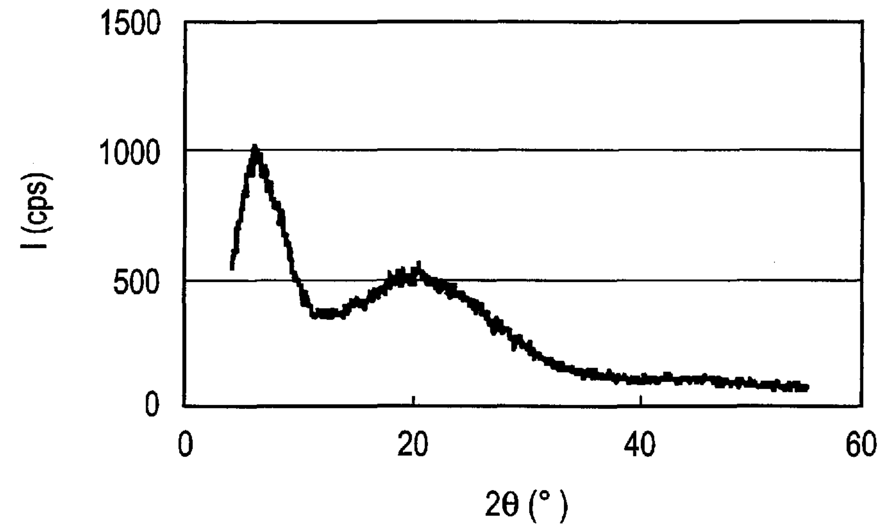


*FIG. 6*

CuKα CHARACTERISTIC X-RAY DIFFRACTION OF AZO PIGMENT (2)-1

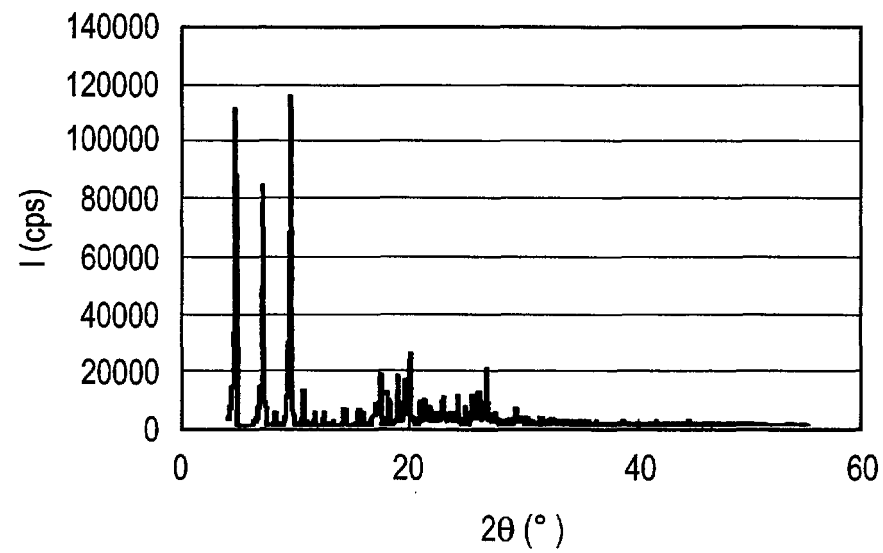

*FIG. 7*

CuKα CHARACTERISTIC X-RAY DIFFRACTION OF AZO PIGMENT (2)-2

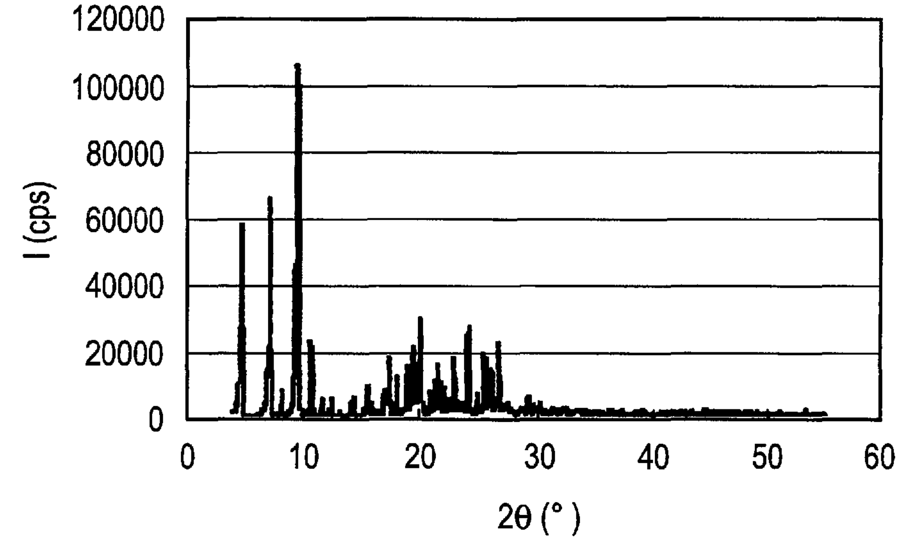


*FIG. 8*

AZO PIGMENT (2)-7 IN (2)-α TYPE CRYSTAL FORM

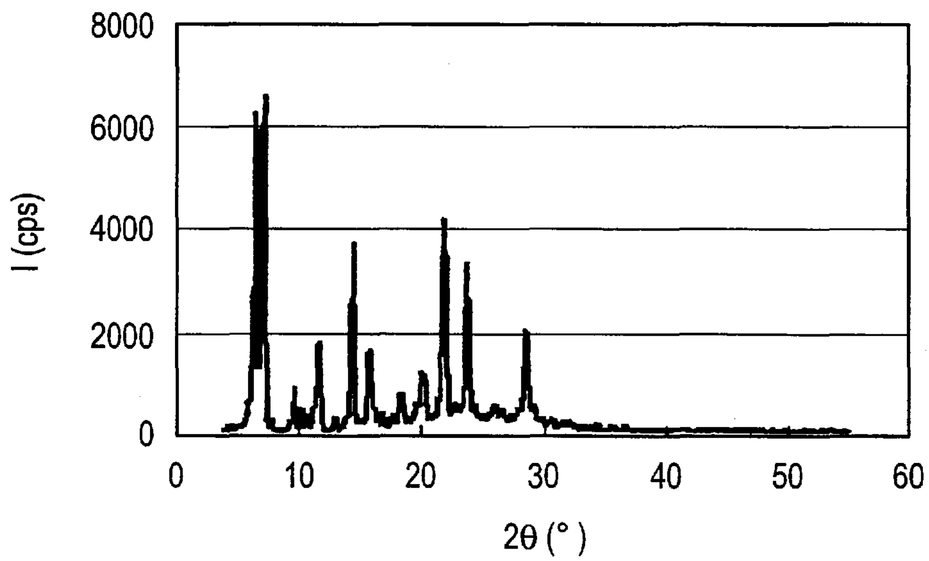

## FIG. 9

CuKα CHARACTERISTIC X-RAY DIFFRACTION OF
AZO PIGMENT (2)-8 IN (2)-β TYPE CRYSTAL FORM

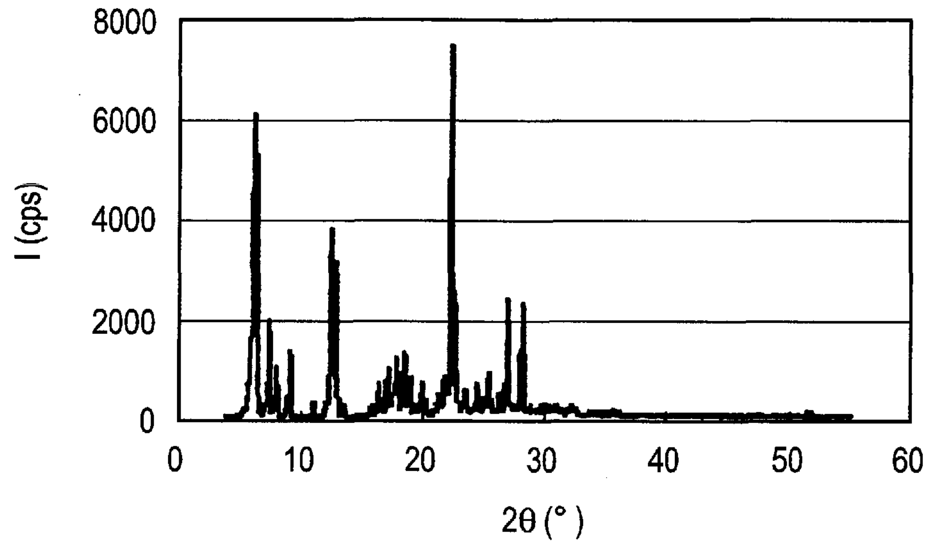


## FIG. 10

CuKα CHARACTERISTIC X-RAY DIFFRACTION OF
AZO PIGMENT (2)-9 IN (2)-γ TYPE CRYSTAL FORM

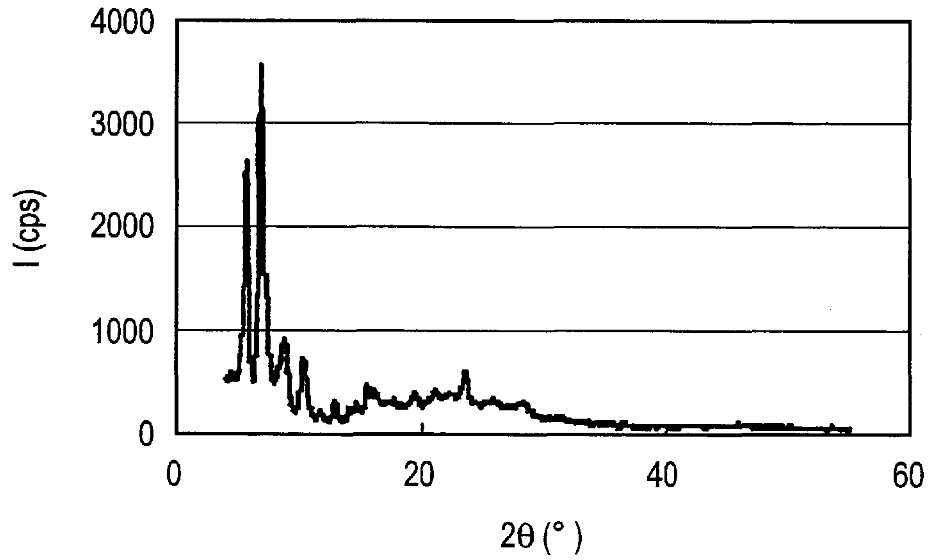

# FIG. 11

CuKα CHARACTERISTIC X-RAY DIFFRACTION OF AZO PIGMENT (2)-10 IN (2)-ε TYPE CRYSTAL FORM

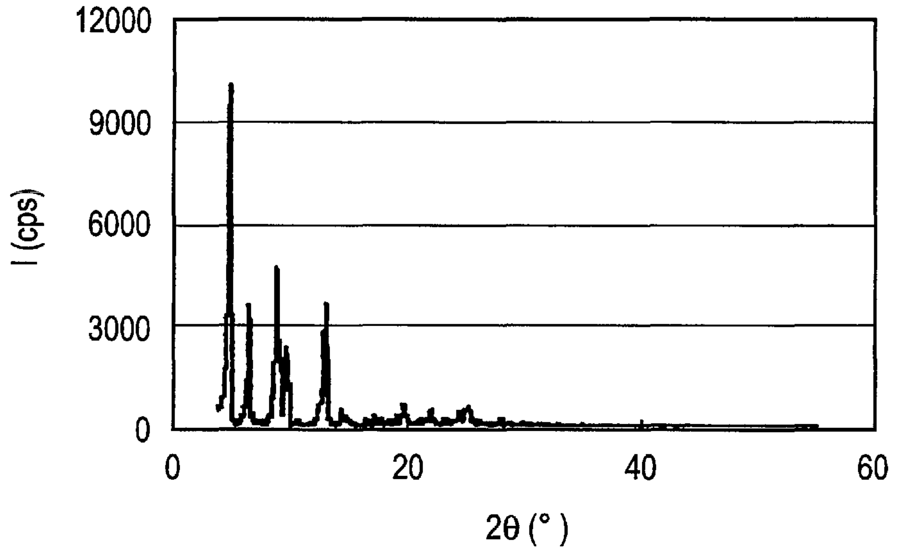


# FIG. 12

CuKα CHARACTERISTIC X-RAY DIFFRACTION OF AZO PIGMENT (2)-11 IN (2)-ξ TYPE CRYSTAL FORM

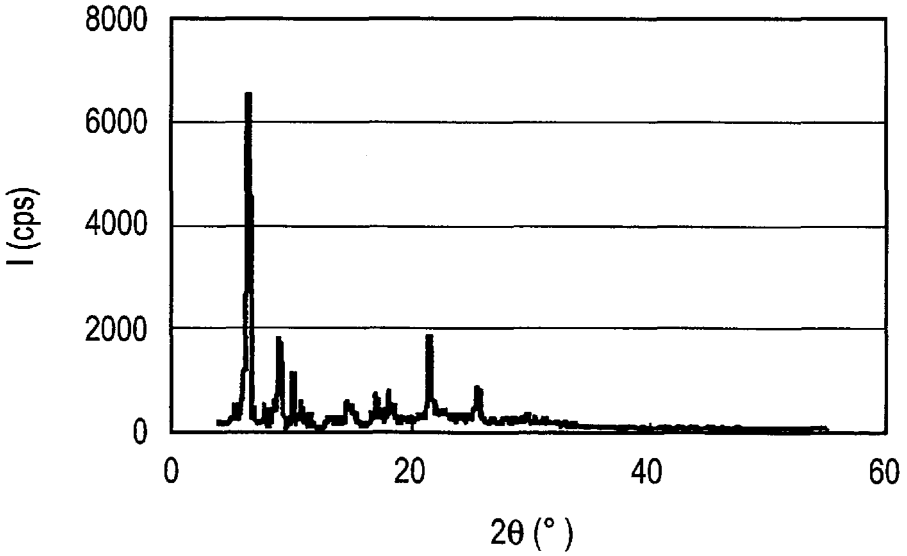

*FIG. 13*

CuKα CHARACTERISTIC X-RAY DIFFRACTION OF AZO PIGMENT (2)-12 IN (2)-η TYPE CRYSTAL FORM

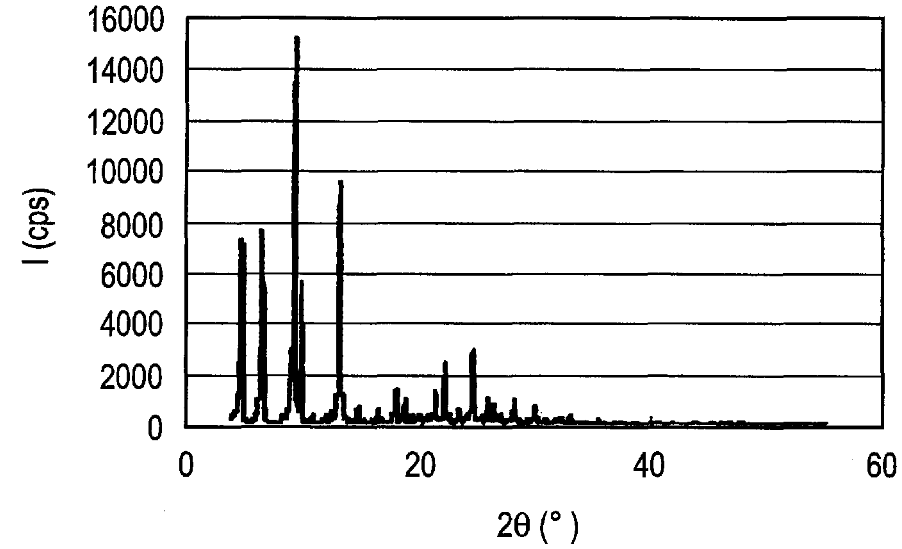


*FIG. 14*

CuKα CHARACTERISTIC X-RAY DIFFRACTION OF AZO PIGMENT (2)-13 IN (2)-δ TYPE CRYSTAL FORM

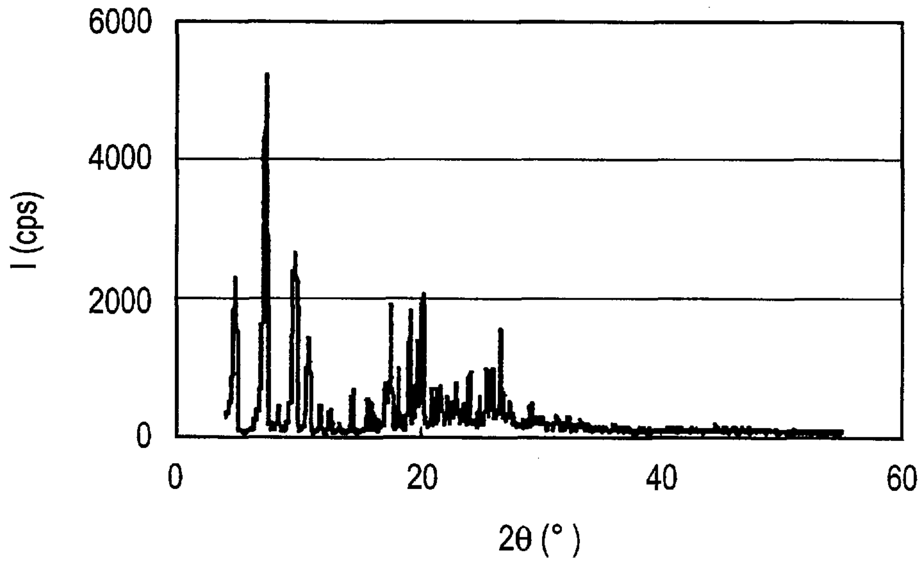

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 06064193 A
- JP H9104834 B
- JP H11152424 B
- EP 732381 A
- WO 00020520 A
- JP 2006265185 A
- JP 2003306623 A
- JP 2010159405 A
- JP 2010138232 A
- JP 2011127042 A